# EUROPÄISCHE PATENTSCHRIFT

(11) **EP 3 221 727 B1**
(45) Veröffentlichungstag und Bekanntmachung des Hinweises auf die Patenterteilung: **17.03.2021**
(21) Anmeldenummer: 15813274.6
(22) Anmeldetag: 19.11.2015
(51) Int. Cl.: G02B 5/00, B23K 26/00, B23K 26/06, G02B 27/09

(54) **SYSTEM ZUR ASYMMETRISCHEN OPTISCHEN STRAHLFORMUNG**
SYSTEM FOR ASYMMETRIC OPTICAL BEAM SHAPING
SYSTÈME DE FORMAGE PAR FAISCEAU OPTIQUE ASYMÉTRIQUE

(30) Priorität: 19.11.2014 DE 102014116957; 19.11.2014 DE 102014116958
(43) Veröffentlichungstag der Anmeldung: 27.09.2017
(60) Teilanmeldung: 21155453.0
(73) Patentinhaber: Trumpf Laser- und Systemtechnik GmbH, 71254 Ditzingen (DE)
(72) Erfinder: KUMKAR, Malte, 99425 Weimar (DE); KLEINER, Jonas, 70469 Stuttgart (DE); GROSSMANN, Daniel, 73079 Süßen (DE); FLAMM, Daniel, 70469 Stuttgart (DE); KAISER, Myriam, 71254 Ditzingen (DE)
(74) Vertreter: Grättinger Möhring von Poschinger Patentanwälte Partnerschaft mbB
(86) Internationale Anmeldenummer: PCT/EP2015/077172
(87) Internationale Veröffentlichungsnummer: WO 2016/079275

(56) Entgegenhaltungen:
- EP-A1- 2 754 524
- WO-A1-2012/041711
- WO-A1-2013/138802
- US-A1- 2003 102 291

## Beschreibung

Die vorliegende Erfindung betrifft diffraktive optische Elemente, die in optischen Systemen zur Strahlformung eines Laserstrahls und insbesondere zur Strahlformung eines Laserstrahls für die Bearbeitung von für den Laserstrahl weitgehend transparenten Materialien, eingesetzt werden. Ferner betrifft die Erfindung ein System und ein Verfahren zur Lasermaterialbearbeitung.

Die Möglichkeiten der Nutzung der Absorption von Licht zur Bearbeitung eines Werkstücks, insbesondere durch das Einbringen von lokalisierten Modifikationen in das Werkstück, sind vielfältig. So eröffnet eine sogenannte Volumenabsorption, d.h. eine nicht auf die Oberfläche beschränkte Absorption, die Möglichkeit, für den Laserstrahl weitgehend transparente, sprödharte Materialien zu bearbeiten. Allgemein wird eine Volumenabsorption durch eine Art nichtlinearer Absorption begünstigt, bei der erst bei einer materialabhängigen (Schwellen-) Intensität eine Wechselwirkung mit dem Material stattfindet.

Unter nichtlineare Absorption wird hierin eine intensitätsabhängige Absorption von Licht verstanden, die primär nicht auf der direkten Absorption des Lichts basiert. Stattdessen basiert sie auf einer Steigerung der Absorption während der Wechselwirkung mit dem einfallenden Licht, meist ein zeitlich begrenzter Laserpuls. Dabei können Elektronen durch inverse Bremsstrahlung so viel Energie aufnehmen, dass durch Stöße weitere Elektronen freigesetzt werden, so dass die Rate der Elektronenerzeugung die der Rekombination übersteigt. Unter gewissen Bedingungen können die für die lawinenartige Absorption erforderlichen Startelektronen bereits zu Beginn vorliegen oder durch eine vorhandene Restabsorption mittels linearer Absorption generiert werden. Beispielsweise kann bei ns-Laserpulsen eine Anfangsionisation zu einer Temperaturerhöhung führen, durch die die Zahl der freien Elektronen und damit die nachfolgende Absorption ansteigen. Unter anderen Bedingungen können derartige Startelektronen durch Mehrphotonen- oder Tunnelionisation als Beispiele für bekannte nichtlineare Absorptionsmechanismen generiert werden. Bei ultrakurzen Laserpulsen mit beispielsweise sub-ns-Pulsdauern kann so eine lawinenartige Erzeugung von Elektronen genutzt werden.

Eine Volumenabsorption kann bei für den Laserstrahl weitgehend transparenten Materialen (hierin kurz als transparente Materialien bezeichnet) zur Ausbildung einer Modifikation des Materials in einer langgezogenen Fokuszone eingesetzt werden. Derartige Modifikationen können ein Trennen, Bohren oder Strukturieren des Materials ermöglichen. Zum Trennen können beispielsweise Reihen von Modifikationen erzeugt werden, die ein Brechen innerhalb oder entlang der Modifikationen auslösen. Siehe z. B. EP 2 754 524 A1. Ferner ist es bekannt, zum Trennen, Bohren und Strukturieren Modifikationen zu generieren, die ein selektives Ätzen der modifizierten Bereiche ermöglichen (SLE: selective laser etching).

Die Erzeugung einer langgezogenen Fokuszone kann mithilfe von apodisierten Bessel-Strahlen (hierin auch als Quasi-Bessel-Strahl bezeichnet) erfolgen. Derartige Strahlprofile können z.B. mit einem Axicon oder einem räumlichen Lichtmodulator (SLM: spatial light modulator) und einem einfallenden Laserstrahl mit einem Gaußschen Strahlprofil geformt werden. Eine anschließende Abbildung in ein transparentes Werkstück führt zu den für die Volumenabsorption erforderlichen Intensitäten. Quasi-Bessel-Strahlen weisen - wie Bessel-Strahlen - üblicherweise eine ringförmige Intensitätsverteilung im Fernfeld des im Werkstück vorliegenden Strahlprofils auf. Die Berechnung von Phasenverläufen zur Strahlformung von Quasi-Bessel-Strahlen z.B. mit einem SLM ist in Leach et al., "Generation of achromatic Bessel beams u-sing a compensated spatial light modulator," Opt. Express 14, 5581-5587 (2006) beschrieben.

Im Unterschied zu durch Strahlformung erzeugten langgezogenen Fokuszonen wird beispielsweise in WO 2013/138802 A1 die Ausbildung einer kanalförmigen Beschädigung der Kristallstruktur eines Materials durch Selbstfokussierungseffekte im Material offenbart.

Ferner sind Anordnungen zur Ausbildung einer Aufreihung von Intensitätsüberhöhungen z.B. mithilfe von Multifokallinsen bekannt. Dabei erfolgt im Fernfeld, d.h. bei der Fokussierung, eine Phasenbeeinflussung des zu fokussierenden Laserstrahls, welche die Ausbildung longitudinal versetzter Fokuszonen zur Folge hat.

Einem Aspekt dieser Offenbarung liegt die Aufgabe zugrunde, die Lasermaterialbearbeitung mit langgezogenen Fokuszonen, wie sie z.B. mit einem diffraktiven optischen Strahlformungselement erzeugt werden können, hinsichtlich der Bearbeitungsqualität zu verbessern. Insbesondere liegt die Aufgabe zugrunde, für die Bearbeitung transparenter Werkstoffe in Strahlausbreitungsrichtung langgezogene, schlanke Strahlprofile mit hohem Aspektverhältnis für Laserbearbeitungsanwendungen derart bereitzustellen, dass ein Trennungs- oder Schneidvorgang mit erhöhter Schnittkantenpräzision durchgeführt werden kann.

Zumindest eine dieser Aufgaben wird gelöst durch die Verfahren, die optischen Systeme und die Laserbearbeitungsanlage der unabhängigen Ansprüche. Weiterbildungen sind in den Unteransprüchen angegeben.

In einem Aspekt werden zur Materialbearbeitung eines insbesondere für einen Laserstrahl weitgehend transparenten Materials transversal zur Propagationsrichtung des Laserstrahls asymmetrisch ausgebildeten Modifikationen erzeugt. Dabei wird der Laserstrahl zum Ausbilden einer in Propagationsrichtung langgezogenen Fokuszone in dem Material geformt, wobei die Fokuszone derart ausgebildet wird, dass sie mindestens zwei transversal in einer Abflachungsrichtung abgeflachte Intensitätsmaxima oder eine transversale Aufreihung von asymmetrischen Intensitätsmaxima, die in einer Aufreihungsrichtung abgeflacht sind, aufweist. Nach dem Positionieren der Fokuszone im Material wird eine Modifikation erzeugt, und das Material und die Fokuszone werden in der oder quer zur Abflachungsrichtung beziehungsweise in der oder quer zur Aufreihungsrichtung relativ zueinander zur Ausbildung eines Risses entlang einer induzierten Vorzugsrichtung bewegt.

In Weiterbildungen wird ein diffraktives optisches Strahlformungselement zur Aufprägung eines Phasenverlaufs auf einen zur Laserbearbeitung eines Materials vorgesehenen Laserstrahl verwendet, das eine (flächig ausgebildete) Phasenmaske aufweist, die zur Aufprägung einer oder mehrerer strahlformenden Phasenverläufen auf den auf die Phasenmaske fallenden Laserstrahl ausgebildet ist. Mindestens einem strahlformenden Phasenverläufe ist ein virtuelles oder reales optisches Bild zugeordnet, das in eine langgezogene Fokuszone zum Ausbilden einer Modifikation im zu bearbeitenden Material (9) abbildbar ist.

In einem weiteren Aspekt weist ein Verfahren zur Rissführung bei der Laserbearbeitung für die Bearbeitung eines insbesondere für einen gepulsten Laserstrahl weitgehend transparenten Materials zur Trennung oder Trennungsvorbereitung des Materials die folgenden Schritte auf: Erzeugen von Modifikationen in dem Material durch Fokussieren des Laserstrahls in eine asymmetrischen Fokuszone des gepulsten Laserstrahls, wobei aufeinander folgende Modifikationen entlang einer Relativbewegungsrichtung zwischen Laserstrahlpropagationsrichtung und Material zueinander versetzt sind und jede der Modifikationen eine Vorzugsrichtung in der Rissbildung aufweist, und die Relativbewegungsrichtung und die Vorzugsrichtung aneinander angepasst sind.

In einem weiteren Aspekt weist ein optisches System zur Strahlformung eines Laserstrahls für die Bearbeitung eines insbesondere für den Laserstrahl weitgehend transparenten Materials durch Modifizieren des Materials in einer in Propagationsrichtung und einer weiteren Richtung transversal zur Propagationsrichtung langgezogenen Fokuszone ein die Fokuszone in Propagationsrichtung formendes optisches Element auf, wobei das die Fokuszone in Propagationsrichtung formende optische Element die Fokuszone auch in einer weiteren Richtung transversal zur Propagationsrichtung verformt oder wobei strahlabwärts des die Fokuszone in Propagationsrichtung formenden optischen Elements ein weiteres die Fokuszone in der weiteren Richtung transversal zur Propagationsrichtung formendes optisches Element angeordnet ist, sodass die Fokuszone mindestens zwei transversal in einer Abflachungsrichtung abgeflachte Intensitätsmaxima oder eine transversale Aufreihung von asymmetrischen Intensitätsmaxima, die in einer Aufreihungsrichtung abgeflacht sind, umfasst.

In einem weiteren Aspekt weist ein optisches System zur Strahlformung eines Laserstrahls für die Bearbeitung eines insbesondere für den Laserstrahl weitgehend transparenten Materials durch Modifizieren des Materials in einer gemeinsamen in Propagationsrichtung langgezogenen Fokuszone auf: ein diffraktives optisches Strahlformungselement zur Aufprägung eines oder mehrerer Phasenverläufe auf den Laserstrahl, das um eine Strahlachse des einfallenden Laserstrahls drehbar angeordnet ist, und eine Nahfeldoptik, die strahlabwärts mit einem Strahlformungsabstand zum diffraktiven optischen Strahlformungselement angeordnet ist und die dazu ausgebildet ist, den Laserstrahl in die Fokuszone zu fokussieren, wobei mindestens ein aufgeprägter Phasenverlauf derart ist, dass dem Laserstrahl ein virtuelles, vor dem diffraktiven optischen Strahlformungselement liegendes optisches Bild einer langgezogenen Fokuszone zugeordnet ist oder ein reales, nach dem diffraktiven optischen Strahlformungselement liegendes optisches Bild einer langgezogenen Fokuszone zugeordnet ist, und der Strahlformungsabstand einer Propagationslänge des Laserstrahls entspricht, in der die Mehrzahl von strahlformenden Phasenverläufen das transversale Eingangsintensitätsprofil in ein transversales Ausgangsintensitätsprofil im Bereich der Nahfeldoptik überführen, und insbesondere das transversale Ausgangsintensitätsprofil im Vergleich mit dem Eingangsintensitätsprofil mindestens ein außerhalb einer Strahlachse liegendes lokales Maximum aufweist.

Hierin werden Konzepte offenbart, dies es erlauben, zumindest teilweise Aspekte aus dem Stand der Technik zu verbessern. Insbesondere ergeben sich weitere Merkmale und deren Zweckmäßigkeiten aus der folgenden Beschreibung von Ausführungsformen anhand der Figuren. Von den Figuren zeigen:
- Fig. 1: eine schematische Darstellung eines optischen Systems zur Strahlformung eines Laserstrahls,
- Fig. 2: eine schematische Darstellung einer Laserbearbeitungsvorrichtung mit einem optischen System gemäß Fig. 1 für die Materialbearbeitung,
- Fig. 3: eine schematische Darstellung eines optischen Systems zur Erläuterung der optischen Funktionsweise,
- Fig. 4: ein Beispiel einer longitudinalen Intensitätsverteilung in einer langgezogenen Fokuszone nach Abbildung eines virtuellen optischen Bildes,
- Fig. 5: einen ZR-Schnitt der in Fig. 4 gezeigten longitudinalen Intensitätsverteilung,
- Fig. 6: eine beispielhafte experimentelle Studie zur Modifikation eines transparenten Materials in einer langgezogenen Fokuszone gemäß den Figuren 4 und 5,
- Fig. 7: eine schematische Darstellung zur Erläuterung der Erzeugung und Abbildung einer realen Intensitätsüberhöhung,
- Fig. 8: ein Beispiel einer longitudinalen Intensitätsverteilung in einer langgezogenen Fokuszone nach Abbildung einer realen Intensitätsüberhöhung gemäß Fig. 7,
- Fig. 9 bis Fig. 11: schematische Darstellungen von Beispielen für auf transmittiven oder reflektiven Axicons basierenden optischen Systemen,
- Fig. 12: eine schematische Darstellung eines Beispiels eines auf einem räumlichen Lichtmodulator basierenden optischen Systems,
- Fig. 13: eine schematische Darstellung eines Beispiels eines auf einem transmittiven diffraktiven optischen Element basierenden optischen Systems,
- Fig. 14: eine schematische Darstellung eines Beispiels eines Phasenverlaufs in einem diffraktiven optischen Element in einem optischen System gemäß Fig. 13,
- Fig. 15: einen beispielhaften Intensitätsquerschnitt eines Ausgangsintensitätsprofils in einem optischen System gemäß Fig. 13,
- Fig. 16: eine XY-Aufsicht des Ausgangsintensitätsprofils des in Fig. 15 gezeigten Intensitätsquerschnitts,
- Fig. 17: eine schematische Darstellung eines Beispiels eines optischen Systems mit Filterung nicht-phasenmodulierter Strahlanteile,
- Fig. 18: eine schematische Darstellung eines Beispiels eines auf einem diffraktiven optischen Element basierenden optischen Systems mit einem linearen Phasenbeitrag zur Separierung eines phasenmodulierten Strahlanteils,
- Fig. 19: eine schematische Darstellung eines Beispiels eines optischen Systems mit einer Scan-Vorrichtung,
- Fig. 20: eine schematische Darstellung zur Erläuterung des Abbildungssystems eines optischen Systems,
- Fig. 21A bis Fig. 21C: schematische Darstellungen zur Erläuterung möglicher Ursachen einer Rissbildung,
- Fig. 22A bis Fig. 23D: schematische Darstellungen zur asymmetrischen Strahlformung durch eEinführen einer Strahlblende,
- Fig. 24A und Fig. 24B: XY- und ZY-Schnitte zur Verdeutlichung eines asymmetrischen Arrays von Intensitätsmaxima,
- Fig. 25A und Fig. 25B: schematische Darstellungen von Beispielen eines Phasenverlaufs in einem diffraktiven optischen Element zur asymmetrischen Strahlformung,
- Fig. 26: einen azimutal segmentierten Phasenverlauf,
- Fig. 27: einen beispielhaften Intensitätsquerschnitt bei einer Phasenaufprägung gemäß Fig. 26,
- Fig. 28: eine XY-Aufsicht des Ausgangsintensitätsprofils des in Fig. 27 gezeigten Intensitätsquerschnitts,
- Fig. 29: einen ZX-Schnitt einer langgezogenen Fokuszone bei einer Phasenaufprägung gemäß Fig. 26,
- Fig. 30: einen ZY-Schnitt einer langgezogenen Fokuszone bei einer Phasenaufprägung gemäß Fig. 26,
- Fig. 31: einen Phasenverlauf zur Erzeugung zweier transversal versetzter inverser Quasi-Bessel-Strahlprofile,
- Fig. 48: einen Amplitudenverlauf für einen Schnitt entlang der Strahlachse Z bei der Propagation vom Strahlformungselement zur Nahfeldoptik bei einer Phasenaufprägung gemäß Fig. 31,

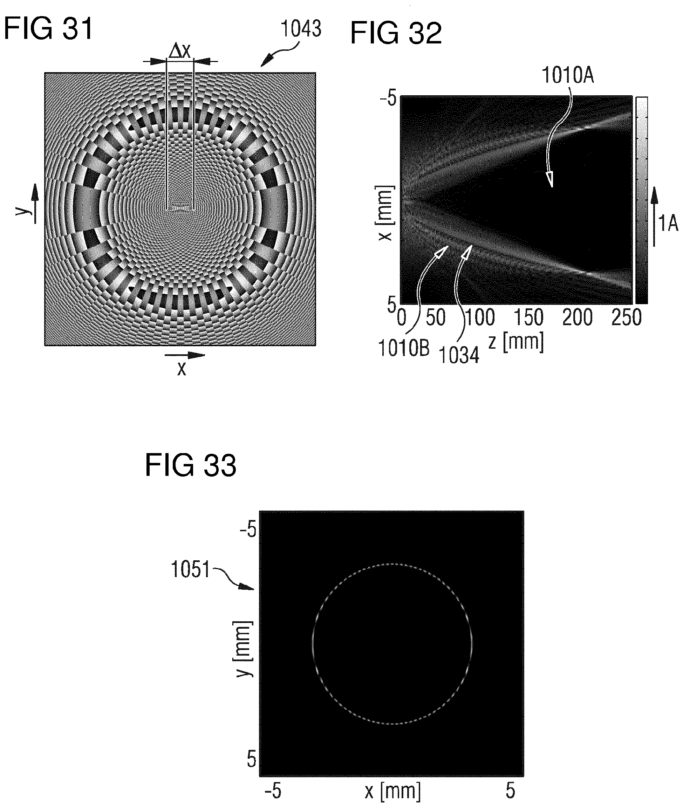

- Fig. 33: eine XY-Aufsicht des Ausgangsintensitätsprofils bei einer Phasenaufprägung gemäß Fig. 31,

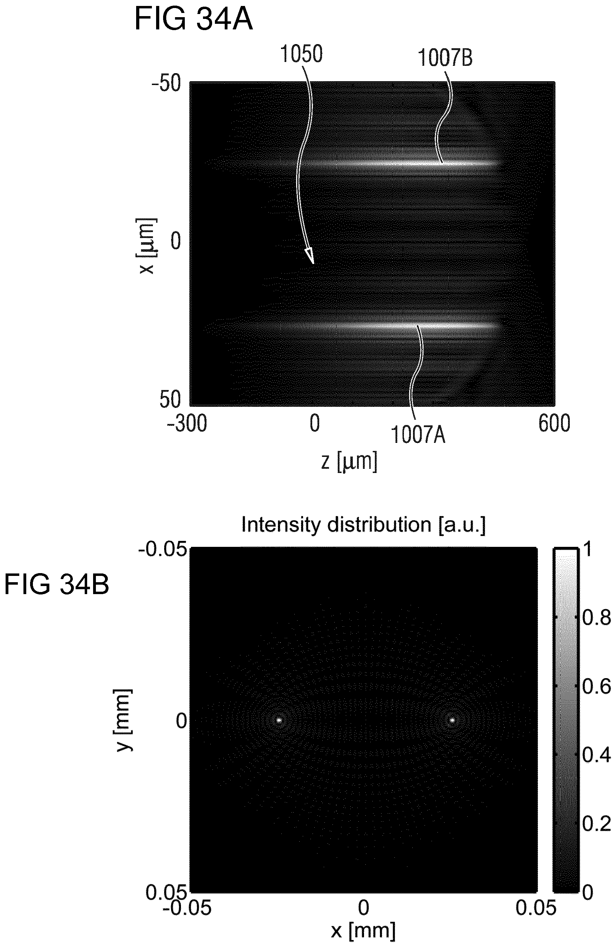

- Fig. 34A und Fig. 34B: ZX- und XY-Schnitte einer langgezogenen Fokuszone bei einer Phasenaufprägung gemäß Fig. 31,

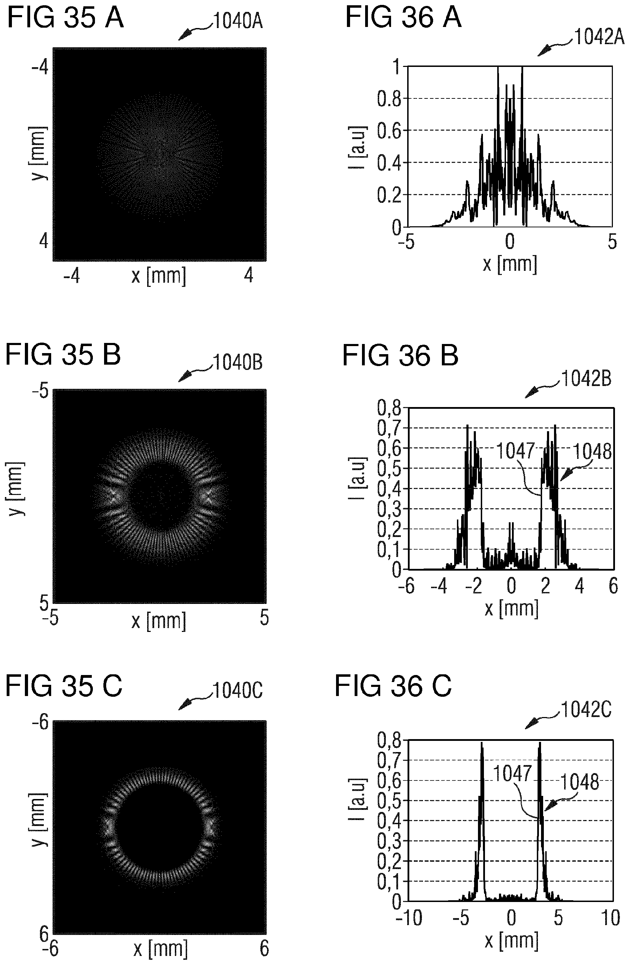

- Fig. 35A bis Fig. 35C: Strahlprofile bei z = 10 mm, z = 100 mm und z = 150 mm bei einer Phasenaufprägung gemäß Fig. 31 und
- Fig. 36A bis Fig. 36C: transversale Amplitudenverläufe in X-Richtung bei z = 10 mm, z = 100 mm und z = 150 mm bei einer Phasenaufprägung gemäß Fig. 31.

Hierin beschriebene Aspekte basieren zum Teil auf der Erkenntnis, dass aufgrund der bei der Laserbearbeitung benötigten hohen Intensitäten schon während der Aufbereitung des Laserstrahls Intensitäten vorliegen können, die zur Beschädigung von optischen Elementen führen. Mit Blick darauf wurde ferner erkannt, dass die Erzeugung einer langgezogenen Fokuszone im Werkstück auf der Abbildung eines virtuellen Strahlprofils basieren kann. Durch dieses Konzept der Abbildung eines virtuellen Strahlprofils können im optischen System Bereiche mit Intensitätsspitzen reduziert oder sogar vermieden werden. Es wurde ferner erkannt, dass einem Laserstrahl ein dem virtuellen Strahlprofil zugeordneter Phasenverlauf aufgeprägt werden kann, welcher die gewünschte Änderung der Intensitätsverteilung im Fernfeld bewirkt. Insbesondere wurde erkannt, dass durch eine Fernfeldverteilung, die auf ein derartiges virtuelles Strahlprofil zurückgeht, beispielsweise inverse Quasi-Bessel-Strahl-artige oder inverse Quasi-Airy-Strahl-artige Intensitätsverläufe, speziell ausgelegte Intensitätsverläufe und insbesondere Überlagerungen derselben in der Fokuszone erzeugt werden können. Bei derartigen Intensitätsverläufen kann ein lateraler Energieeintrag in die Fokuszone stattfinden, was insbesondere ein Bearbeiten transparenter Materialen erlaubt. Es wurde ferner erkannt, dass im Vergleich mit Systemen zur Abbildung einer reellen Intensitätsüberhöhung das Konzept der Abbildung eines virtuellen Strahlprofils zu kürzeren Bauformen von derartigen optischen Systemen führen kann.

Eine langgezogene Fokuszone bezieht sich hier auf eine durch das optische System bestimmte dreidimensionale Intensitätsverteilung, die in dem zu bearbeitenden Material das räumliche Ausmaß der Wechselwirkung und damit der Modifikation bestimmt. Die langgezogene Fokuszone bestimmt somit einen langgezogenen Bereich, in dem im zu bearbeitenden Material eine Fluenz/Intensität vorliegt, welche über der für die Bearbeitung/Modifikation relevanten Schwellenfluenz/-intensität liegt. Üblicherweise spricht man von langgezogenen Fokuszonen, wenn die dreidimensionale Intensitätsverteilung hinsichtlich einer Zielschwellenintensität durch ein Aspektverhältnis (Ausdehnung in Ausbreitungsrichtung im Verhältnis zur lateralen Ausdehnung) von mindestens 10:1, beispielsweise 20:1 und mehr oder 30:1 und mehr, gekennzeichnet ist. Eine derartige langgezogene Fokuszone kann zu einer Modifikation des Materials mit einem ähnlichen Aspektverhältnis führen. In einigen Ausführungsformen können sich z.B. auch in Ausbreitungsrichtung parallel zu einander verlaufende Fokuszonen ausbilden, von denen jede ein entsprechendes Aspektverhältnis aufweist. Allgemein kann bei derartigen Aspektverhältnissen eine maximale Änderung der lateralen Ausdehnung der (wirksamen) Intensitätsverteilung über die Fokuszone im Bereich von 50 % und weniger, beispielsweise 20 % und weniger, beispielsweise im Bereich von 10 % und weniger, liegen.

Dabei kann in einer langgezogenen Fokuszone die Energie im Wesentlichen über die gesamte Länge der hervorgerufenen Modifikation lateral zugeführt werden. Dies hat zur Folge, dass eine Modifikation des Materials im Anfangsbereich der Modifikationszone nicht oder zumindest kaum Abschirmeffekte auf den Teil des Laserstrahls aufweist, welcher eine Modifikation des Materials strahlabwärts, d.h. z.B. im Endbereich der Modifikationszone, bewirkt. In diesem Sinne kann ein Gaußscher Strahl keinen vergleichbaren langgezogenen Fokus erzeugen, da die Energiezufuhr im Wesentlichen longitudinal und nicht lateral erfolgt.

Die Transparenz eines für den Laserstrahl weitgehend transparenten Materials bezieht sich hierin auf die lineare Absorption. Für Licht unterhalb der Schwellenfluenz/-intensität kann ein für den Laserstrahl weitgehend transparentes Material beispielsweise auf einer Länge bis zum hinteren Ende der Modifikation z.B. weniger als 20 % oder sogar weniger als 10 % des einfallenden Lichts absorbieren.

Hierin beschriebene Aspekte basieren zum Teil ferner auf der Erkenntnis, dass durch eine gezielte Strahlformung, beispielsweise mit einem diffraktiven optischen Element (DOE), die im Material durch nichtlineare Absorption entstehende Dichte freier Elektronen maßgeschneidert werden kann. Entlang der dadurch entstehenden Modifikationen kann eine Rissbildung gezielt geführt werden, welche dann zum Trennen des Werkstücks führt.

Hierin beschriebene Aspekte basieren zum Teil ferner auf der Erkenntnis, dass für ein DOE im Phasenverlauf einer Phasenmaske mehrere Phasenverläufe, beispielsweise in entsprechenden Segmenten, vorgesehen werden können. Dadurch können insbesondere die Vorteile des Konzepts eines virtuellen optischen Bildes, beispielsweise einer inversen Quasi-Bessel-Strahl-förmigen Strahlform, bei der Überlagerung der Abbildungen mehrerer derartiger virtueller Bilder (in longitudinaler oder lateraler Richtung) genutzt werden, wodurch auch die Wechselwirkung (z.B. Interferenz) und räumliche Konstellation mehrerer Abbildungen Auswirkung auf die Ausformung der gemeinsamen Fokuszone haben kann. Ferner wurde erkannt, dass sich dadurch asymmetrische "gemeinsame" Fokuszonen erzeugen lassen, die beispielsweise bei der Materialbearbeitung einen Vorzug für eine bestimmte Vorschubrichtung oder eine bestimmte Trennrichtung ergeben. Überdies wurde erkannt, dass sich derartige Vorzugsrichtung durch Ausrichten/Drehen des DOE innerhalb eines optischen Systems während der Laserbearbeitung an gewünschte Bearbeitungstrajektorien anpassen lassen. Für digitale Phasenmasken (SLMs etc...) kann ferner eine direkte Ansteuerung des Phasenverlaufs vorgenommen werden, um die Vorzugsrichtung nachzuführen.

Hierin beschriebene Aspekte basieren zum Teil ferner auf der Erkenntnis, dass durch den Einsatz eines DOE zusätzliche Phasenverläufe auf den Strahl aufgeprägt werden können, die beispielsweise den Aufbau eines zugrunde liegenden optischen Systems und/oder die Isolation eines Nutzstrahlanteils vereinfachen.

In anderen Worten werden Nachteile des Standes der Technik in einigen Ausführungsformen durch ein Optikkonzept zumindest teilweise aufgehoben, bei dem das im Bereich des Werkstücks gelegene, in Ausbreitungsrichtung langgezogene Strahlprofil durch eine Abbildung eines erzeugten virtuellen Strahlprofils erfolgt. In einigen Ausführungsformen erlaubt das Optikkonzept ferner sowohl eine Filtermöglichkeit für unerwünschte Strahlanteile beispielsweise in der Region der Fourier-Ebene des Strahlprofils als auch eine Separierung der Strahlformung von der Fokussierung.

Die sich aus diesen Erkenntnissen ergebenden Systeme und Verfahren können unter anderem ein Trennen von transparenten, sprödharten Materialien mit hoher Geschwindigkeit und bei guter Qualität der Schnittkante ermöglichen. Ferner können derartige Systeme und Verfahren eine Trennung ohne einen wie bei abtragenden Verfahren entstehenden Taperwinkel erlauben. Insbesondere beim Trennen basierend auf nicht abtragenden Modifikationen kann sich auch kein oder nur ein geringer Abtrag ergeben, mit der Konsequenz, dass das Material nach der Bearbeitung nur wenig Partikel auf der Oberfläche aufweist.

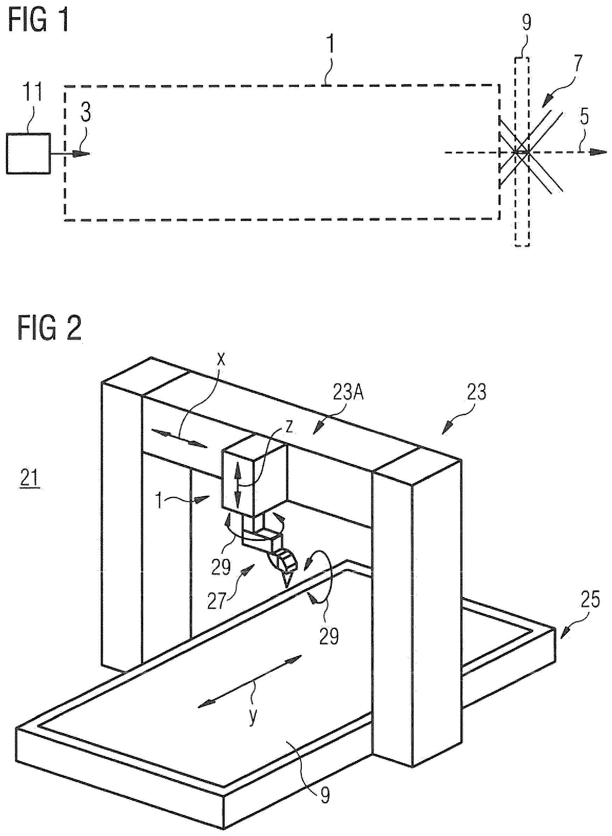

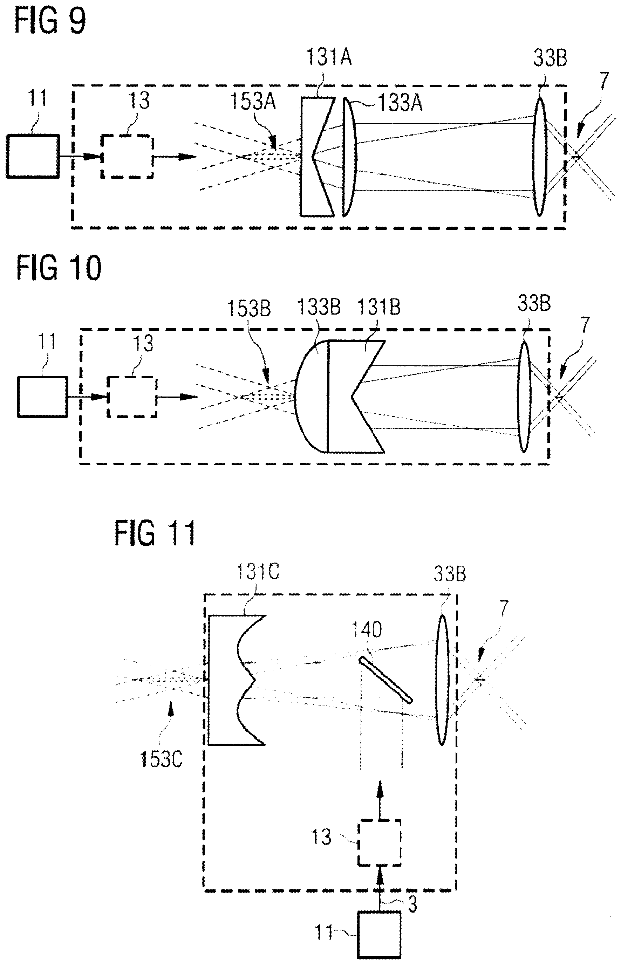

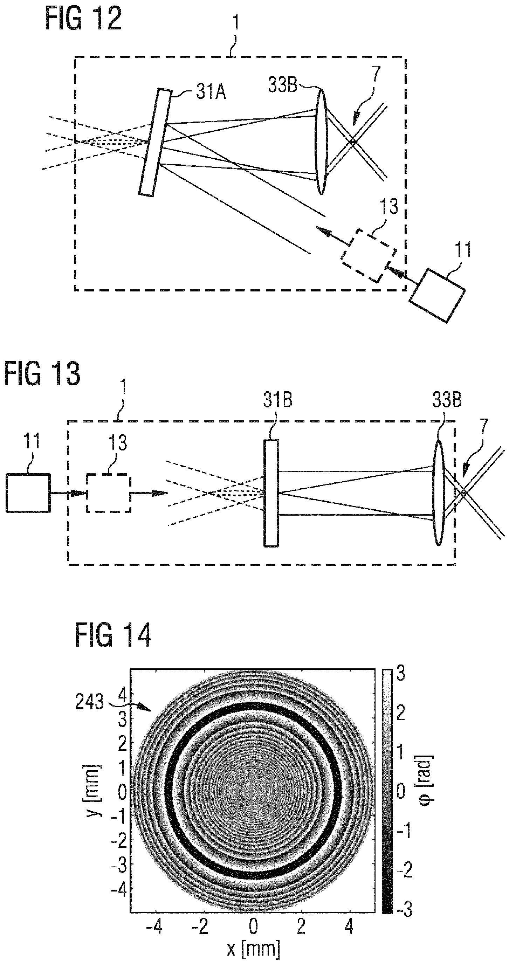

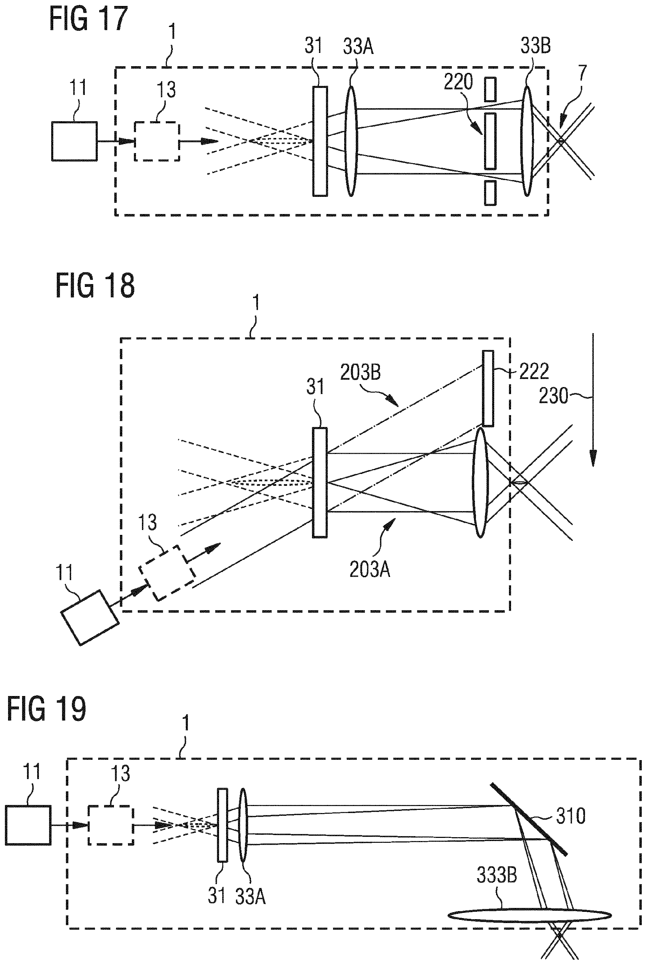

Mit Bezugnahme auf die Figuren 1 bis 8 wird im Folgenden allgemein das zugrunde liegende optische Konzept erläutert. Anschließend werden beispielhafte Ausführungsformen von optischen Systemen erläutert, die zum einen das optische System durch konventionelle Optiken wie Linsen und Spiegel umsetzen (siehe Figuren 9 bis 11) und zum anderen durch diffraktive optische Elemente umsetzen (siehe Figuren 12 bis 16). In Zusammenhang mit den Figuren 17 bis 20 werden die Kombinierbarkeit des optischen Systems mit Komponenten und Aspekten zur Filterung und zum Scannen sowie allgemein Aspekte des Strahlverlaufs im optischen System erläutert.

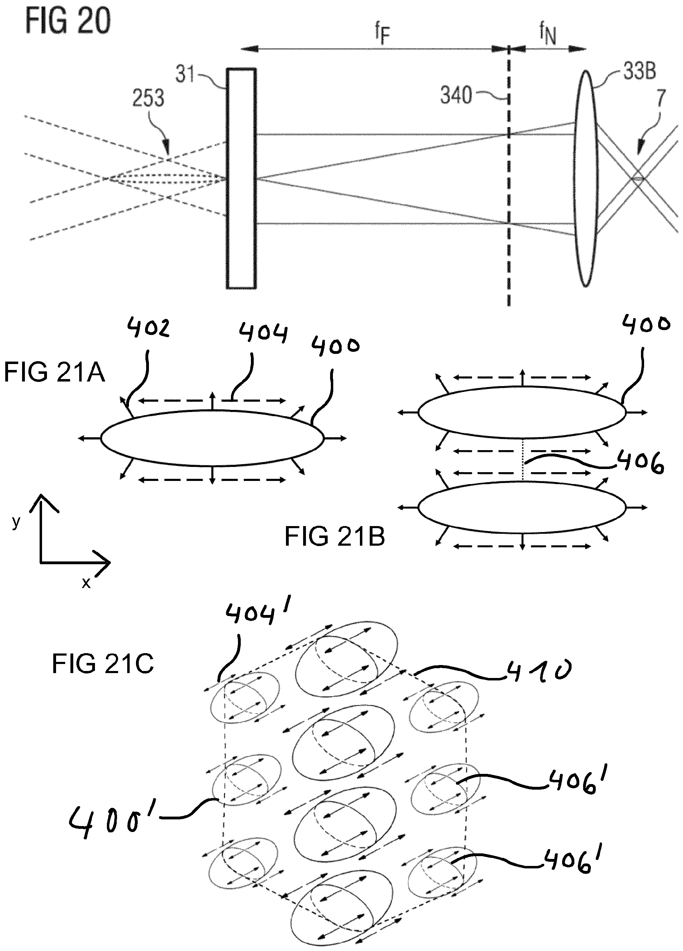

In Verbindung mit den Figuren 21A bis 21C werden mögliche Ursachen zur Bildung einer Vorzugsrichtung für eine Rissbildung erläutert.

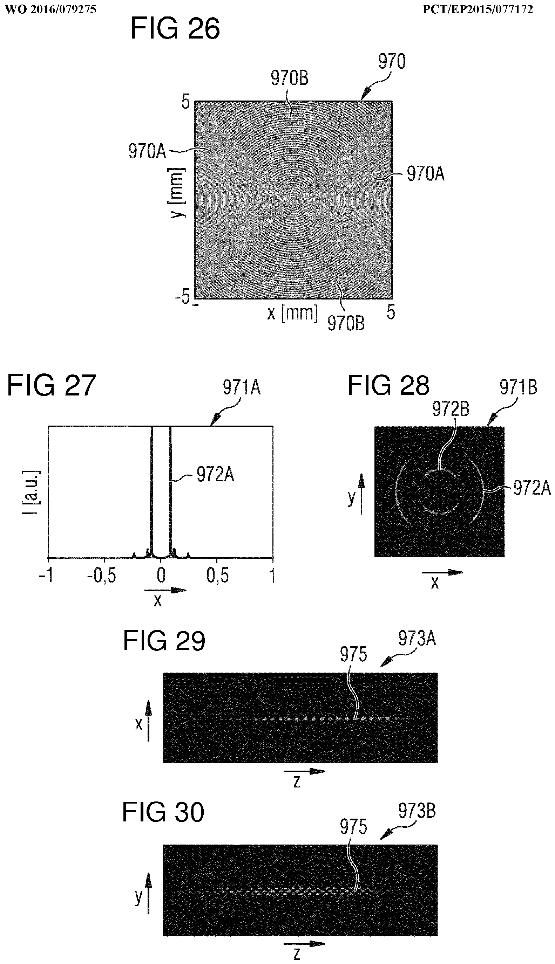

In den verbleibenden Figuren werden Konzepte vorgestellt, die sich auf die Interferenz von inversen Quasi-Bessel-Strahlen in der e Ausbildung transversaler Asymmetrien aufgrund von azimutaler Segmentierung (Figuren 26 bis 30) und transversal versetzten Phasenverläufen (Figuren 31 bis 36C) beziehen.

Fig.1 zeigt eine schematische Darstellung eines optischen Systems 1 zur Strahlformung eines Laserstrahls 3 mit dem Ziel, ein in einer Propagationsrichtung 5 langgezogene Fokuszone 7 in einem zu bearbeitenden Material 9 zu erzeugen. Allgemein wird der Laserstrahl 3 durch Strahlparameter wie Wellenlänge, spektrale Breite, zeitliche Pulsform, Ausbildung von Pulsgruppen, Strahldurchmesser, transversales Eingangsintensitätsprofil, transversales Eingangsphasenprofil, Eingangsdivergenz und/oder Polarisation bestimmt. Gemäß Fig. 1 wird der Laserstrahl 3 dem optische System 1 zur Strahlformung, d.h. zum Umwandeln eines oder mehrerer der Strahlparameter, zugeführt. Üblicherweise wird für die Lasermaterialbearbeitung der Laserstrahl 3 angenähert ein kollimierter Gaußscher Strahl mit einem transversalen Gaußschen Intensitätsprofil sein, der von einer Laserstrahlquelle 11, beispielsweise einem Ultrakurzpuls-Hochleistungslasersystem, erzeugt wird. Die Umwandlung kann z.B. in eine inverse Bessel-Strahl-artige oder inverse Airy-Strahl-artige Strahlform erfolgen.

In der in Fig. 2 gezeigten Laserbearbeitungsanlage 21 kann das optische System 1 beispielsweise für die Materialbearbeitung eingesetzt werden. Die Laserbearbeitungsanlage 21 weist ein Trägersystem 23 und eine Werkstücklagerungseinheit 25 auf. Das Trägersystem 23 überspannt die Werkstücklagerungseinheit 25 und trägt das Lasersystem 11, welches in Fig. 2 beispielsweise in einem oberen Querträger 23A des Trägersystems 23 integriert ist. Ferner ist das optische System 1 in X-Richtung verfahrbar am Querträger 23A angebracht, so dass beide Komponenten ortsnah zueinander angeordnet sind. In alternativen Ausführungsformen kann beispielsweise das Lasersystem 11 als eigene externe Einheit vorgesehen werden, dessen Laserstrahl 3 zum optischen System 1 mittels Lichtleitfasern oder als Freistrahl geführt wird.

Die Werkstücklagerungseinheit 25 trägt ein sich in der X-Y-Ebene erstreckendes Werkstück. Das Werkstück ist das zu bearbeitende Material 9, beispielsweise eine Glasscheibe oder eine für die eingesetzte Laserwellenlänge weitgehend transparente Scheibe in keramischer oder kristalliner Ausführung wie beispielsweise Saphir oder Silizium. Die Werkstücklagerungseinheit 25 erlaubt ein Verfahren des Werkstücks in Y-Richtung relativ zum Trägersystem 23, so dass in Kombination mit der Verfahrbarkeit des optischen Systems 1 ein sich in der X-Y-Ebene erstreckender Bearbeitungsbereich zur Verfügung steht.

Gemäß Fig. 2 ist ferner eine Verschiebbarkeit in Z-Richtung z.B. des optischen Systems 1 oder des Querträgers 23A vorgesehen, um den Abstand zum Werkstück einstellen zu können. Für einen in Z-Richtung verlaufenden Schnitt wird der Laserstrahl üblicherweise auch in Z-Richtung (d.h. normal) auf das Werkstück gerichtet. Allerdings können weitere Bearbeitungsachsen bereitgestellt werden, wie es in Fig. 2 beispielhaft durch eine Auslegeranordnung 27 und den zusätzlichen Rotationsachsen 29 angedeutet wird. Entsprechend ist die Auslegeranordnung 27 in der Ausführung gemäß Fig. 2 optional. Ferner können redundante Zusatzachsen für eine höhere Dynamik vorgesehen werden, indem z.B. nicht das Werkstück oder das optische System, sondern kompaktere und entsprechend konzipierte Komponente beschleunigt werden.

Die Laserbearbeitungsanlage 21 weist ferner eine nicht explizit in Fig. 1 gezeigte Steuerung auf, die beispielsweise im Trägersystem 23 integriert ist und insbesondere eine Schnittstelle zur Eingabe von Betriebsparametern durch einen Benutzer aufweist. Allgemein umfasst die Steuerung Elemente zum Ansteuern von elektrischen, mechanischen und optischen Komponenten der Laserbearbeitungsanlage 21, beispielsweise durch Ansteuern entsprechender Betriebsparameter, wie z.B. Pumplaserleistung, Kühlleistung, Richtung und Geschwindigkeit der Laseranlage und/oder der Werkstückhalterung, elektrische Parameter für die Einstellung eines optischen Elements (beispielsweise eines SLM) und die räumliche Ausrichtung eines optischen Elements (beispielsweise zur Drehung desselben).

Weitere Anordnungen für Laserbearbeitungsanlagen mit verschiedensten Freiheitsgraden sind beispielsweise in EP 1 688 807 A1 offenbart. Allgemein wird bei kleinen Werkstücken oft nur das Werkstück bewegt und bei eher großen Werkstücken nur der Laserstrahl oder - wie in Fig. 2 - das Werkstück und der Laserstrahl. Überdies können zwei oder mehrere optische Systeme und damit Fokuszonen von einem Lasersystem 11 versorgt werden.

Die durch Laserbearbeitungsanlagen erzeugten Modifikationen im Material können beispielsweise zum Bohren, zum Trennen durch induzierte Spannungen, zum Schweißen, zur Erzielung einer Modifikation des Brechungsverhaltens oder für selektives Laserätzen eingesetzt werden. Dementsprechend ist es wichtig sowohl die Geometrie als auch die Art der Modifikation geeignet kontrollieren zu können. Neben Parametern wie Laserwellenlänge, zeitliche Pulsform, Anzahl der Pulse, Energie und zeitlicher Abstand der Pulse in einer eine einzelne Modifikation erzeugenden Pulsgruppe sowie Pulsenergie bzw. Pulsgruppenenergie spielt dabei die Strahlform eine entscheidende Rolle.

Insbesondere eine langgezogene Volumenmodifikation erlaubt eine Bearbeitung über einen in Strahlausbreitungsrichtung lang ausgedehnten Volumenbereich in einem einzigen Bearbeitungsschritt. Insbesondere kann an einem Ort in Vorschubrichtung die Bearbeitung über eine große Ausdehnung in nur einem einzigen Modifikationsbearbeitungsschritt stattfinden. Durch den Einsatz der hierin beschriebenen optischen Systeme, Strahlformen und Verfahren können sich einerseits bessere Arbeitsergebnisse (im Vergleich zu an einem Ort in Vorschubrichtung in aufeinanderfolgenden Modifikationsbearbeitungsschritten aneinandergesetzten Einzel-Modifikationen) erzielen lassen, andererseits können die Prozesszeit und die Anforderungen an die Systemtechnik reduziert werden. So fallen für Einzel-Modifikationen mehrere Arbeitsschritte an, die den Zeitaufwand erhöhen und die eine aufwändige Sicherstellung der relativen Lagen der Einzel-Modifikationen zueinander erfordern.

Ferner kann eine langgezogene Fokuszone hilfreich bei der Bearbeitung von unebenen Materialien sein, da im Wesentlichen identische Laserbearbeitungsbedingungen entlang der langgezogenen Fokuszone vorherrschen, so dass in derartigen Ausführungsformen ein entsprechendes Nachführen in Ausbreitungsrichtung nicht oder nur ab eine größeren Abweichung der Position des zu bearbeitenden Materials als der Länge des langgezogenen Fokusbereichs (unter Berücksichtigung der benötigten Bearbeitungs-/Eindringtiefe) notwendig werden kann.

Allgemein gilt für die Bearbeitung transparenter Werkstoffe mittels langgezogener Volumenabsorption, dass, sobald eine Absorption stattfindet, diese Absorption selbst oder aber die resultierende Änderung der Materialeigenschaft die Propagation des Laserstrahls beeinflussen kann. Deshalb ist es vorteilhaft, wenn Strahlanteile, die eine Modifikation tiefer im Werkstück, also in Strahlausbreitungsrichtung strahlabwärts, bewirken sollen, im Wesentlichen nicht durch Bereiche nennenswerter Absorption geführt werden.

In anderen Worten ist es also günstig, die zur Modifikation weiter strahlabwärts dienenden Strahlanteile unter einem Winkel der Wechselwirkungszone zuzuführen. Ein Beispiel hierfür ist der Quasi-Bessel-Strahl, bei dem eine ringförmige Fernfeldverteilung vorliegt, deren Ringbreite typischerweise klein im Vergleich zum Radius ist. Die Strahlanteile der Wechselwirkungszone werden dabei im Wesentlichen mit diesem Winkel rotationssymmetrisch zugeführt. Das gleiche gilt für den hierin beschriebenen inversen Quasi-Bessel-Strahl oder für Modifikationen und Ergänzungen desselben wie den homogenisierten oder modulierten inversen Quasi-Bessel-Strahl. Ein weiteres Beispiel ist der inverse beschleunigte "Quasi-Airy-Strahl-artige" Strahl, bei dem die Strahlanteile der Modifikation unter einem Offsetwinkel zugeführt werden, wobei dies anschaulich tangential und - nicht wie beim reinen Quasi-Bessel-Strahl rotationssymmetrisch - an die gekrümmte Modifikationszone erfolgt, z.B. wie bei einem gekrümmten inversen Quasi-Bessel-Strahl.

Weiterhin ist es anzustreben, die Schwelle für die nichtlineare Absorption nur in dem angestrebten Volumenbereich nennenswert zu überschreiten und die Geometrie dieses Volumenbereichs so zu wählen, dass diese einerseits für die gewünschte Anwendung geeignet ist, andererseits aber auch die Propagation zu weiter strahlabwärts liegenden Volumenbereichen nicht wesentlich stört. Beispielsweise mag es vorteilhaft sein, Nebenmaxima eines apodisierten Bessel-Strahlprofils unterhalb einer für die nichtlineare Absorption benötigte Schwellenintensität zu halten.

Mit Blick auf in Vorschubrichtung aufeinanderfolgende Modifikationen kann die Geometrie des modifizierten Volumens ferner so gewählt werden, dass bei einer Aufreihung in Vorschubrichtung mehrerer Modifikationen eine vorher eingebrachte Modifikation nur einen unbedeutenden Einfluss auf die Ausbildung der nachfolgenden Modifikationen hat.

Wie schon angesprochen kann für eine schnelle Bearbeitung die Erzeugung einer einzelnen Modifikation mit nur einem einzelnen Laserpuls/einer einzigen Laserpulsgruppe erfolgen, so dass eine Position am Werkstück in diesem Fall nur einmal angefahren wird. Ultrakurzpulslaser können die Bereitstellung von Intensitäten (Leistungsdichten) ermöglichen, die es erlauben, eine ausreichend starke Materialmodifikation in entsprechend langen Wechselwirkungszonen zu verursachen. Die geometrische Ausdehnung der Modifikation wird dabei mithilfe der Strahlformung derart festgelegt, dass eine lang ausgedehnte, hohe freie Elektronendichte durch nichtlineare Absorption im Material erzeugt wird. Die Zuführung der Energie in tiefere Bereiche erfolgt lateral, so dass der Abschirmungseffekt durch eine vorgelagerte Wechselwirkung des Plasmas im Vergleich mit einer Gaußschen Fokussierung verhindert wird. Es kann beispielsweise eine in longitudinaler Richtung gleichmäßig ausgedehnte Elektronendichte oder eine räumlich hochfrequent modulierte Elektronendichte erzeugt werden.

Bei entsprechenden Intensitäten kann es in Gebieten mit ausreichend hoher freie Elektronendichte zu einer explosionsartigen Ausdehnung des Materials kommen, wobei die dabei entstehende Schockwelle nanoskopische Löcher (Nanovoids) erzeugen kann. Weitere Beispiele für Modifikationen (Modifikationszonen) sind Brechungsindexänderungen, komprimierte und/oder zugspannungsinduzierende Bereiche, Mikrokristallite und lokale Stöchiometrieänderungen.

Wie eingangs erläutert kann durch die Kumulation derartiger Modifikationszonen in Vorschubrichtung ein Rissverlauf festgelegt werden. Bei der Bearbeitung wird das Werkstück entsprechend entlang einer modifizierten Kontur getrennt. Die Rissbildung kann dann direkt im Anschluss oder durch einen weiteren Prozess induziert erfolgen. Beispielsweise können beim Trennen von nicht vorgespannten Materialien Ultraschall-, bzw. Temperaturrampen verwendet werden, um ein nachträgliches Trennen entlang der modifizierten Kontur zu bewirken. Eine einzelne Modifikation führt üblicherweise nicht zur Rissbildung.

Mithilfe einer maßgeschneiderten Strahlform können unterschiedliche Spannungsverteilungen im Material und zwischen den modifizierten Bereichen erzeugt werden, um den Trennungsprozess an einen gegebenen Werkstoff anzupassen. Starke räumliche und zeitliche Gradienten können dabei die Entstehung einer Mikro- bzw. Nanoexplosion begünstigen.

Die Modifikationsgeometrie wird dabei schwerpunktmäßig durch die Strahlformung bestimmt (und nicht durch nichtlineare Propagation wie beispielsweise der Filamentation). Die Erzeugung räumlicher Gradienten kann durch die hierin beschriebenen optischen Systeme erfolgen, die der zeitlichen Gradienten kann durch Pulszüge oder Pulsformung erzeugt werden.

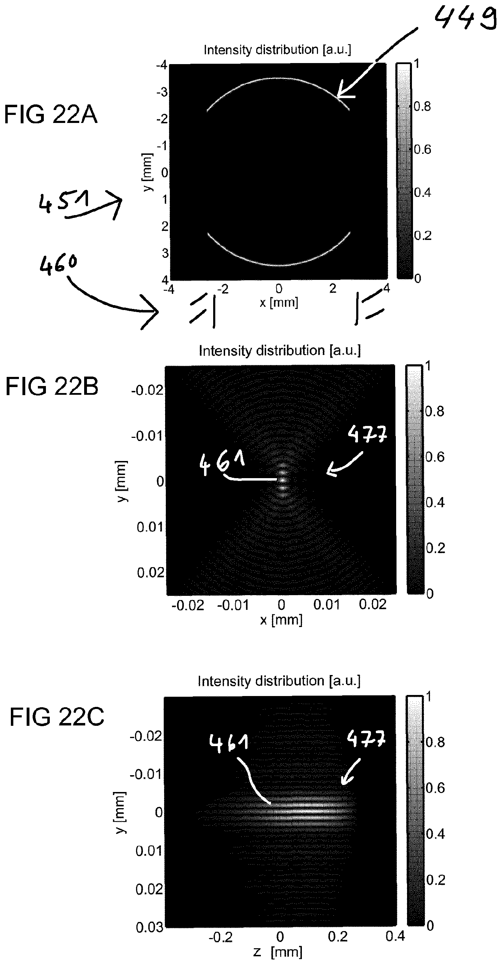

Allgemein kann eine Skalierung der Intensitätsverteilung einer Strahlform durch das Abbildungsverhältnis des Systems, insbesondere durch die Brennweite und die Numerische Apertur der Nahfeldoptik des Abbildungssystems erfolgen. Weitere Möglichkeiten zur Skalierung ergeben sich aus der Verwendung einer zusätzlichen Linse sowie der Verschiebung des Strahlformungselements und/oder der Fernfeldoptik (siehe die Beschreibung in Zusammenhang mit den Figuren 17 und 22). Dadurch kann die laterale und longitudinale Ausdehnung des Strahlprofils im Werkstück beeinflusst werden. Ferner können im Strahlengang zur Strahlformung Raumfilter und Blenden verwendet werden, um den Strahl aufzubereiten.

Beispielhafte Laserstrahlparameter für z.B. Ultrakurzpulslasersysteme und Parameter des optischen Systems und der langgezogenen Fokuszone, die im Rahmen dieser Offenbarung eingesetzt werden können, sind:
Pulsenergie Eₚ: 1 µJ bis 10 mJ (z.B. 20 µJ bis 1000 µJ),
Energie einer Pulsgruppe E_{g}: 1 µJ 10 mJ
Wellenlängenbereiche: IR, VIS, UV (z.B. 2 µm > λ > 200 nm; z.B. 1550nm, 1064 nm, 1030 nm, 515 nm, 343 nm)
Pulsdauer (FWHM): 10 fs bis 50 ns (z.B. 200 fs bis 20 ns)
Einwirkdauer (abhängig von Vorschubgeschwindigkeit): kleiner 100 ns (z.B. 5 ps - 15 ns) Tastverhältnis (Einwirkdauer zur Repetitionszeit des Laserpulses/der Pulsgruppe): kleiner gleich 5 %, z.B. kleiner gleich 1 %
Rohstrahldurchmesser D (1/e²) bei Eintritt in optisches System: z.B. im Bereich von 1 mm bis 25 mm
Brennweite der Nahfeldoptik: 3 mm bis 100 mm (z.B. 10 mm bis 20 mm)
Numerische Apertur NA der Nahfeldoptik: 0.15 ≤ NA ≤ 0.5
Länge des Strahlprofils im Material: größer 20 µm
Maximale laterale Ausdehnung des Strahlprofils im Material, ggf. in der kurzen Richtung: kleiner 20 λ
Aspektverhältnis: größer 20
Modulation in Ausbreitungsrichtung: größer 10 Perioden über Fokuszone
Vorschub dᵥ zwischen zwei benachbarten Modifikationen z.B. für trennende Anwendung: 100 nm < dᵥ < 10 * laterale Ausdehnung in Vorschubrichtung
Vorschub während Einwirkdauer: z.B. kleiner 5 % der lateralen Ausdehnung in Vorschubrichtung

Dabei bezieht sich die Pulsdauer auf einen Laserpuls und die Einwirkdauer auf einen zeitlichen Bereich, in dem z.B. eine Gruppe von Laserpulsen zur Bildung einer einzigen Modifikation an einem Ort mit dem Material wechselwirkt. Dabei ist die Einwirkdauer kurz hinsichtlich der vorliegenden Vorschubgeschwindigkeit, so dass alle Laserpulse eine Gruppe zu einer Modifikation an einem Ort beitragen.

Ist das Werkstück dünner als die Fokuszone lang ist, liegt die Fokuszone partiell außerhalb des Werkstücks, so dass sich Modifikationen ergeben können, die kürzer als die Fokuszone sind. Eine derartige Situation kann vorteilhaft ausgenutzt werden, um den Bearbeitungsprozess auch bei einem Variieren des Abstands zwischen Optik und Werkstück robust zu gestalten. In einigen Ausführungsformen kann eine nicht durch das gesamte Werkstück reichende Modifikation vorteilhaft sein. Insbesondere kann die Länge der Fokuszone und/oder deren Lage im Werkstück angepasst werden. Allgemein sei dabei angemerkt, dass aufgrund unterschiedlicher Schwellen für die nichtlineare Absorption eine Fokuszone mit angenommener identischer Intensität unterschiedlich große Modifikationen in verschiedenen Materialien bewirken wird.

Das Aspektverhältnis betrifft die Geometrie des Strahlprofils (der Fokuszone) im zu bearbeitenden Material sowie die Geometrie der mit einem Strahlprofil erzeugten Modifikation. Bei asymmetrischen oder in lateraler Richtung modulierten (beispielsweise nicht rotationssymmetrischen oder ringförmigen) Strahlprofilen ist das Aspektverhältnis durch das Verhältnis der Länge der Modifikation zu einer innerhalb diesem Längenbereich auftretenden maximalen lateralen Ausdehnung in der kürzesten Richtung bestimmt. Weist das Strahlprofil dabei eine Modulation in lateraler Richtung auf, z.B. bei ringförmigen Strahlprofilen, so bezieht sich das Aspektverhältnis auf die Breite eines Maximums, bei einem ringförmigen Strahlprofil also beispielsweise der Ringstärke. Bei einer Ausbildung mehrerer in lateraler Richtung beabstandeter Modifikationsvolumina bezieht sich das Aspektverhältnis auf die laterale Ausdehnung der einzelnen Modifikation. Bei einem in Ausbreitungsrichtung modulierten Strahlprofil (z.B. aufgrund von Interferenzen) ist das Aspektverhältnis auf die übergeordnete Gesamtlänge bezogen.

Ausgehend von einem Abstand d zwischen Strahlformungselement und Fokussierlinse (Nahfeldoptik), der insbesondere größer ist, als die Brennweite f_{N} der Nahfeldoptik, und einer NA der Nahfeldoptik gegenüber Luft > 0,15, kann das genutzte Winkelspektrum α des Strahlformungselements im Bereich tan(a) < f* NA/d < NA/2, und bevorzugt tan(a) > f* NA/(d * 4), liegen.

Die zuvor genannten Parameterbereiche können die Bearbeitung von Materialdicken bis zu beispielsweise 5 mm und mehr (typisch 100 µm bis 1,1 mm) bei Schnittkantenrauhigkeiten Ra beispielsweise kleiner 1 µm erlauben.

Das optische System 1 kann ferner eine Strahlaufbereitungseinheit 13 zum Anpassen von Strahlparametern wie Strahldurchmesser, Eingangsintensitätsprofil, Eingangsdivergenz und/oder Polarisation des Laserstrahls 3 aufweisen. Beispielsweise wird in das optische System 1 der Laserstrahl eines gepulsten Lasersystems mit beispielsweise einem Strahldurchmesser von 5 mm, Pulslängen von 6 ps bei Wellenlängen um 1030 nm eingekoppelt und zum Strahlformungselement 31 geführt.

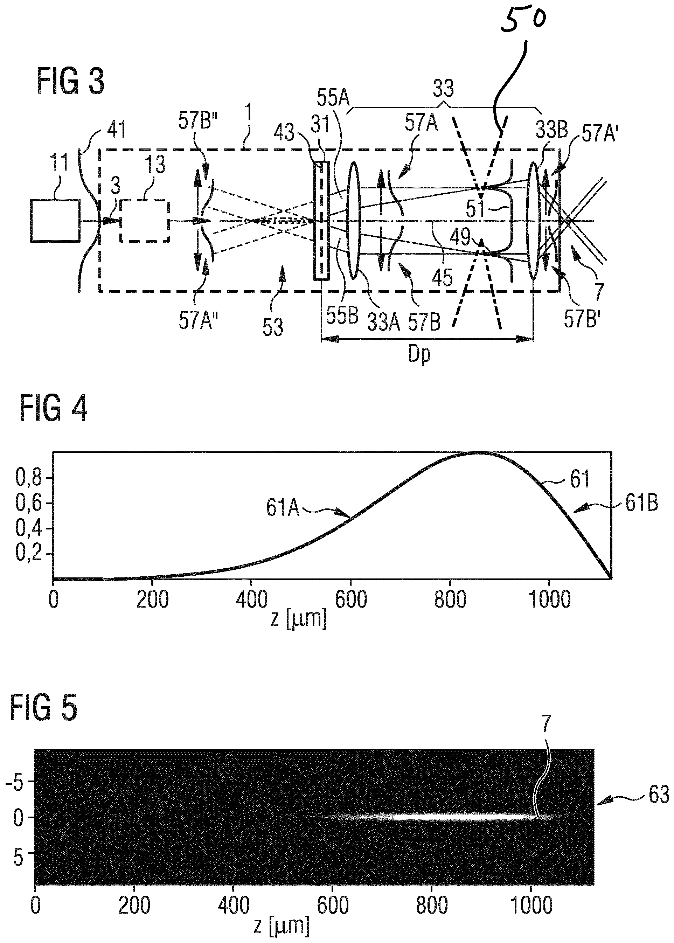

Fig. 3 zeigt den schematischen Aufbau des optischen Systems 1 zur Erläuterung der Funktionsweise. Das optische System 1 basiert auf einem Strahlformungselement 31 und einem Abbildungssystem 33. Das Strahlformungselement 31 ist dazu ausgebildet, den Laserstrahl 3 aufzunehmen. Entsprechend ist es an ein transversales Eingangsintensitätsprofil 41 des Laserstrahls 3 angepasst. Ferner ist das Strahlformungselement 31 dazu ausgebildet, dem Laserstrahl 3 einen strahlformenden Phasenverlauf 43 (gestrichelt schematisch in Fig. 1 angedeutet) über das transversale Eingangsintensitätsprofil 41 aufzuprägen. Der aufgeprägte Phasenverlauf 43 ist derart, dass dem Laserstrahl 3 ein virtuelles, vor dem Strahlformungselement 31 liegendes optisches Bild 53 (im Wesentlichen) der langgezogenen Fokuszone 7 zugeordnet ist. Das Strahlformungselement 31 erzeugt somit ein virtuelles Strahlprofil, das strahlaufwärts des Strahlformungselements 31 liegt, aber nicht dem realen dort vorliegenden Strahlverlauf entspricht.

Das Abbildungssystem 33 ist derart ausgelegt, dass das virtuelle Strahlprofil in den Bereich der Laserbearbeitungsanlage abgebildet wird, in dem das Werkstück während der Bearbeitung positioniert wird. In Fig. 3 weist das Abbildungssystem 33 hierzu beispielhaft ein in Strahlrichtung erstes Fokussierelement, welches hierein als Fernfeldoptik 33A bezeichnet wird, und ein in Strahlrichtung zweites Fokussierelement, welches hierin als Nahfeldoptik 33B bezeichnet wird, auf.

Die Fernfeldoptik 33A ist im Bereich der Phasenaufprägung vorgesehen und in Fig. 3 beispielhaft strahlabwärts des Strahlformungselements 31 mit einer Linsenform verdeutlicht. Wie nachfolgend erläutert wird, kann die Fernfeldoptik 33A auch kurz vor dem Strahlformungselement 31 angeordnet, aus Komponenten vor und nach dem Strahlformungselement zusammengesetzt und/oder ganz oder teilweise in dieses integriert werden.

Nach der Phasenaufprägung im Strahlformungselement 31 propagiert der Laserstrahl 3 gemäß dem Abbildungssystem 33 einen Strahlformungsabstand Dp bis zur Nahfeldoptik 33B. Der Strahlformungsabstand Dp entspricht dabei einer Propagationslänge des Laserstrahls 3, in der der aufgeprägte Phasenverlauf 43 das transversale Eingangsintensitätsprofil 41 in ein transversales Ausgangsintensitätsprofil 51 an der Nahfeldoptik 33B überführt. Hierin umfasst das Ausgangsintensitätsprofil 51 solche transversale Intensitätsprofile im optischen System, die durch die Phasenaufprägung bestimmt sind. Dies ist üblicherweise spätestens im Bereich der Brennweite vor der Nahfeldoptik bzw. im Bereich der Nahfeldoptik erfolgt.

Zur Umsetzung des Konzepts eines virtuellen Strahlprofils ergeben sich für die im optischen System vom Laserstrahl 3 zu durchlaufende Propagationslänge (vom Strahlformungselement 31 bis zur Nahfeldoptik 33B) folgende Überlegungen. Allgemein bildet das optische System ein Abbildungssystem 33 mit einer Fernfeldfokussierwirkung und einer Nahfeldfokussierwirkung aus. Letztere wird durch die Nahfeldoptik 33B und damit durch die Nahfeldbrennweite f_{N} bestimmt. Erstere wird durch eine Fernfeldfokussierwirkung und eine zugehörigen Fernfeldbrennweite f_{F} bestimmt. Die Fernfeldbrennweite f_{F} kann durch die separate Fernfeldoptik 33A realisiert werden und/oder in das Strahlformungselement integriert sein. Siehe dazu auch Fig. 20. Das Abbildungssystem 33 weist ein Abbildungsverhältnis von X zu 1 auf, wobei X für eine Verkleinerung des virtuellen Bildes üblicherweise größer 1 ist. Beispielsweise werden Abbildungsverhältnisse von größer gleich 1:1, z.B. größer gleich 5:1, 10:1, 20:1, 30:1 oder 40:1, umgesetzt. In anderen Worten gibt der Faktor X bei dieser Definition der Abbildung die Vergrößerung der lateralen Größe der Fokuszone ins virtuelle Profil wieder. Der Winkel wird entsprechend verkleinert. Zu beachten ist, dass das Abbildungsverhältnis quadratisch in die Länge des Profils eingeht. Entsprechend verkleinert sich die longitudinale Länge eines virtuellen Bildes beispielsweise für ein Abbildungsverhältnis 10:1 um den Faktor 100 und für ein Abbildungsverhältnis 20:1 um den Faktor 400.

Bei einem Abbildungsverhältnis von 1:1 gilt f_{N} = f_{F}, eine überlappende Justage der Brennebenen angenommen. Allgemein gilt für f_{F} = X f_{N}. Ist die Fernfeldoptik 33A in das Strahlformungselement integriert, befindet es sich z.B. im Abstand f_{N} + f_{F} von der Nahfeldoptik, d.h. typischerweise im Bereich der Summe der Brennweiten beider Optiken. Für ein 1:1 oder verkleinerndes Abbildungssystem entspricht die Propagationslänge somit mindestens dem Doppelten der Brennweite der Nahfeldoptik.

Separiert man Fernfeldoptik 33A und Strahlformungselement 31 und setzt voraus, dass das virtuelle optische Bild nicht (insbesondere nicht im für die Fokuszone relevanten Intensitätsbereich) mit dem Strahlformungselement überlappen soll, ist das Strahlformungselement mindestens im Abstand I/2 strahlabwärts vom longitudinalen Zentrum des virtuellen Strahlprofils 53 angeordnet. Dabei ist die Länge I das longitudinale Ausmaß des virtuellen Strahlprofils 53 hinsichtlich des relevanten Intensitätsbereichs. Das longitudinalen Zentrum des virtuellen Strahlprofils 53 befindet sich z.B. in der eingangsseitigen Brennebene der Fernfeldoptik 33A, welche sich im Abstand f_{N} + f_{F} von der Nahfeldoptik 33B befindet. In diesem Fall ist die Propagationslänge d = f_{N} + 2f_{F} - I/2 = (1 + 2X) f_{N} - I/2, also kleiner als f_{N} + 2f_{F} = (1 + 2X) f_{N} oder anders ausgedrückt kleiner als der Abstand zwischen den Optiken plus f_{F}.

Für den Abstand d = f_{N} + f_{F} = (1 + X) f_{N} kann auch bei größer werdenden Strahlaufweitungen eine ebenfalls größer werdende Länge I des virtuellen Strahlprofils 53 abgebildet werden, wobei wie hierin später erläutert ein definiertes Ende des Profils beibehalten werden kann.

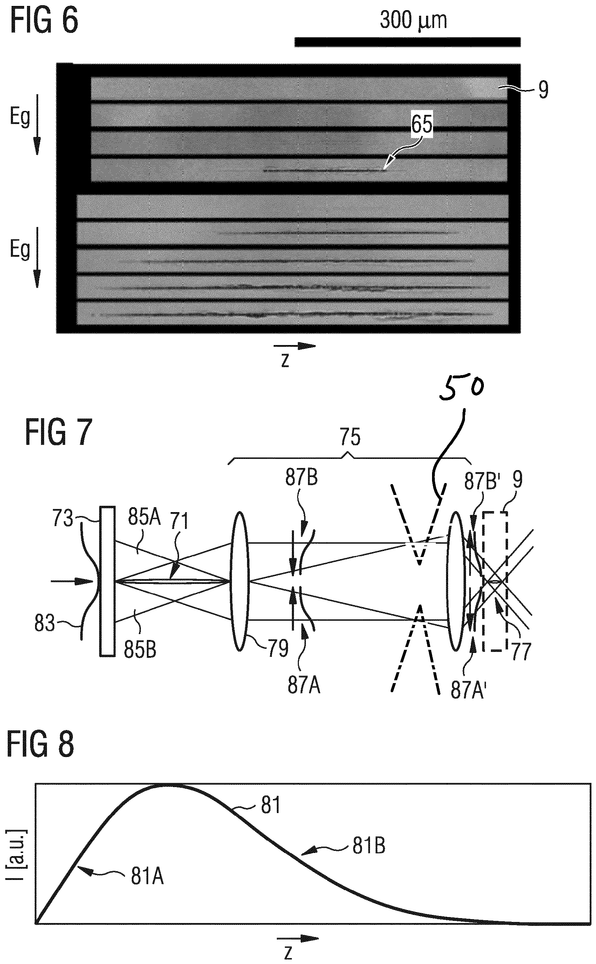

Allgemein sei erwähnt, dass aufgrund von Rohstrahldivergenzen und -konvergenzen sowie bei abweichender Justage des Abbildungssystems Abweichungen von obigen Überlegungen entstehen können. Im Gegensatz zu einer vergleichbaren Abbildung einer realen Intensitätsüberhöhung, d.h. Abbildungen mit vergleichbarem Abbildungsverhältnis, ist das Strahlformungselement näher angeordnet (siehe die entsprechende Diskussion zu den Figuren 7 und 8). Ein üblicher Abstand liegt also in einem Bereich (1 + 2X) f_{N} ≥ d ≥ 2f_{N}.

Durch die aufgeprägte Phase weist das transversale Ausgangsintensitätsprofil 51 im Vergleich mit dem Eingangsintensitätsprofil 41 mindestens ein außerhalb einer Strahlachse 45 liegendes lokales Maximum 49 auf. Das außerhalb der Strahlachse 45 liegende lokale Maximum 49 führt zu einem lateralen Energieeintrag in die Fokuszone 7. Je nach Strahlformungselement 31 kann das lokale Maximum 49 des transversalen Ausgangsintensitätsprofils 51 rotationssymmetrisch zur Strahlachse 45 ausgebildet sein - wie in Fig. 3 in der Schnittansicht angedeutet - oder es kann nur in einem azimutalen Winkelbereich ausgebildet sein (siehe z.B. Figuren 29 und 30). Üblicherweise wird die Strahlachse durch den Strahlschwerpunkt des lateralen Strahlprofils definiert. Dem optischen System kann üblicherweise eine optische Achse zugeordnet werden, die üblicherweise durch einen Symmetriepunkt des Strahlformungselements (z.B. durch das Zentrum des DOE oder die Spitze des reflektiven Hohlkegel-Axicon) verläuft. Bei rotations-symmetrischen Strahlen und entsprechend exakter Justage kann die Strahlachse mit der opti-schen Achse des optischen Systems zumindest abschnittsweise zusammenfallen.

Das lokale Maximum kann als generisches Merkmal des Ausgangsintensitätsprofils 51 betrachtet werden, wobei sich insbesondere für inverse Quasi-Bessel-Strahl-artige Strahlformen eine typische Substruktur mit einer steilen und einer langsam abfallenden Flanke ausbilden kann. Diese Substruktur kann sich aufgrund der fokussierenden Wirkung des Strahlformungselements und/oder der Fernfeldoptik im Bereich einer zugeordneten Fernfeldbrennebene invertieren. Insbesondere kann das Ausgangsintensitätsprofil im Bereich dieser Fernfeldebene das lokale Maximum besonders "scharf" zeigen oder, beispielsweise bei inversen Quasi-Bessel-Strahl-artige Strahlformen, kann sich das lokale Maximum schon sehr schnell nach dem Strahlformungselement ausbilden. Allerdings können die Aspekte der Substruktur aufgrund der vielfältigen Möglichkeiten in der Phasenaufprägung variieren.

Das Konzept eines virtuellen Strahlprofils kann einerseits die Baulänge des optischen Systems 1 reduzieren und andererseits im optischen System 1 die Ausbildung eines langgezogenen Strahlprofils mit deutlicher Intensitätsüberhöhung vermeiden. Das Abbildungssystem 33 ist so ausgestaltet, dass innerhalb des optischen Systems 1 das Fernfeld dieses virtuellen Strahlprofils gebildet wird und dass die Fokussierung in der Nahfeldoptik 33B mittels einer gewöhnlichen Fokussierungskomponente, beispielsweise einer Linse, einem Spiegel, einem Mikroskopobjektiv oder einer Kombination derselben, erfolgen kann. Dabei soll "gewöhnlich" hier in dem Sinne verstanden werden, dass die charakteristische Strahlform im Wesentlichen durch das Strahlformungselement 31 und nicht durch die Nahfeldoptik 33B geprägt wird.

Zur Verdeutlichung wird in Fig. 3 ein Strahlverlauf angedeutet, der einem hierein als inversen Quasi-Bessel-Strahl bezeichneten Strahl entspricht. Dazu ist strahlabwärts des Strahlformungselements 31 der Strahlverlauf mit durchgezogenen Linien verdeutlicht. Strahlaufwärts des Strahlformungselements 31 wird anstelle des einfallenden kollimierten Strahls 3 das virtuelle Strahlprofil in Analogie zu einem realen Quasi-Bessel-Strahl gestrichelt skizziert.

Ähnlich einem üblichen Quasi-Bessel-Strahl weist auch der inverse Quasi-Bessel-Strahl eine Ringstruktur in der Fokusebene der Fernfeldoptik 33A auf. Allerdings gehen die in der schematischen Schnittdarstellung angedeuteten divergenten Strahlbereiche 55A, 55B, die auf die Fernfeldoptik 33A treffen, nicht aus einem "realen" Quasi-Bessel-Strahlprofil hervor, sondern entstehen direkt aus der Wechselwirkung des Strahlformungselements 31 mit dem einfallenden Laserstrahl 3. Aufgrund der direkten Wechselwirkung werden die Strahlbereiche 55A, 55B in ihrer lateralen Intensitätsverteilung durch das transversale Strahlprofil 41 des Laserstrahls 3 geprägt. Entsprechend nimmt bei einem Gaußschen Eingangsstrahl in radialer Richtung die Intensität prinzipiell in den Strahlbereichen 55A, 55B von innen nach außen ab. Aufgrund der Divergenz der Strahlbereiche 55A, 55B bildet sich entsprechend auf der Strahlachse typisch ein Bereich niedrigerer (im idealen Fall keine) Intensität für die phasenmodulierten Strahlanteile aus. Dabei bezieht sich hierin die Divergenz eines Strahlanteils, entsprechend auch ein divergenter Strahlanteil, auf einen Strahlanteil, die sich von der Strahlachse weg bewegt. Allerdings kann sich in diesem Bereich ein Strahlanteil des nicht-phasenmodulierten Strahls und/oder auch ein zusätzlicher phasenmodulierter Strahlanteil überlagern. Hinsichtlich der Entwicklung des Strahls im optischen System während der Ausbildung eines inversen Bessel-Strahl-artigen Strahls wird auf die Beschreibung der Figuren 33 und 34 verwiesen. Dieses Intensitätsverhalten ist schematisch in den transversalen Intensitätsverläufen 57A und 57B angedeutet. Es sei angemerkt, dass sich die Intensitätsverläufe entlang der Propagationslänge aufgrund des aufgeprägten Phasenverlaufs 43 ändern können. Zumindest überwiegt jedoch im Anfangsbereich (d.h. den nahe der Strahlformungseinheit 31 liegenden Strahlenbereichen 55A, 55B) aufgrund des im Wesentlichen als reine Phasenmaske wirkenden Strahlformungselements 31 das einfallende Intensitätsprofil des Laserstrahls 3 für die divergenten phasenmodulierten Strahlanteile.

Zur anschaulichen Erklärung für einen inversen Quasi-Bessel-Strahl werden in Fig. 3 ferner Intensitätsverläufen 57A' und 57B' schematisch angedeutet. Dabei wird angenommen, dass das Strahlformungselement 31 nur die Phase und nicht die Amplitude beeinflusst. Man erkennt, dass die Fokussierung durch die Fernfeldoptik 33A (bzw. die entsprechende Fernfeldwirkung des Strahlformungselements 31) den Intensitätsverlauf am Austritt des optischen Systems 1 umdreht, so dass sich bei der Ausbildung der langgezogenen Fokuszone 7 auf der Strahlachse 45 zuerst niedrige Intensitäten überlagern, welche aus den abfallenden Flanken des einfallenden Gaußschen Strahlprofils hervorgehen. Danach überlagern sich die höheren Intensitäten, welche aus dem zentralen Bereich des einfallenden Gaußschen Strahlprofils hervorgehen. Hierzu sei erwähnt, dass nicht allein die Intensität auf dem Strahlformungselement sondern auch die beitragende Fläche zu berücksichtigen ist. Bei Rotationssymmetrie geht der Abstand entsprechend quadratisch ein. Wie insbesondere in Zusammenhang mit Fig. 4 erläutert endet das longitudinale Intensitätsprofil genau in dem Bereich, in dem sich die Strahlanteile aus dem Zentrum des Eingangsprofils schneiden. Im Zentrum liegt zwar die höchste Intensität vor, die Fläche geht aber gegen Null. Ferner sei angemerkt, dass nach der Fokuszone wiederrum ein umgedrehter Intensitätsverlauf vorliegt, der dem Intensitätsverlauf 57A, 57B nach dem Stahlformungselement entspricht (keine Wechselwirkung mit einem Material angenommen).

Aufgrund der Abbildung durch das Abbildungssystem 33 liegen entsprechend hinsichtlich der virtuellen Strahlform in Fig. 3 schematisch angedeutete einlaufenden virtuelle Intensitätsverläufen 57A" und 57B" vor, die im Prinzip den Intensitätsverläufen 57A' und 57B' entsprechen.

Diese im Vergleich zum Quasi-Bessel-Strahl umgekehrte Intensitätsverläufe bewirkt einen speziellen longitudinalen Intensitätsverlauf für den inversen Quasi-Bessel-Strahl sowohl in der Fokuszone 7 als auch im virtuellen Strahlprofil, d.h. dem optischen Bild 53, da hier die Überlagerung der Strahlbereiche 55A, 55B virtuell erfolgt. Für die entsprechende Diskussion des Intensitätsverlaufs für einen konventionellen Quasi-Bessel-Strahl wird auf die Figuren 7 und 8 und die zugehörige Beschreibung verwiesen.

Fig. 4 verdeutlicht beispielhaft eine longitudinale Intensitätsverteilung 61 in der langgezogenen Fokuszone 7, wie sie für die Abbildung des virtuellen optischen Bildes 53 einer inversen Quasi-Bessel-Strahlform berechnet werden kann. Aufgetragen ist eine normierte Intensität I in Z-Richtung. Es sei angemerkt, dass eine Ausbreitungsrichtung gemäß eines normalen Einfalls (in Z-Richtung) auf das Material 9 nicht zwingend ist und, wie in Zusammenhang mit Fig. 2 erläutert, alternativ unter einem Winkel zur Z-Richtung erfolgen kann.

Man erkennt in Fig. 4 einen zuerst langsamen Intensitätsanstieg 61A über mehrere 100 Mikrometer (anfängliche Überlagerung der niedrigen (äußeren) Intensitäten) bis zu einem Intensitätsmaximum, gefolgt von einem starken Intensitätsabfall 61B (Überlagerung der hohen (zentralen) Intensitäten). Für eine inverse Bessel-Strahlform ergibt sich somit in Ausbreitungsrichtung (Z-Richtung in Fig. 4) eine harte Grenze der longitudinalen Intensitätsverteilung. Wie man insbesondere mit Blick auf die in Fig. 3 dargestellten Intensitätsverläufe 57A' und 57B' erkennen kann, basiert diese harte Grenze darauf, dass das Ende der longitudinalen Intensitätsverteilung 61 auf die Beiträge des Strahlzentrums des einfallenden Laserstrahls mit zwar viel Intensität aber auf einer stark reduzierten (auf Null gehende) Fläche zurückgeht. In anderen Worten, das Ende beruht auf der Abbildung eines virtuellen Strahlprofils, in dem in der Mitte für den inversen Quasi-Bessel-Strahl ein Loch entsteht. Der starke Gradient beim Intensitätsabfall am Ende beruht auf der hohen Intensität im Zentrum des Eingangsprofils, begrenzt allerdings durch die verschwindende Fläche. Für ein ideales Abbildungssystem ist das longitudinale Ausmaß der Intensitätsverteilung 61 durch die Lage des virtuellen Profils und den Abbildungsmaßstab definiert. Weist das Werkstück ferner einen höheren Brechungsindex auf, so wird das Strahlprofil entsprechend verlängert.

Hierzu sei ergänzt, dass die harte Grenze in Laserbearbeitungsanlagen zur Folge hat, dass das in Ausbreitungsrichtung vordere Ende einer Modifikation auch bei Vergrößerung des einfallenden transversalen Strahlprofils im Wesentlichen stationär in Ausbreitungsrichtung ist. Die Modifikation ändert ihre Ausdehnung nur im hinteren Bereich, d.h. sie kann sich in Richtung zur Nahfeldoptik hin verlängern, wenn der Eingangsstrahldurchmesser des Laserstrahls größer wird. Eine einmal eingestellte Lage der harten Grenze bezüglich der Werkstückauflage bzw. dem Werkstück selbst kann somit hohe Intensitäten im strahlabwärts der Modifikation vermeiden. Im Unterschied dazu führt eine Vergrößerung des Eingangsstrahldurchmessers bei der Abbildung einer realen Intensitätsüberhöhung zu einer Verlängerung der Modifikation in Ausbreitungsrichtung, d.h. z.B. in eine Werkstückauflage hinein, was zu Beschädigungen derselben führen kann.

Fig. 5 zeigt einen beispielhafter X-Z-Schnitt 63 der Intensität in der Fokuszone 7 für die in Fig. 4 gezeigte longitudinale Intensitätsverteilung 61. Man erkennt die langgezogene Ausbildung der Fokuszone 7 über mehrere 100 Mikrometer bei einer transversalen Ausdehnung von einigen wenigen Mikrometer. Mit dem Schwellenwertverhalten der nichtlinearen Absorption kann ein derartiges Strahlprofil im Werkstück eine klar definierte langgezogene Modifikation bewirken. Die langgezogene Form der Fokuszone 7 weist beispielsweise ein Aspektverhältnis, d.h. ein Verhältnis der Länge der Fokuszone zu einer innerhalb dieser Länge auftretenden maximalen Ausdehnung in der lateral kürzesten Richtung - letzteres bei nicht rotationssymmetrischem Profilen) im Bereich von 10:1 bis 1000:1, z.B. 20:1 oder mehr, beispielsweise 50:1 bis 400:1 auf.

Wenn man sich von der in Fig. 4 dargestellten Strahlform eines Amplituden-seitig in Ausbreitungsrichtung nicht modifizierten inversen Quasi-Bessel-Strahl löst, kann mit dem Strahlformungselement 31 im Fernfeld zusätzlich eine Amplitudenumverteilung bewirkt werden, die z.B. zu einer Intensitätsmodifizierung in Ausbreitungsrichtung genutzt werden kann. Allerdings kann die sich dabei ergebende Intensitätsverteilungen vor der Fokuszone 7 die "Umkehrung" nicht mehr in einer sehr offensichtlichen Form widergeben. Nichtsdestotrotz werden sich doch oft im Anfangsbereich und im Endbereich des longitudinalen Intensitätsprofils Ansätze der Invertierung zeigen, z.B. ein langsamer Anstieg und ein schneller Abfall. Überdies kann eine (phasenbedingte) Amplitudenumverteilung durch den Phasenverlauf des Strahlformungselements 31 eben genau auf eine invertierte Intensitätsverteilung eingestellt werden, um beispielsweise eine Art longitudinale Flat-top-Intensitätsprofil zu bewirken.

Ergänzend kann folgendes Merkmal zur Abgrenzung hinsichtlich einer "realen" Strahlform erhalten bleiben: Im Falle eines realen Gaußschen Eingangsstrahl existiert z.B. bei einem realen Axicon eine Ebene zwischen Nahfeldoptik und Fokuszone, in der das verkleinerte Gaußsche transversale Strahlprofil des Eingangsstrahls vorliegt und entsprechend sichtbar gemacht wer-den kann. Eine entsprechende Abbildung gibt es beim Konzept eines virtuellen optischen Bildes. Allerdings liegt in diesem Fall die Bildebene, in der das verkleinerte Gaußsche transversale Strahlprofil vorliegt, hinter der Fokuszone. Das transversale Strahlprofil kann entsprechend sichtbar gemacht werden. Dies gilt allgemein für Phasenmasken für die hierin vorgestellten inversen Strahlformen, wenn diese mit einem Gaußschen Strahlprofil beleuchtet werden. Im Speziellen liegt das verkleinerte Gaußsche transversale Strahlprofil in der Bildebene des Strahlformungselements und somit üblicherweise direkt strahlabwärts der Fokuszone.

Auf-grund der schon erfolgten Divergenz ist es deswegen deutlich größer als das transversale Strahlprofil des inversen Quasi-Bessel-Strahl-artigen Strahls in der Fokuszone. Ebenso ist es in der Intensität viel geringer.

Man kann die Position des abgebildeten Gaußschen transversalen Strahlprofils der Eingangsstrahls an einem schnellen Umschlagen der Struktur des Strahlprofils, d.h. einer starken Änderung über einen kleinen lateralen Bereich, erkennen. So liegt in der Fokuszone z.B. das transversale Intensitätsprofil des inversen Quasi-Bessel-Strahl-artigen Strahls vor. Bei Durchgang durch die Bildebene des Strahlformungselements bildet sich dann "quasi" sofort der dunkle Punkt im Zentrum aus. Dies ist bei einem inversen Quasi-Bessel-Strahl anders am Anfang der Fokuszone. Dort bildet sich aufgrund der zunehmenden Überlagerung der Randbereiche des Gaußschen Strahlprofils ein langsamer Übergang von einem dunklen Zentrum zum im Zentrum ausgefüllten transversalen Intensitätsprofil des inversen Quasi-Bessel-Strahl-artigen Strahls aus. In anderen Worten in longitudinaler Richtung nimmt die Intensität über einen größeren Bereich zu, als sie am Ende abnimmt. Am Ende ist der Übergang entsprechend klar scharf begrenzt. Es sei ergänzt, dass für die Abbildung einer realen Bessel-Strahl-artige Intensitäts-überhöhungen sich das Verhalten am Ende und am Anfang vertauschen, d.h. am Ende des Bessel-Strahlprofils bildet sich der dunkle Punkt langsamer aus.

Wie zuvor erläutert wirkt sich das Konzept der Verwendung eines virtuellen Strahlprofils somit u.a. auf die vorzunehmende Phasenaufprägung und die sich ergebenden Intensitätsverläufe im Fokusbereich 7 aus.

Fig. 6 verdeutlicht Modifikationszonen 65, die im Rahmen einer experimentellen Studie zur Untersuchung der Ausbildung von Modifikationen in einem transparenten Material erzeugt wurden. Jede Modifikationszone 65 geht auf die Wechselwirkung mit einer Gruppe von Laserpulsen, beispielsweise zwei 6 ps Pulsen mit einem Abstand von ca. 14 ns, zurück. Die Form der Modifikationszonen korrespondiert mit der Form der gemäß den Figuren 4 und 5 angenommenen langgezogenen Fokuszone 7. Die maximale Länge ist durch die Geometrie der langgezogenen Fokuszone 7 bei einer benötigten Intensität/Fluenz begrenzt.

Die oberen vier Aufnahmen verdeutlichen das Schwellenwertverhalten bei Pulsgruppenenergien Eg von ca. 20 µJ bis 40 µJ. Die unteren vier Aufnahmen verdeutlichen die Formgebung der langgezogenen Modifikationszonen 65 bei Pulsgruppenenergien Eg von ca. 30 µJ bis 200 µJ. Bei zunehmender Gesamtenergie Eg verlängert sich die Modifikationszone in Richtung Strahleintritt (Nahfeldoptik), da die Schwellenintensität zur nichtlinearen Absorption in einem längeren Bereich der Fokuszone 7 erreicht wird. Das Ende der Modifikation in Strahlausbreitungsrichtung ist in seiner Lage im Wesentlichen stationär, und zwar insbesondere ohne Nachkorrektur eines Abstands einer Nahfeldoptik (33B) zum zu bearbeitenden Werkstück. Bei geringen Energien mag aufgrund des bestehenden Gradienten in longitudinaler Richtung ein anfängliches in Strahlrichtung Wandern des hinteren Endes eintreten, insbesondere wenn die Modifikationsschwelle bei kleineren Intensitäten im Strahlprofil liegt. Allerdings nimmt dieses Wandern bei mittleren und hohen Energien ab, da die Erzeugung des inversen Quasi-Bessel-Strahl-artigen Strahlprofils in Ausbreitungsrichtung in implizites maximales hinteres Ende aufweist.

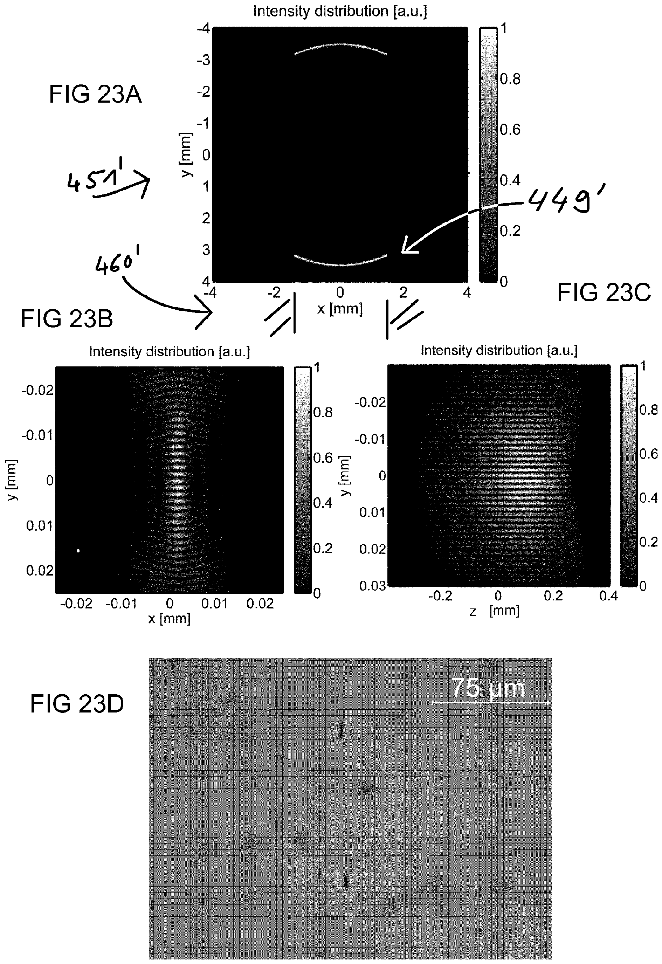

Ein ähnliches Verhalten in der Veränderung des longitudinalen Ausmaßes der Modifikation ergibt sich auch für einen radial zunehmenden Strahldurchmesser des einfallenden Laserstrahls 3. Auch in diesem Fall verlängert sich die Modifikationszone in Richtung Strahleintritt (Nahfeldoptik), da die radial außen hinzukommenden Intensitätsbereiche des einfallenden Laserstrahls 3 Energie in den longitudinalen Intensitätsbereich im Bereich des langsamen Intensitätsanstiegs 61A (d.h. Intensitätsanstieg mit geringer Steigung) führen. Das Maximum der Intensitätsverteilung wird sich entsprechend in Richtung Strahleintritt verschieben. Das Ende der Modifikation in Strahlausbreitungsrichtung ist dagegen in seiner Lage im Wesentlichen stationär, da diese Lage durch die Strahlmitte des einfallenden Laserstrahls 3 mit Energie versorgt wird. Hierzu sei erwähnt, dass auch bei modifizierten inversen Quasi-Bessel-Strahl-artigen Strahlformen dieses Verhalten beobachtet werden kann. Beispielsweise für eine in Zusammenhang mit den Figuren 23 bis 26 diskutierten Flat-top-Strahlform würde sich bei Änderung des Strahldurchmessers die Lage des Endes der Modifikation im Wesentlichen nicht ändern. Für ein derart verändertes einfallendes Intensitätsprofil kann das Strahlformungselement ferner evtl. nicht mehr zu einer optimierten Flat-top-Struktur führen, so dass sich Modulationen in der Intensität und evtl. eine Variation des Anfangs ergeben können.

Fig. 7 dient der Erläuterung einer Strahlführung, bei der eine reale Intensitätsüberhöhung 71 durch eine Strahlformungsoptik 73, wie ein Axicon, erzeugt wird. Dies entspricht der bekannten Ausbildung eines Quasi-Bessel-Strahls. Die Intensitätsüberhöhung 71 wird anschließend über ein Teleskopsystem 75 in das Werkstück 9 unter Ausbildung einer Fokuszone 77 abgebildet. Wie in Fig. 7 dargestellt besteht in einem derartigen Aufbau die Gefahr, dass die reale Intensitätsüberhöhung 71 eine Fernfeldoptik 79 des Teleskopsystems 75 beschädigt, insbesondere wenn eine geringe Baulänge realisiert werden soll. Das hierin beschriebene optische System (siehe z.B. Fig. 3), das das Konzept eines virtuellen Bildes umsetzt, umgeht dieses Risiko einer Beschädigung der strahlführenden Optik.

Fig. 8 verdeutlicht zur Vollständigkeit eine sich bei dem Aufbau gemäß Fig. 7 ergebende longitudinale Intensitätsverteilung 81 in Z-Richtung. Nach einem von Anfang an starken Anstieg 81A wird ein Intensitätsmaximum erreicht, ab dem die Intensität wieder abfällt. Bei niedrigen Intensitäten setzt ein langsam auslaufender Abfall 81B (auslaufender Abfall geringer Steigung) ein. Man erkennt die prinzipielle Umkehrung der longitudinalen Intensitätsverteilungen 61 und 81 der Figuren 4 und 8, bei der die "harte Grenze) am Ende durch einen "harten Anfang" ersetzt wird.

Für einen derartigen Quasi-Bessel-Strahl wird das Durchstrahlen eines Axicon mit einem Laserstrahl mit einem einfallenden Gaußschen Strahlprofil 83 zu sich überlagernden Strahlbereiche 85A, 85B führen, deren Intensitätsgewichtung zur realen longitudinalen Intensitätsverteilung 81 führt (zuerst Überlagerung der Intensitäten des Zentralbereichs des Gaußschen Strahlprofils 83, danach Überlagerung der niedrigen (äußeren) Intensitäten des Gaußschen Strahlprofils 83). Zur Erläuterung sind wiederum schematisch Intensitätsverläufe 87A und 87B strahlabwärts der Fernfeldoptik 79 und Intensitätsverläufe 87A' und 87B' strahlaufwärts der Fokuszone 77 angedeutet.

Bevor im Folgenden verschiedene beispielhafte Konfigurationen von optischen Systemen erläutert werden, die das Konzept der virtuellen Intensitätsüberhöhung umsetzen, wird noch einmal auf Fig. 3, und insbesondere das transversales Ausgangsintensitätsprofil 51 an der Nahfeldoptik 33B, Bezug genommen. Im Bereich des Ausgangsintensitätsprofils 51 kann beispielsweise mit einer Blende 50 Einfluss auf die zur Fokuszone beitragenden Anteile genommen werden. Je nach Orientierung und Breite der Blendenöffnung und allgemein der Blendenform kann eine Modifikation der longitudinale Intensitätsverteilung 61 in der langgezogenen Fokuszone 7 bewirkt und sogar eingestellt werden. Bei einem rotationssymmetrischen - wie in den Figuren 3 und 7 gezeigten - Ausgangsintensitätsprofil 51, bzw. bei einem entsprechend symmetrischen Phasenverlaufs in Fig. 14, kann eine Drehung der Blende um die Strahlachse zu einer Drehung der Orientierung der Modifikation in der Fokuszone 7 bewirken.

Eine derartige mechanische Steuerung einer Blende 50 kann z.B. alternativ durch ein Drehen eines bereits angesprochenen und in Verbindung mit den nachfolgenden Figuren weiter erläuterten fest eingeschriebenen DOEs vorgenommen werden,oder elektronisch durch zeitabhängiges Einstellen eines programmierbaren DOE umgesetzt werden. Entsprechend weisen die für ein entsprechendes Lasersschneiden und insbesondere Nachführens vorgesehenen Laserbearbeitungsanlagen Rotationsmechaniken und/oder elektrische Steuerungsvorrichtungen auf. Wie schon angesprochen kann dabei die Ausgangsintensität oder das optische Element eines inversen wie auch eines regulären Quasi-Bessel-Strahls modifiziert bzw. gedreht werden.

Dies betrifft insbesondere die im Folgenden erläuterten Systeme, die Strahlformungselemente in Transmission oder Reflexion umfassen, wobei die Aufprägung des Phasenverlaufs insbesondere refraktiv, reflektiv oder diffraktiv erfolgt. Für bereits beschriebene Komponenten wie das Lasersystem 11 wird auf die vorausgehende Beschreibung verwiesen.

Mit Blick zu den Abständen der Strahlformungsoptik 73 von der Nahfeldoptik können ähnlich den Überlegungen für das virtuelle Bild folgende Werte angenommen werden. Bei einem realen Strahlprofil würde man typisch die Mitte des abzubildenden realen Strahlprofils der Länge I in die eingangsseitige Brennweite der Fernfeldoptik legen. Ein typischer Abstand wäre dann mindestens f_{N} + 2f_{F} + I/2 = (1 + 2X) f_{N} + I/2, also größer als f_{N} + 2f_{F}, oder, anders ausgedrückt, größer als der Abstand zwischen den Optiken plus f_{F}.

Fig. 9 zeigt eine refraktive Strahlformung mithilfe eines Hohlkegel-Axicons 131A. Dieses erzeugt ein virtuelles inverses Quasi-Bessel-Strahlprofil 153A strahlaufwärts des Hohlkegel-Axicons 131A. Dieses wird in Fig. 9 durch gestrichelte Linien angedeutet, eine reale Intensitätsüberhöhung liegt in diesem Bereich nicht vor. Ferner ist in der Ausführung gemäß Fig. 9 die Fernfeldoptik in Strahlausbreitungsrichtung strahlabwärts des Hohlkegel-Axicons 131A als Plankonvexlinse 133A ausgeführt. Die Nahfeldoptik 33B bewirkt die Fokussierung des Laserstrahls in die Fokuszone 7, so dass dem Laserstrahl das virtuelle inverse Quasi-Bessel-Strahlprofil 153A als virtuelles optisches Bild der Fokuszone 7 zugeordnet ist.

Fig. 10 zeigt eine Ausführungsform mit einem Hohlkegel-Axicon-Linse-System 131B, das als refraktives Strahlformungselement verwendet wird. Dabei ist die Fernfeldoptik in das Strahlformungselement als konvexe Linsenfläche 133B integriert, die auf der Eingangsseite des Hohlkegel-Axicons angeordnet ist. Dieser Aufbau erzeugt ebenfalls ein virtuelles inverses Quasi-Bessel-Strahlprofil 153B.

Fig. 11 verdeutlicht eine Ausführungsform mit einem reflektiven Strahlformungselement, insbesondere einem reflektiven Axicon-Spiegel-System 131C. Eine hochreflektive Oberfläche des Strahlformungselements ist derart geformt, dass die strahlformende Eigenschaft eines reflektiven Axicons mit der fernfeldbildenden Komponente eines fokussierenden Hohlspiegels kombiniert ist. Entsprechend erfüllt das Axicon-Spiegel-System 131C sowohl die Funktionen der Strahlformung als auch die der Fernfeldoptik. Ein virtuelles inverses Quasi-Bessel-Strahlprofil 153C ist rückseitig des Axicon-Spiegel-Systems 131C angedeutet, also in einem Bereich, der nicht vom Laserstrahl 3 durchlaufen wird.

Wie in Fig. 11 ferner gezeigt wird der Laserstrahl 3 des Lasersystems 11 nach der Strahlanpassungseinheit 13 in das optische System 1 durch einen Umlenkspiegel 140 eingekoppelt. Der Umlenkspiegel 140 ist beispielsweise auf der optischen Achse zwischen dem Axicon-Spiegel-System 131C und der Nahfeldoptik 33B angeordnet und lenkt den Strahl auf das Strahlformungselement 131C. In einigen Ausführungsformen kann der Umlenkspiegel beispielsweise zentral durchbohrt sein, um möglichst wenig Licht auf den optisch eventuell mit Fehlern behafteten zentralen Bereich des Strahlformungselements 131C zu lenken. Ergänzend zu den nachfolgend in Zusammenhang mit den Figuren 17 und 18 beschriebenen Aspekt der Filterung sei schon hier vermerkt, dass der Umlenkspiegel 140 zugleich einen nicht erwünschten zentralen Strahlanteil blockt, so dass dieser nicht durch die Nahfeldoptik 33B fokussiert wird.

Die Figuren 12 und 13 zeigen Ausführungsformen des optischen Systems mit digitalisierten Strahlformungselementen. Die Digitalisierung kann dabei die Verwendung von diskreten Werten für die Phasenschiebung und/oder die laterale Struktur (beispielsweise Pixelstruktur) betreffen. Die Nutzung von räumlichen Lichtmodulatoren (SLMs) ist eine von mehreren verschiedenen Möglichkeiten, die Strahlformung über programmierbare oder auch fest eingeschriebene diffraktive optische Elemente (DOE) umzusetzen.

Diffraktive optische Elemente erlauben neben der leichten Erzeugung eines oder mehrerer virtueller Strahlprofile, z.B. entsprechend der Phasenaufprägung eines oder mehrerer Hohlkegel-Axicon, die gezielte Modifikation beispielsweise zur Homogenisierung der longitudinalen Intensitätsverteilung. Dabei können beispielsweise Abweichungen in der Phase im Bereich von kleiner gleich 50%, z.B. von kleiner gleich 20 % oder von kleiner gleich 10 % bzgl. beispielsweise der Hohlkegel-Axicon-Phase (und damit von einem inversen Quasi-Bessel-Strahl) eingesetzt werden. Allgemein erlauben SLMs sehr feine Phasenänderungen bei einer lateral gröberen Auflösung, im Gegensatz zu beispielsweise lithographisch hergestellten, fest eingeschriebenen DOEs. Fest eingeschriebene DOEs weisen z.B. planparallele Stufen auf, deren Dicke die Phase bestimmt. Dabei erlaubt die lithographische Herstellung eine hohe laterale Auflösung. Binäre Stufen können reale und virtuelle Strahlprofile hervorrufen. Erst eine Anzahl von mehr als zwei Phasenhüben kann eine Differenzierung im Sinne einer Vorzugsrichtung für das virtuelle Strahlprofil hervorrufen. So können vier oder acht oder mehr Phasenhübe eine effiziente Strahlformung bzgl. des virtuellen Strahlprofils erlauben. Allerdings kann die Diskretisierung Nebenordnungen bewirken, die beispielsweise herausgefiltert werden können. Herstellungsverfahren für kontinuierliche Mikrostrukturen umfassen beispielsweise die Analog-Lithographie oder die Nanoimprint-Lithographie.

Hierin wird das strukturelle, die Phasenaufprägung bewirkende und flächig ausgebildete Element eines diffraktiven optischen Strahlformungselements, sei es ein einstellbarer SLM oder ein fest eingeschriebenes DOE, als Phasenmaske bezeichnet. Je nach Ausführung des DOE kann es in Transmission oder in Reflexion verwendet werden, um einem Laserstrahl einen Phasenverlauf aufzuprägen.

In Fig. 12 wird ein räumlicher Lichtmodulator 31A in Reflexion zur Phasenaufprägung eingesetzt. Beispielsweise basiert der räumliche Lichtmodulator 31A auf einem "liquid crystal on silicon" (LCOS), der eine für die einzelnen Pixel programmierbare Phasenverschiebung ermöglicht. Räumliche Lichtmodulatoren können ferner auf Microsystemen (MEMS), Micro-Opto-Electro-Mechanischen Systemen (MOEMS) oder Microspiegel-Matrix-Systemen basieren. In SLMs können die Pixel beispielsweise elektronisch angesteuert werden, um eine spezielle Phasenausprägung über das transversale Eingangsintensitätsprofil zu bewirken. Die elektronische Ansteuerbarkeit ermöglicht zum Beispiel das online-Einstellen von Phasen und damit das Anpassen der Fokuszone 7, z.B. in Abhängigkeit des zu bearbeitenden Materials oder in Reaktion auf Schwankungen des Lasers. In der Anordnung gemäß Fig. 12 kann beispielsweise die Funktion eines diffraktiven Axicons zur Erzeugung eines virtuellen inversen Quasi-Bessel-Strahlprofils mit der fernfeldbildenden Wirkung einer Fernfeldoptik durch die Phasenschiebung des räumlichen Lichtmodulators 31A kombiniert werden. Alternativ kann als strahlformendes Element 31A ein fest eingeschriebenes reflektives DOE eingesetzt werden.

Fig. 13 ist eine schematische Darstellung eines auf einem DOE 31B basierenden optischen Systems, bei dem die Phasenaufprägung fest in das DOE 31B eingeschrieben ist. Das DOE 31B wird in diesem Fall in Transmission verwendet. Wie in Fig. 12 ist sowohl die Phasenschiebung, die beispielsweise zu einem virtuellen Quasi-Bessel-Strahlprofil führt, als auch die fokussierende Eigenschaft der Fernfeldoptik im DOE 31B zusammengefasst.

Die optischen Systeme der Figuren 9 bis 13 können zu Ausgangsintensitätsprofilen führen, die inversen Quasi-Bessel-Strahlprofilen entsprechen und denen virtuelle optische Bilder zugeordnet sind. Das optische System der Fig. 7 sowie analoge Aufbauten zu den Figuren 9 bis 13, beispielsweise mit regulärem, in Transmission verwendetem Axicon können zu Ausgangsintensitätsprofilen von (regulären) Quasi-Bessel-Strahlprofilen führen. Für die Ausnutzung von auf durch lokale Effekte basierende Schneidverfahren können insbesondere inverse Quasi-Bessel-Strahlprofile und reguläre Quasi-Bessel-Strahlprofile ähnlich eingesetzt werden, wobei natürlich die hierin offenbarten Unterschiede zu berücksichtigen sind.

Fig. 14 verdeutlicht ein Beispiel eines Phasenverlaufs 243, wie er z.B. im DOE 31B vorgesehen werden kann. Der Phasenverlauf 243 ist rotationssymmetrisch. Man erkennt ringförmige Phasenverteilungen, deren Frequenz in radialer Richtung moduliert ist. Die Ringe weisen auf die Erzeugung eines rotationssymmetrischen virtuellen Quasi-Bessel-Strahlprofils hin. Die Frequenzmodulation weist auf die Integration der Phasenkomponente der Fernfeldoptik in den Phasenverlauf zur Strahlformung hin. In Fig. 14 sind die Phasen im Bereich von ±π angedeutet. In alternativen Ausführungsformen können auch diskrete wie binäre oder mehrstufige (beispielsweise 4 oder mehr Level im Bereich der Phasenschiebung von 0 bis 2π) Phasenverläufe in DOE-Phasenmasken umgesetzt werden.

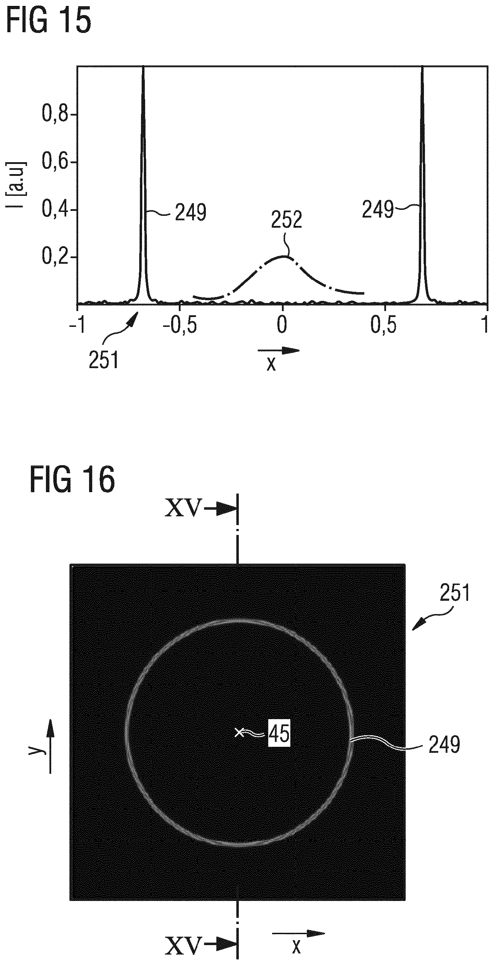

Die Figuren 15 und 16 verdeutlichen beispielhaft ein Ausgangintensitätsprofil 251 im Intensitätsquerschnitt (Fig. 15) und in der 2D-Aufsicht (Fig. 16). Man erkennt ein ringförmig um die Strahlachse 45 verlaufendes Intensitätsmaximum 249. Es liegt kaum Intensität im Strahlzentrum vor.

In einigen Ausführungsformen wird die Umwandlung in den inversen Quasi-Bessel-Strahl nicht vollständig erfolgen, so dass entsprechend ein nicht-phasenmodulierter Reststrahl, beispielsweise mit einem Gaußschen Strahlprofil, dem ringförmigen Intensitätsprofil überlagert wird. Fig. 15 deutet schematisch einen derartigen nicht-phasenmodulierten Strahlanteile 252 strich-punktiert an.

Das Maximum 249 der Intensitätsverteilung in Fig. 15 ist ein Beispiel für ein lokales Intensitätsmaximum, mit dem ein ursprüngliches Eingangsintensitätsprofil (z.B. ein Gaußsches Strahlprofil) im Bereich des transversalen Ausgangsintensitätsprofils modifiziert wurde. Die Rotationssymmetrie der Ringstruktur ist durch die Rotationssymmetrie des inversen Quasi-Bessel-Strahlprofils bedingt. In alternativen Ausführungsformen kann sich das lokale Intensitätsmaximum auf einen azimutalen Winkelbereich beschränken. Ferner kann eine Überlagerung von azimutal beschränkten und/oder ringförmigen lokalen Maxima vorliegen.

Bei der Verwendung eines refraktiven Hohlkegel-Axicons (siehe Figuren 9 und 10) zur Erzeugung eines inversen Quasi-Bessel-Strahl-förmigen Ausgangsintensitätsprofils können bei einer nicht perfekten Spitze des Axicons unerwünschte Strahlanteile unter unerwünschten Winkeln erzeugt werden. Auch bei diffraktiven Strahlformungselementen können nicht erwünschte Strahlanteile auftreten. Beispielsweise können ein nicht zu vernachlässigender nicht-phasenmodulierter Strahlanteil oder zusätzliche Beugungsordnungen im Fernfeld des Laserstrahls vorliegen.

Die hierin offenbarten optischen Systeme erleichtern aufgrund der Nutzung der Fernfeldkomponente das Einbringen und die Formauswahl von Filtern, um derartige störende Strahlanteile herauszufiltern. Insbesondere lassen sich diese unerwünschten Strahlanteile im Bereich der Fourier-Ebene leicht von den erwünschten Strahlanteilen (Nutzstrahl) separieren.

Bezugnehmend auf den nicht-phasenmodulierten Strahlanteil 252 der Fig. 15 zeigt Fig. 17 ein beispielhaftes optisches System, das auf dem in Fig. 3 dargestellten optischen System 1 beruht. Allerdings wird zusätzlich eine Filterung des nicht-phasenmodulierter Anteils im Bereich der Fourier-Ebene des Abbildungssystems 33 vorgenommen. Beispielhaft wird in Fig. 17 eine räumliche Filter-Einheit 220 strahlaufwärts der Nahfeldoptik 33B angedeutet.

Die Filter-Einheit 220 weist einen zentralen Bereich um die Strahlachse 45 auf, der beispielsweise die in Fig. 15 angedeutete Gaußförmige Intensitätsverteilung des nicht-phasenmodulierten Strahlanteils 252 blockt. Die Filter-Einheit 220 kann zusätzlich radial weiter außen liegende Abschnitte zur Blockierung höherer Ordnungen der Beugung durch das DOE oder den SLM aufweisen.

Allgemein ist somit die Filter-Einheit 220 zur Unterdrückung von nicht-phasenmodulierten Grundmoden und höheren Beugungsordnungen sowie von Streustrahlung der verschiedenen hierin offenbarten refraktiven, reflektiven oder diffraktiven Strahlformungselemente vorgesehen. Bei rotationssymmetrischen Ausgangsintensitätsprofilen ist üblicherweise auch die Filter-Einheit rotationssymmetrisch ausgebildet. In einigen Ausführungsformen können nur einzelne Abschnitte der Filter-Einheit 220 oder gar keine Filterung vorgesehen werden.

Diffraktive Strahlformungselemente erlauben einen weiteren Ansatz zur Unterdrückung des nicht-phasenmodulierten Strahlanteils. Dabei wird gezielt ein zusätzlicher Phasenbeitrag zur Ablenkung des phasenmodulierten Strahlanteils aufgeprägt.

Fig. 18 zeigt beispielsweise ein optisches System, bei dem das diffraktive optische Element 31 zusätzlich mit einem linearer Phasenbeitrag versehen wird. Der lineare Phasenbeitrag führt zu einer Ablenkung 230 des phasenmodulierten Strahls 203A. Der nicht-phasenmodulierten Strahlanteil 203B wird nicht abgelenkt und trifft beispielsweise auf eine Filtereinheit 222.

Fig. 19 zeigt eine weitere Ausführungsform eines optischen Systems, das die Nutzung der Fernfeldkomponente zusätzlich für die Implementierung eines Scan-Ansatzes ausnützt. Allgemein erlaubt es ein Scan-System, die Fokuszone 7 in einem gewissen Bereich zu verfahren. Allgemein ist es durch die Separation der Strahlformung von der Nahfeldfokussierung möglich, insbesondere für die Volumenabsorption günstige telezentrische Scan-Ansätze vorzusehen. In einigen Ausführungsformen lassen sich ferner sowohl Ort als auch Winkel einstellen. Entsprechend können es derartige Scanner-Systeme erlauben, feine Konturen in ein Werkstück zu schreiben.

In der Ausführung der Fig. 19 ist ein Scanner-Spiegel 310 in der bildseitigen Brennebene einer Nahfeldoptik 333B angeordnet. Der Scanner-Spiegel 310 lenkt den Laserstrahl im Bereich der Ausgangsintensitätsverteilung auf die seitlich angeordnete Nahfeldoptik 333B ab. Die Ablenkung in der Fourier-Ebene bewirkt, dass die Ausbreitungsrichtung im Werkstück trotz Ortsversatz erhalten bleibt. Der Scann-Bereich selbst wird durch die Größe der Nahfeldoptik 333B bestimmt.

Ist der Scanner-Spiegel 310 nicht genau in der Brennebene der Nahfeldoptik 333B angeordnet oder lässt er sich bezüglich dieser bewegen, so kann dadurch eine Ausrichtung der langgezogenen Fokuszone, insbesondere eine Winkelabweichung aus der Z-Richtung in Fig. 2, eingestellt werden.

Fig. 20 erläutert beispielhaft anhand einer Konfiguration gemäß dem in Fig. 13 gezeigten optischen Systems die zugrunde liegenden Abbildungseigenschaften. Das optische System umfasst ein Strahlformungselement 31, das auch als Fernfeldoptik fungiert und somit durch eine Brennweite f_{F} charakterisiert wird. Das optische System umfasst ferner die Nahfeldoptik 33B, die durch die Brennweite f_{N} charakterisiert wird. In Fig. 20 fallen die Brennebenen der Fernfeldoptik und der Nahfeldoptik aufeinander. Entsprechend ist in Fig. 20 nur eine Brennebene 340 gestrichelt angedeutet. In dieser Konfiguration der überlappenden Brennebenen bildet das Abbildungssystem beim Einfall einer planen Wellenfront allgemein eine virtuelle Strahlform 253 auf die langgezogene Fokuszone 7 ab, beispielsweise ein inverses Quasi-Bessel -Strahlprofil, inverse modulierte oder homogenisierte Quasi-Bessel-Strahlprofile als Beispiele für inverse Quasi-Bessel/Airy-Strahl-artige Strahlformen.

Jedoch müssen die Brennebenen nicht immer übereinander liegen. Zum Beispiel kann das Abbildungssystem auf eine vorgegebene Strahldivergenz angepasst sein, der Laserstrahl 3 aber mit einer anderen Divergenz einfallen. In solchen Fällen ist der langgezogenen Fokuszone 7 immer noch ein virtuelles vor dem Strahlformungselement liegendes optisches Bild zugeordnet, aber es muss nicht eine perfekte Abbildung vorliegen. Eine ähnliche Situation kann sich bei einer bewussten Fehljustage des Abbildungssystems, beispielsweise in Zusammenhang mit einer Scanner-Vorrichtung, ergeben.

Fig. 20 verdeutlicht ferner die Begriffe "Fernfeldoptik" und "Nahfeldoptik". Die Fernfeldoptik erzeugt das Fernfeld des virtuellen Strahlverlaufs 253 im Bereich der Fernfeldbrennweite f_{F}. Wie zuvor schon erläutert kann die Fernfeldoptik in ihrer Funktion verteilt sein, z.B. aus einem oder mehreren vor und/oder nach dem Strahlformungselement und von diesem beabstandet angeordneten Komponenten gebildet werden und/oder in das Strahlformungselement integriert sein. Die Nahfeldoptik fokussiert mit der kleineren Brennweite f_{N} den Strahl in Richtung Werkstück und bildet so die Fokuszone aus. Somit liegen im Bereich der Brennebene 340 sowohl das Fernfeld des virtuellen Strahlprofils 53 bezüglich der Fernfeldoptik als auch das Fernfeld der Fokuszone 7 bezüglich der Nahfeldoptik 33B vor. Auch bei einer nicht perfekten Abbildung (z.B. nicht aufeinander liegende Brennebenen von Fern- und Nahfeldoptik) kann im Wesentlichen ein akzeptabler Intensitätsverlauf in der Fokuszone vorliegen, da sich das auf die Nahfeldoptik treffende Intensitätsprofil nur wenig ändert.

Beispielsweise im Fall einer inversen Quasi-Bessel-Strahlform bewirkt die erste Fokussierung durch die Fernfeldoptik im Abbildungssystem eine Anpassung der Ringgröße auf der Nahfeldoptik. Insofern hat die Fernfeldoptik eine fokussierende Wirkung auf den Ringdurchmesser, welcher wie in den Figuren angedeutet, bis zu einer Art Zwischenfokus kleiner wird.

Fig. 21 erläutert den Strahlverlauf in einem optischen System für den Fall, dass ein konvergierender Laserstrahl 3' auf das Strahlformungselement 31 trifft. Der phasenmodulierte Anteil 303A des Laserstrahls wird auf die langgestreckte Fokuszone 7 fokussiert. Aufgrund der Konvergenz des einfallenden Laserstrahls 3' (und evtl. aufgrund einer separaten fokussierenden Fernfeldoptik oder einer Integration in den Phasenverlauf des Strahlformungselements 31) wird der nicht-phasenmodulierten Anteil 303B (strich-punktiert) während der Propagationslänge Dₚ sich weiter verjüngen und auf einen zentralen Bereich der Nahfeldoptik 33B treffen. Dadurch bildet sich ein Fokus 350 für den nicht-phasenmodulierten Strahlanteil 303B aus, der näher an der Nahfeldlinse 33B liegt als die langgezogene Fokuszone 7. Der nicht-phasenmodulierte Anteil wird nach dem Fokus 350 stark divergieren, so dass im Werkstück hinsichtlich des nicht-phasenmodulierten Strahlanteils 303B nicht mehr die Intensitäten erreicht werden, die zu einer nichtlinearen Absorption führen. In einer derartigen Ausgestaltung kann somit auf eine Filterung des nicht-phasenmodulierten Strahlanteils 303B verzichten werden.

Nichtsdestotrotz kann im Bereich des Fokus 350 (oder sogar zwischen Fernfeld- und Nahfeldoptik, wenn der Strahl stark anfokussiert wird) eine räumlich lokalisierte Filter-Einheit vorgesehen werden, um den nicht-phasenmodulierten Strahlanteil 303B aus der Wechselwirkungszone und dem Werkstück herauszuhalten.

Hinsichtlich weiterer Ausgestaltungen wird insbesondere auf die Prioritätsanmeldung DE 2014 116 958.1 der gleichen Anmelderin mit Anmeldetag 19. November 2014 verwiesen. So können eine oder mehrere zusätzliche Linse strahlaufwärts der Strahlformungseinheit zur Strahldivergenzanpassung angeordnet werden
Diffraktive optische Elemente erlauben eine digitalisierte und z.B. pixelbasierte Phasenanpassung über das Eingangsintensitätsprofil. Ausgehend von dem Intensitätsverlaufs einer inversen Quasi-Bessel-Strahlform kann beispielsweise ein longitudinales Flat-Top-Intensitätsprofil in der Fokuszone 7 erzeugt werden. Dazu wird der Phasenverlauf im Strahlformungselement derart beeinflusst, dass Intensitätsbeiträge im Ausgangsintensitätsprofil aus dem das Intensitätsmaximum und den Ausläufern des Bessel-Strahls formenden Bereich herausgenommen und durch eine Phasenänderung derart radial umverteilt werden, dass bei der späteren Fokussierung durch die Nahfeldoptik 33B der Anstiegsbereich 61A und der Abfallbereich 61B verstärkt bzw. weiter ausgedehnte Ausläufer (z.B. durch Schieben von Leistung aus den Ausläufern in den homogenisierten Bereich) weitgehend vermieden werden.

Modifikationszonen bilden sich bei Überschreiten der Schwelle im Wesentlichen immer über den gleichen Ausdehnungsbereich in Z-Richtung im Werkstück 9. Dies beruht auf der nahezu konstanten Intensität mit nur einem kurzen Anstieg und Abfall. Mit zunehmender Energie wird allerdings nicht nur die Stärke sondern auch die laterale Ausdehnung der Modifikationszonen größer.

Ferner können allgemein ergänzende Phasenaufprägung im Bereich der bildseitigen Brennebene der Nahfeldoptik 33B wie laterale und/oder longitudinale Multispotphasenaufprägungen vorgenommen werden. Insbesondere ist die Ausbildung einer beschleunigten Airy-Strahlartigen Strahlform möglich.

In einigen Ausführungsformen kann ein optisches System zum Beispiel derart ausgebildet werden, dass sowohl eine reale Intensitätsüberhöhung gemäß Fig. 7 als auch eine virtuelle Intensitätsüberhöhung gemäß Fig. 3 erzeugt wird. Auf diese Weise kann die longitudinale Ausdehnung von Modifikationszonen erweitert werden.

Ein inverser Quasi-Bessel-Strahl kann mit den hierein beschriebenen refraktiven, reflektiven und diffraktiven optischen Systemen erzeugt werden, beispielsweise mit den (Hohlkegel-)Axicon-Systemen und den DOE-Systemen. Ein DOE-System kann beispielsweise auf dem in Fig. 14 gezeigten Phasenverlauf einer Phasenmaske basieren, in dem neben der für den inversen Quasi-Bessel-Strahl benötigen Phase ein fokussierender Phasenbeitrag vorgesehen ist.

Üblicherweise wird ein Laserstrahl mit einem rotationssymmetrischen Gaußschen Strahlprofil auf das Strahlformungselement eingestrahlt. Ein Gaußsches Strahlprofil weist einen durch das Strahlzentrum Gaußförmig verlaufenden transversalen Amplitudenverlauf auf.

Direkt nach dem Strahlformungselement liegt aufgrund der reinen Phasenmaske noch ähnlich dem Gaußschen Strahl ein Gaußsches Strahlprofil und ein Gaußscher Amplitudenverlauf vor. Ein scharf begrenztes Loch bildet sich dann allerdings aufgrund der aufgeprägten zur Divergenz führenden Phase sofort aus, das immer größer wird. Gleichzeit formt sich ein Ringbereich mit hoher Amplitude aus.

Der Ringbereich ist nach innen scharf begrenzt, was man durch eine Stufenform in der radialen Amplituden-/Intensitätsverteilung erkennt. Eine Flanke der rundumlaufenden Stufe zeigt zur Strahlachse/zum Strahlzentrum. Mit zunehmenden z-Werten wandern die gegenüberliegenden Abschnitte der Flanke auseinander, d.h. das zentrale scharf abgegrenzte Loch nimmt schnell im Durchmesser zu (D1 < D2).

In der radialen Amplituden-/Intensitätsverteilung fällt der Ringbereich nach außen mit zunehmenden z-Werten immer schneller ab. Im Fernfeld, d.h. beispielsweise in den überlappenden Brennebenen der aufgeprägten fokussierenden
(Fernfeld-) Wirkung und der Nahfeldoptik, hat sich ein scharfer Ring im Strahlprofile ausgebildet, der anschließend wieder auseinanderläuft. Dabei bildet sich nun eine scharfe Kante auf der Außenseite aus, d.h. die Stufe zeigt nun mit ihrer Flanke nach außen.

Dieses prinzipielle Verhalten der Strahlprofile und Amplitudenverteilungen erlaubt einen Test eines optischen Systems mit einem Gaußschen Eingangsstrahl, bei dem sich zuerst ein Loch mit einer steiler nach innen zeigenden Flanke ausbildet und damit zu einem lokalen Maximum außerhalb der Stahlachse im Fernfeld führt. Ein Abbilden der Strahlprofile aus dem Inneren Bereich als auch im Bereich der Fokuszone kann das entsprechende Strahlprofil kenntlich machen. Die Nutzung des optischen Systems ist dabei nicht zwangsweise auf Gaußsche Strahlen eingeschränkt. Ferner ist zu bemerken, dass die Figuren sich aus Berechnungen für den idealen Fall ergeben. Wird z.B. ein nicht ideales DOE eingesetzt, kann der angesprochene nichtphasenmodulierte Anteil oder höhere Ordnungen oder ein Teil eines realen Quasi-Bessel-Strahls (z.B. wie bei einer binären Maske) auf der Strahlachse liegen und das "Loch" mit Intensität auffüllen.

Ein inverser Quasi-Bessel-Strahl kann somit im Amplitudenverlauf und damit im Intensitätsprofil insbesondere eine Stufe mit einer steilen Flanke aufweisen. Diese kann insbesondere im Bereich nahe dem Strahlformungselement nach innen weisen, beispielsweise im Bereich bis zur Hälfte des Fernfeldes und insbesondere im Bereich einer Fokuslänge der Fernfeldoptik strahlabwärts des Strahlformungselements. Für einen "einfachen" inversen Quasi-Bessel-Strahl ohne Untergrund auf der Strahlachse erhöht sich im Bereich der Stufe die Amplitude/Intensität von nahe Null auf das Maximum des phasenmodulierten Strahlanteils. Dabei ist die Ausbildung der Stufe (im phasenmodulierten Strahlanteil) auch für einen beispielsweise einfallenden Strahl mit im Wesentlichen konstanter radialer Intensität (radialer Flat-top) über das Strahlformungselement gegeben, da die Stufe im Wesentlichen das Strahlzentrum betrifft.

Die zuvor beschriebene Strahlcharakteristik strahlaufwärts der Fernfeldbrennebene ist nach dieser bis zur Fokuszone radial invertiert. Nach der Fokuszone kehrt er sich radial noch einmal um, so dass sich dort - ohne Wechselwirkung mit einem zu bearbeitenden Material - wiederum eine Stufenform einstellen kann. Die Strahlprofile können beispielsweise durch Abgreifen des Strahls an entsprechender Stelle analysiert werden, sei es im optischen System nach dem Strahlformungselement oder vor oder nach der Fokuszone. Insbesondere bei Anordnungen, die ein Blocken eines zentralen Störstrahls erlauben, kann so vor und nach dem Fokusbereich der Intensitätsverlauf der phasenmodulierten Strahlanteile analysiert werden.

In diesem Zusammenhang ist ferner auf die am 19. November 2014 von der Anmelderin eingereichte deutsche Patentanmeldung DE 10 2014 116 957.3 mit dem Titel "Optisches Strahlformungselement" verwiesen, die insbesondere auf optische Systeme zur Strahlformung eingeht. Wie darin allgemein erläutert wird, können unter anderem inverse Quasi-Bessel-Strahl-artige Strahlen zur Lasermaterialbearbeitung eingesetzt werden.

Die hierein offenbarten Konzepte ermöglichen ein Beeinflussung der Fokuszone in longitudinaler und lateraler Richtung. Insbesondere der Einsatz eines DOE als Beispiele für eine flächig ausgebildete Phasenmaske ermöglicht eine gleichzeitige Aufprägung von mehreren Phasenverläufen auf den Laserstrahl 3. Zur Erzeugung eines inversen Quasi-Bessel/Airy-Strahl-förmigen Strahls ist dabei mindestens einem der Phasenverläufe ein virtuelles optisches Bild zugeordnet, das in einen langgezogenen Fokusbereich zum Ausbilden einer Modifikation im zu bearbeitenden Material durch den Laserstrahl abbildbar ist. Liegen nun zwei derartige Phasenverläufe vor, die zumindest zu teilweise überlappenden Fokuszonen oder sich zumindest beeinflussenden Fokuszonen führen, lässt sich die Geometrie der Modifikation(en) eines zu bearbeitenden Materials - erzeugt durch einen Laserpuls oder durch eine Gruppe von Laserpulsen - formen.

Allgemein können derartige Phasenverläufe in einer transversalen Fernfeldintensitätsverteilung (Ausgangsintensitätsverteilung) eine oder mehrere Ringstrukturen, eine auf einen azimutalen Winkelbereich beschränkte Ringsegmentstruktur (siehe z.B. Fig. 28) und/oder ein oder mehrere lokale Maxima (siehe z.B. Fig. 33) ausbilden.

Mehrere derartige Phasenverläufe können auf verschiedene Arten aufgeprägt werden. Am anschaulichsten ist eine Zuordnung von Segmenten auf der Phasenmaske (siehe z.B. Figuren 26). Diese Segmente können separate flächige Bereichen sein, wobei die separaten Bereiche z.B. radial und/oder azimutal aneinander angrenzen können und in den Grenzbereichen beispielweise abrupt oder gewichtet ineinander übergehen können. Ferner können die Segmente zumindest teilweise ineinander verschachtelt sein (siehe z.B. Fig. 31). Schließlich kann der von einem (Flächen-)Abschnitt der flächig ausgebildeten Phasenmaske hervorgerufene Phasenhub eine Kombination von Phasenbeiträgen sein, die jeweils einem derartigen Phasenverlauf zugeordnet sind. Neben den im Folgenden beschriebenen DOE-Konfigurationen können z.B. auch entsprechend zusammengesetzte Hohlkegel-Axicons oder reflektive Axicons (hinsichtlich einem inversen Besslstrahl) und Axicons allgemein (hinsichtlich regulären Bessel-strahlen) ein flächiges Segmentieren nachbilden. In diesem Sinne sind die nachfolgenden Beispiele zur Erläuterung möglicher Konzepte zu verstehen, wobei die Konzepte auch mit anderen der zuvor angesprochenen und hierein beschriebenen Phasenaufprägungsansätzen umgesetzt werden können. Allgemein können mehrere optische Elemente in einem DOE zusammengefasst werden, indem z.B. die Transmissionsfunktion aller Elemente bestimmt wird (z.B. Hohlkegel-Axicon(s) und Linse(n); Addieren der einzelnen Phasenfunktionen (exp(-1i (phi1+phi2+...)). Zusätzlich oder alternative kann eine Art Superposition der einzelnen Transmissionsfunktionen erfolgen. Zur Bestimmung von Phasenverläufen wurde eingangs auf die Veröffentlichung von Leach et al. verwiesen.

Bei Segmenten, die rotationssymmetrisch sind, ist auch die Intensitätsverteilung rotationssymmetrisch und jedes Interferenzmaximum entspricht einem Volumenbereich, in dem die Intensität/Fluenz oberhalb einer Schwellenintensität/Fluenz liegen kann.

Die im folgenden beschriebene Aspekte basieren auf der eingangs angesprochenen Erkenntnis, dass durch eine gezielte Strahlformung, beispielsweise mit einem diffraktiven optischen Element (DOE), die im Material durch nichtlineare Absorption entstehende Dichte freier Elektronen maßgeschneidert werden kann. Entlang der dadurch entstehenden Modifikationen kann eine Rissbildung gezielt geführt werden, welche dann zum Trennen des Werkstücks führt. Ferner wurde erkannt, dass sich reguläre und inverse Besselstrahl-Arten überdies insbesondere für die Verwendung von Blenden zur gezielten Strahlformung anbieten, da diese ein Ringfernfeld für das Eingreifen der Blende aufweisen.

Die Rissbildung kann nach Einbringen aller eine Kontur begrenzenden Modifikationen durch das Aufbringen einer insbesondere thermisch oder mechanisch induzierten Spannung erfolgen bzw. ausgelöst werden. Je nach Parameterwahl des Lasers und je nach Material kann die Rissbildung bereits während des Einschreibens der Modifikationen stattfinden. Bei der Initiierung der Rissbildung während der Modifikationserzeugung wird der Riss vorzugsweise der aktuell erzeugten Modifikation nachgeführt, d.h. der Riss bildet sich entgegen der Vorschubrichtung.

So wurde insbesondere erkannt, dass zur Ausbildung der Vorzugsrichtung zum Trennen transparenter Materialien eine von der Rotationssymmetrie abweichende Intensitätsverteilung eine Risserzeugung gleichzeitig oder in einem nachfolgenden Schritt entlang der eingestellten Vorzugsrichtung erfolgen kann. In anderen Worten, die Intensitätsverteilung ist in der XY-Ebene, d.h. in der Ebene senkrecht zur Strahlpropagationsrichtung, nicht mehr rotationssymmetrisch, sondern z.B. ellipsenähnlich. Ein Intensitätsmaximum in der Fokuszone ist von einem zugehörigen Bereich ansteigende erhöhter Intensität umgeben, wobei beides gemeinsam hierein insbesondere mit Blick auf das Verhalten zur Rissbildung allgemein als Intensitätsmaximum einer Fokuszone verstanden wird, und das Intensitätsmaximum in diesem Zusammenhang also nicht als auf den Maximalwert selbst reduziert verstanden werden soll.

Allgemein wird von einer Fokuszone ausgegangen, die eine langgezogene Ausdehnung in Propagationsrichtung des Laserstrahls sowie eine insbesondere asymmetrische Ausdehnung in der Ebene transversal zur Propagationsrichtung aufweist. Entsprechend entsteht eine ähnlich geformte Modifikation. Umfasst die Fokuszone in seinen Ausdehnungen ein Array mehrerer Fokuspunkte mit lokalen Intensitätsmaxima innerhalb der Umhüllenden der Fokuszone, bildet sich ein entsprechendes Modifikationsarray mit Subfokuszonen aus. Auch die Intensitätsverteilungen dieser Fokuspunkte kann eine insbesondere asymmetrische Ausdehnung in der Ebene transversal zur Propagationsrichtung aufweisen. Wird die umhüllende Form der Fokuszone in der Ebene transversal zur Propagationsrichtung abgeflacht, können sich durch Interferenzeffekte Fokuspunkte ausbilden, die in orthogonaler Richtung bezüglich der Abflachung der Umhüllenden ebenfalls abgeflacht sind (siehe Fig. 22B und 23B).

Bezüglich der sich ausbildenden Trenneffekte sind dabei die Intensitätsbereiche - basierend auf den zugrundeliegenden Laserparametern und den zugrundeliegenden Materialeigenschaften - ausschlaggebend, die hinsichtlich eines Trenneffekts über einer zugehörigen Schwelle liegen. Ist dies für einzelne Subfokuszonen der Fall können diese einzeln auf die Rissbildung einwirken, liegt im Wesentlichen nur eine Zone in Form der Umhüllenden über der Schwelle wird schwerpunktmäßig diese die Rissbildung beeinflussen.

Figuren 21A und 21B verdeutlichen die asymmetrische Strahlform in der X-Y-Ebene beispielhaft als langgezogene Ellipse 400 - sei es eine Einzelmodifikation oder die Modifikation aufgrund einer Subfokuszone.

Eine quasi erzwungene Ausbildung einer Vorzugsrichtung der Rissausbildung kann es z.B. erlauben größere Abstände zwischen Modifikationen einzusetzen, d.h. es sind insgesamt weniger Modifikationen nötig. Das Trennen selbst kann verbessert werden, da eine zufällige Rissvorzugsrichtung vermieden werden kann. Im Gegensatz dazu kann sich bei in der X-Y-Ebene "punkt"-förmigen, bzw. im Raum Kugel- oder Rundsäulenförmigen (rotationssymmetrischen) Modifikationen die "zufällige" Rissvorzugsrichtung teilweise durch material- und trennverlaufspezifische Parameter wie z.B. eine (Vor-)Spannungen im Material, eine Krümmung des Materials und eine implizit gegebene Kristallstruktur durchsetzen.

Die hierein vorgeschlagene Rissführung kann insbesondere bei fragilen Strukturen ein Einbringen eines Risses in der Nähe einer Kante oder einer vorher erzeugten Kontur kontrolliert erlauben. Überdies kann die Rissführung während des Modifizierens ohne weiteren Bearbeitungsschritt erfolgen, so dass eine Zeiteinsparung durch Wegfall eines Prozessschrittes eintreten kann.

Bei der Nutzung asymmetrischer Fokuszonen zur Erzeugung von Modifikationen mit einer Vorzugsrichtung kann die Asymmetrie parallel zur Vorschubrichtung vorliegen. In Fig. 21A wäre dies eine Vorschubrichtung in X-Richtung. Dies kann zu einer Erzeugung einer Schockwelle im Material führen, die eine Rissausbildung entlang der Modifikation (in Fig. 21A in X-Richtung), verursachen kann. D.h., in Abhängigkeit vom Material kann eine Ausrichtung einer beispielsweise im X-Y-Schnitt ellipsenähnlichen Form entlang der Vorschubrichtung eine Rissbildung in Richtung der Ellipsenlängsachse bewirken. Dies wird durch die entsprechende Aneinanderreihung von Modifikation in Vorschubrichtung verstärkt.

Die Erzeugung von Schockwellen ist im Stand der Technik hinreichend bekannt. Dabei entstehen um die Modifikationen starke Zugspannungen, die senkrecht zu den Modifikationsgrenzen wirken. (In der nachfolgend erläuterten Fig. 21A wären dies die durchgezogenen Pfeile 402.) Bei länglichen Modifikationen entstehen also die größten Spannungen entlang der längsten Ausdehnung(en). Bei einem Modifikationsarray kumuliert sich die Wirkung der Einzelmodifikationen so auf, dass in einem asymmetrischen Array ebenfalls die Trennebene in Richtung der größten Ausdehnungen des Arrays verläuft.

Mithilfe einer geeigneten Strahlformung und einer geeigneten Auswahl der Laserparameter in Abhängigkeit der Materialparameter lässt sich die im Material durch nichtlineare Absorption entstehende Dichte freier Elektronen so einstellen, dass der Schockwelleneffekt oder die thermische Dehnung zur Einbringung einer Trennebene und/oder eines Risses genutzt werden kann. Je nach Material, geforderter Genauigkeit, Bearbeitungsgeschwindigkeit und weiteren Randbedingungen wie dem Abstand von Trennlinien zueinander, kann der eine oder der andere Effekt vorteilhafter sein.

Auch wenn bei der Erzeugung der Modifikation ein Schmelzvolumen mit Asymmetrie in Vorschubrichtung ausgebildet wird (insbesondere niederviskos), beispielsweise in im XY-Schnitt in Form einer Ellipse, so kann diese Ausrichtung eine Rissbildung in Richtung der Asymmetrie, beispielsweise in Richtung der Ellipsenlängsachse, bewirken.

Ferner kann bei der Nutzung asymmetrischer Fokuszonen zur Erzeugung von Modifikationen mit einer Vorzugsrichtung die Asymmetrie quer zur Vorschubrichtung vorliegen. In Fig. 21A wäre dies eine Vorschubrichtung in Y-Richtung. Auch diese, intuitiv vom Gedanken eines "Schneidmessers" abweichende, Orientierung kann Ergebnisse erzielen, die bei einigen Materialien und Strahlparametern, die Qualität der Trennfläche im Vergleich zur parallelen Ausrichtung oder rotationssymmetrischen Intensitätsverteilungen deutlich erhöht hat.

Es wird vermutet, dass der durch thermische Ausdehnung der Modifikation (das Material wird u.U. zähviskos) eine Dehnung und damit eine Druckspannung entlang den durchgezogenen Pfeilen 402 in Figuren 21A und 21B auf das umliegenden Material verursacht wird. Die Ausdehnung kann z.B. transient oder permanent erfolgen. Aufgrund der länglichen Form induzieren die Druckspannungen eine Zugspannung entlang den strichpunktierten Pfeilen 404, d.h. in X-Richtung und quer zur länglichen Form der Intensitätsverteilung in der Ebene transversal zur Strahlrichtung. Die Wirkung einer Vielzahl von Modifikationen, insbesondere auch kleinerer Ausdehnung, kann aneinander koppeln, so dass sich - wie in Fig. 21B angedeutet - zwischen den Ellipsen 400 ein Riss 406 oder eine bevorzugte Ausbildungslokalität für den Riss ausbildet.

Es wird angenommen, dass für die meisten transparenten Materialien sowohl die Nutzung der Schockwelle, als auch die thermische Dehnung zur Beeinflussung der Rissbildung möglich sind. Welcher Effekt hervorgerufen wird, ist abhängig von der Einstellung der Laserparameter, d.h. der Wellenlänge, Pulsdauer, Repetitionsrate, Grundfrequenz, Pulsenergie, Pulsgruppenenergie, etc. Da bei der Erzeugung einer Schockwelle eine Vorzugsrichtung in Richtung der längsten Ausdehnung der asymmetrischen Fokuszone entsteht muss diese bei Anwendung dieses Effekts parallel zur Vorschubrichtung ausgerichtet werden. Da bei der thermischen Ausdehnung die Vorzugsrichtung quer zur größten Ausdehnung entsteht muss bei der Anwendung dieses Effekts die Fokuszone quer zur Vorschubrichtung geführt werden. Bei einem Array aus mehreren Foki ist darauf zu achten, dass die aufgespannte Trennebene parallel zur Vorschubrichtung geführt wird.

Beispielsweise kann sich bei einer elliptischen Einzelmodifikation auch nur eine Spannung im Material (noch ohne Rissformung) ausbilden; das Material ist dann nur vorgespannt. Erst durch aufbringen einer äußeren Spannung bildet sich der gewünschte Riss gemäß der vorliegenden Spannungsverteilung aus. So können mehrere transversale elliptische Modifikationen zwischen sich einen Riss erzeugen, der quer zu Ausrichtung der elliptischen Grundform 400 verläuft.

In anderen Fällen wurde erkannt, dass durch eine einzelne Modifikation noch keine Rissbildung erfolgt, sich Risse erst durch eine Aneinanderreihung mehrerer nacheinander in Vorschubrichtung eingebrachter Modifikationen von einer vorangehend eingebrachten bis zur oder bis in die anschließend eingebrachte Modifikation erstrecken. Dadurch kann ein der Modifikation in Vorschubrichtung vorauslaufender, in seiner Ausrichtung schwer kontrollierbare Riss vermieden werden. Insbesondere wenn die zur Rissbildung erforderliche Zugspannung nur transient aufgebaut wird, ist die gleichzeitige Ausbildung mehrerer in Vorschubrichtung angeordneter Modifikationen vorteilhaft, wie in Fig. 21B für einen Schnitt in der XY-Ebene im Falle von Ellipsen veranschaulicht wird.

Bindet man obige Überlegungen in die Materialbearbeitung eines insbesondere für den Laserstrahl weitgehend transparenten Materials mit einem gepulsten Laserstrahl ein, werden transversal zur Propagationsrichtung des Laserstrahls asymmetrisch ausgebildeten Modifikationen gebildet. Dabei kann der Laserstrahls zum Ausbilden der langgezogenen Fokuszone im Material entsprechend fokussiert werden, wobei die Fokuszone derart ausgebildet wird, dass sie mindestens ein transversal in einer Abflachungsrichtung abgeflachtes Intensitätsmaximum aufweist. In den Figuren 21A und 21B ist der entsprechende Intensitätsbereich/das Intensitatsmaximum in Y-Richtung abgeflacht. Ferner können Aufreihungen entstehen, entweder transversal zur Propagationsrichtung (siehe Figuren 21C im Vergleich mit Fig. 22C und 23C) und/oder axial zur Propagationsrichtung (siehe Figuren 21C im Vergleich mit Fig. 29 und 30 - wobei Fig. 30 auch eine transversale Aufreihung zeigt), Auch dies transversalen und/oder axialen Aufreihungen von asymmetrischen Intensitätsmaxima können in Aufreihungsrichtung abgeflacht sein und somit die hierein insbesondere im Zusammenhang mit den Figuren 21A bis 21C beschriebenen Effekte zur Rissbildung und Rissführung verursachen, wenn insbesondere das Material und die Fokuszone relative zueinander bewegt werden, so dass bei aufeinander folgenden Laserpulsen transversal in Vorschubrichtung versetzte Modifikationen entstehen, entlang derer die Rissausbildung mit z.B. entsprechender Genauigkeit erfolgen soll. Entsprechend der Laserparameter und Materialeigenschaften können die Modifikationen (sei es auf Fokuszonenebene oder Subfokuszonenebene) die oben erläuterten Vorzugsrichtungen bei der Rissbildung hervorrufen, so es entlang oder quer zur Längsrichtung der asymmetrischen Form.

Fig. 21C überträgt die Darstellung aus Fig. 21B auf ein Array aus drei benachbarten Intensitätsverläufen, wobei die Intensitätsverläufe zusätzlich in Z-Richtung moduliert sind. D.h., einzelne Ellipsoide 410 sind übereinander und nebeneinander angeordnet und z.B. in Z-Richtung aufgereiht. Um jedes Ellipsoid 400' ist der Spannungsverlauf einer möglichen Trennzone 406' angedeutet, die durch die Zugspannung entlang den (hier durchgezogenen) Pfeilen 404 verursacht werden können, wobei die Trennzonen 406' gemeinsam zur Ausbildung einer Trennebene 410 führen können.

Allgemein können wie gezeigt also derartige Spannungen auch zwischen sich in z-Richtung aufreihenden Modifikationen auch in Z-Richtung vorliegen. Die Trennebene 410 resultiert aus der Aufsummierung der durch die Ellipsoide 400' erzeugten Zugspannungen 404'

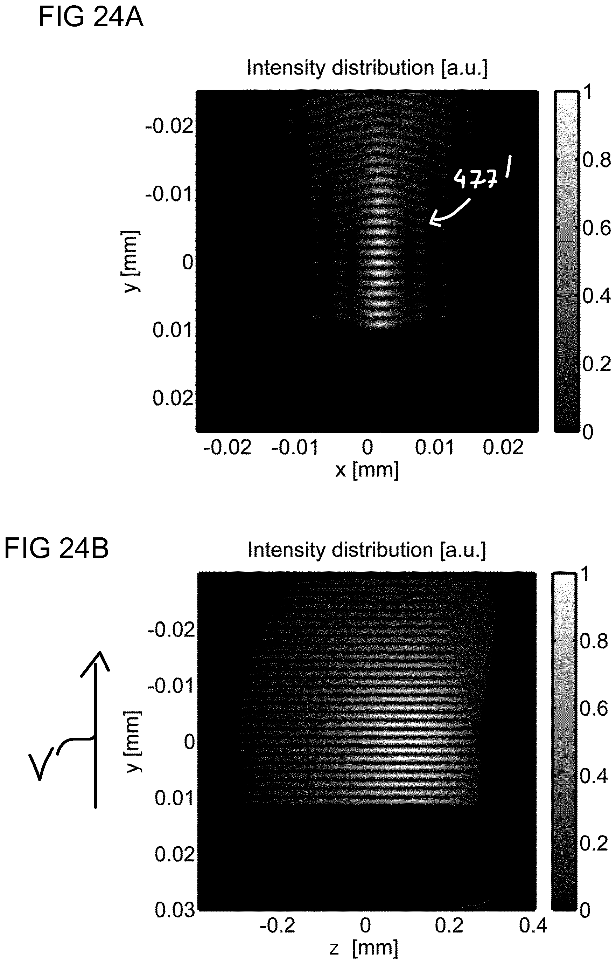

Im Folgenden werden Beispiele für die Erzeugung der Asymmetrie der Fokuszone erläutert. Zum einen erlaubt eine Blende (siehe Blende 50 in Figuren 3 und 7) die Ausbildung eines in Dicke und Orientierung einstellbaren Spalts im Bereich des Abbildungssystem 33, insbesondere der Brennebene 340. Zwei Blendenstellungen werden in Zusammenhang mit den Figuren 22A bis 23D erläutert. Zum anderen kann durch Berechnung des Phasenverlaufs der DOEs eine entsprechende Asymmetrie aufgeprägt werden. Beispielhafte Phasenverläufe, die den Blendenstellungen in den Figuren 22A und 23A entsprechen könnten, sind in den Figuren 24A und 24B gezeigt.

Fig. 22A verdeutlichen beispielhaft ein Ausgangintensitätsprofil 451 im Intensitätsquerschnitt nach Durchlaufen der Blende 50. Ferner ist in Fig. 22A beispielhaft die Blendenöffnung 460 angedeutet. Man erkennt zwei ringsegmentförmig um die Strahlachse 45 verlaufende Intensitätsmaxima 449. Es liegt keine Intensität im Strahlzentrum vor.

Fig. 22B zeigt eine Intensitätsverteilung für einen Schnitt quer zur Strahlachse Z und Fig. 22C eine Intensitätsverteilung für einen Schnitt durch die Strahlachse Z im Fokusbereich, wie sie sich aufgrund des Ausblendens der Randbereich in Fig. 22A ergeben können.

Figuren 22B und 22C zeigen eine langgezogene Fokuszone 477, in der in Ausbreitungsrichtung eine Sequenz von ca. 5 starken Intensitätsmaxima 461 auftreten, die mit nahezu vergleichbaren Intensitäten über einen Bereich von einigen Hundert µm in Z-Richtung in das Material hineinragen können. Die Interferenzmaxima 461 sind im Schnitt quer zur Strahlachse Z länglich verformt, was hierin als allgemein ellipsenförmig bezeichnet wird. Die lange Achse der Interferenzmaxima 461 ist quer zur Richtung der Aufreihung ausgerichtet. Bei Materialien und Laserparametern, die gemäß den Überlegungen zur Figur 21B eine Rissbildung quer zur Längsachse der Ellipse und entsprechend in Fig. 22B entlang der Y-Richtung bewirken, trennt sich somit das Material entlang der Aufreihung von Interferenzmaxima 461.

Für eine engere in Fig. 23A gezeigte Blendenöffnung 460' verdeutlichen die Figuren 23B und 23C erkennt, dass die Anzahl der Interferenzmaxima 461 mit schließender Blende zunimmt und die elliptische Verformung in X-Richtung größer wird. Die langgezogene Fokuszone 477 weist nun mehr als 10 Intensitätsmaxima 461 auf.

Fig. 23D ist ein Beispiel einer Materialbearbeitung von Alumosilikatglas (Gorilla-Glas) mit einem Doppelpuls mit einer Pulslänge von ca. 7ps bei einer Wellenlänge von 1030 nm. Die Gesamtenergie 125 µJ ergibt sich aus zwei Einzelpulsenergie 62,5 µJ, die mit einem Zeitabstand von 200µs eingestrahlt wurden. Die Bearbeitung erfolgt z.B. mit einer Grundfrequenz von 2KHz.

Gerade für die Verwendung von Blenden bieten sich reguläre und inverse Besselstrahl-Arten zur Erzeugung langgezogener Fokuszonen an, da diese ein Ringfernfeld für das Eingreifen der Blende aufweisen.

Beide Verfahren zur Asymmetrieerzeugung können eine Steuerbarkeit im Prozess der Materialbearbeitung erlauben. So kann beispielsweise über die Blendendicke die Geometrie eingestellt werden. Ein kleinerer Spalt führt zu breiteren Ellipsen sowie zu mehr Ellipsen in z.B. Vorschubrichtung Richtung.

So kann beispielsweise die Blendenweite bei zu schneidenden Radien für eine kürzere Modifikationszone eine Blende weiter geöffnet werden. Zusätzlich oder alternativ kann durch Ausrichten des Strahlprofils ein Kurvenfahren unterstützt werden. So kann das gesamte optische System oder das Werkstück gedreht werden. Ferner kann (ein rotationssymmetrischer Eingangsstrahl vorausgesetzt) die Blende und/oder das DOE um die Strahlachse rotiert werden, so dass sich während der Materialbearbeitung die Vorzugsrichtung ändern lässt. Ferner können online-anpassbare Phasenverläufe genutzt werden. Insbesondere kann bei einer Blende ein synchrones Ändern beider Blendenseiten vorgenommen werden oder die Blendenseiten werden individual gesteuert.

Allgemein können Modifikationen so erzeugt werden, dass an Array-Enden die erzeugte Spannung abnimmt, um ein versehentliches Ausbrechen des Risses (z.B. voreilend) zu verhindern. Ähnlich können Modifikationen so erzeugt werden, dass das Array "nach hinten" weiterhin große Spannung erzeugt, so dass sich der Riss zur vorher eingebrachten Modifikation fortsetzt. Es ergibt sich eine Art Mit- oder Nachführen des Risses (nachlaufend).

Beispielhaft zeigen die Figuren 24A, 24B entsprechende Schnittansichten des Intensitätsverlauf 477' in der X-Y-Ebene (transversal zum Strahl) und in der Y-Z-Ebene (entlang des Strahls) eines linearen Arrays von sich in das Material hineinerstreckenden Fokuszonen. Man erkennt, dass die Intensitäten im Array langsam entgegen der Vorschubrichtung V (hier erfolgt der Vorschub in die negative Y-Richtung) zunehmen. Entsprechend können sich zu vorherigen Modifikationen Rissausbildungen fortsetzen. In Richtung des noch nicht bearbeiteten Materials ist dagegen die Neigung zur Rissausbildung reduziert. Derartige Intensitätsverläufe können durch spezielle DOE-Phasenverläufe und/oder durch Überlagerung mehrerer Strahlen erzeugt werden.

Alternativ kann das Strahlungsfeld in zwei oder mehr Teilstrahlungsfelder aufgeteilt werden, die versetzt in das Material gekoppelt werden, um so die gewünschte Asymmetrie auch bei Nutzung rotationssymmetrischer Strahlungsfelder und Teilstrahlungsfelder zu erzielen.

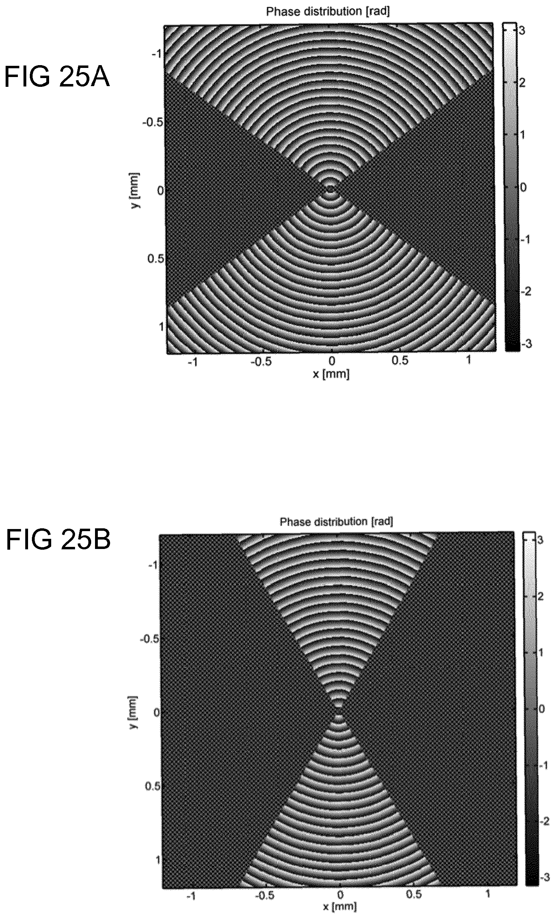

Die Figuren 25A und 25B zeigen alternativ zur Verwendung von Blenden entsprechend ausgebildete DOEs. Man erkennt einen Phasenverlauf auf einer Phasenmaske, die einer azimutalen Segmentierung unterliegt. Zwei Segmente- jeweils in Dreiecksform mit einer jeweils im Zentrum (der Strahlachse zugehörig) angeordneten rechtwinkligen Dreiecksspitze - liegen einander gegenüber. Die zwischen den Segmenten liegenden Bereiche der Phasenmaske formen zwei gegenüberliegende Segmente mit einer Phasenverteilung, welche das Licht in uninteressante Raumbereiche streut. Allgemein wird ein einfallender Gaußscher Strahl derart auf das Strahlformungselement gerichtet, dass das Zentrum des Strahlformungselements mit der Strahlachse des einfallenden Strahls zusammenfällt.

Der im DOE der Fig. 25B genutzte Winkelbereich ist reduziert (analog zur Blendenöffnung in Fig. 23A), so dass auch hier eine Verlängerung der Ellipsenform und eine Zunahme der Anzahl der Intensitätsmaxima in der Fokuszone bewirkt wird.

Die Phasenverläufe der Figuren 25A und 25B sind offensichtlich nicht rotationssymmetrisch. Eine Drehung des jeweiligen DOE führt zu einer entsprechend Rotation der Fokuszone und damit zu einer Änderung der Ausrichtung der Vorzugsrichtung für die Rissbildung - ebenfalls analog zur Drehung der linearen Blendenöffnung um die Strahlachse, da Strahlanteile entlang der X-Richtung dem Phasenverlauf der "X"-Segmente 970A ausgesetzt sind und Strahlanteile entlang der Y-Richtung im Wesentlichen dem Phasenverlauf der "Y"-Segmente 970B ausgesetzt sind.

Häufig bilden sich Vorzugsrichtungen für die Rissbildung aus, die nicht mit der angestrebten Trennfläche übereinstimmen. Das kann beispielsweise durch anisotrope Werkstücke, beispielsweise Kristalle, durch Symmetrieabweichung in der Werkstückgeometrie oder durch einen durch die Strahleintrittsfläche bedingten Astigmatismus, beispielsweise durch von Senkrechten abweichenden Strahleinfall oder eine gekrümmte Strahleintrittsfläche, bedingt sein. Häufig wirken sich derartige "zufällige" Vorzugsrichtungen störend auf die Bearbeitung aus. Durch die gezielte ausgebildete Asymmetrie des Strahlprofils kann die "zufällige" Vorzugsrichtung vorteilhaft übersteuert und in eine angestrebte Vorzugsrichtung umgewandelt werden.

Zusammenfassend kann ein Ausrichten der Vorzugsrichtung/des Strahlprofil relativ zum Vorschub eine verbesserte Trennung in Vorschubrichtung erlauben, insbesondere eine schnellere, effizientere, robustere Trennung hoher Qualität.

Allgemein kann bei der hierein beschriebenen auf Asymmetrie basierenden Riss-unterstützten Trennung die Intensitätsverteilung nur innerhalb des Materials oder auch sich bis zu einer oder beiden Oberflächen erstreckend eingebracht werden.

Ferner können neben Multispotkonfigurationen auch modulierte Intensitätsverläufe eingesetzt werden, wobei die Modulation in Strahlrichtung und/oder transversal zur Strahlrichtung vorliegen kann.

In anderen Worten erlaubt es insbesondere die Verwendung einer Blende, die Risslänge an die Kontur anzupassen. Beispielsweise können bei engen Kurven und Ecken eine kurze Ausdehnung in Vorschubrichtung und auf geraden Trennstrecken eine lange Ausdehnung in Vorschubrichtung eingestellt werden.

Fig. 26 zeigt einen Phasenverlauf 970 einer Phasenmaske mit azimutaler Segmentierung. Ein Paar von "X"-Segmenten 970A - jeweils in Dreiecksform mit einer jeweils im Zentrum (der Strahlachse zugehörig) angeordneten rechtwinkligen Dreiecksspitze - liegen einander gegenüber. Die zwischen den "X"-Segmenten 970A liegenden Bereiche der Phasenmaske formen zwei gegenüberliegende "Y"-Segmenten 970B - ebenfalls in Dreiecksform mit einer rechtwinkligen Dreiecksspitze im Zentrum. Allgemein wird ein einfallender Gaußscher Strahl derart auf das Strahlformungselement gerichtet, dass das Zentrum des Strahlformungselements mit der Strahlachse des einfallenden Strahls zusammenfällt.

Im Beispiel der Fig. 26 findet der Übergang der Phasenverläufe zwischen den einzelnen Segmenten abrupt statt. Der Phasenverlauf der Fig. 26 ist offensichtlich nicht rotationssymmetrisch, da Strahlanteile entlang der X-Richtung dem Phasenverlauf der "X"-Segmente 970A ausgesetzt sind und Strahlanteile entlang der Y-Richtung im Wesentlichen dem Phasenverlauf der "Y"-Segmente 970B ausgesetzt sind.

Die Figuren 27 und 28 zeigen einen Intensitätsverlauf 971A in X-Richtung bzw. einen zentralen Ausschnitt 971B einer XY-Aufsicht auf ein Intensitätsprofil, wie sie sich in der Fernfeldbrennebene ausbilden können. Da die Phasenmaske der Fig. 26 keinen fokussierende Phasenanteil aufweist, wird sie mit einer separaten und damit für beide Segmente identischen Fernfeldoptik verwendet. Im Intensitätsverlauf 971A und im Ausschnitt 971B erkennt man ein zweiteiliges äußeres Ringsegment 972A einer radial außen liegenden Intensitätsüberhöhung.

Ferner erkennt man im Ausschnitt 971B ein zweiteiliges inneres Ringsegment 972B einer radial innen liegenden Intensitätsüberhöhung. Letztere weist im Wesentlichen keinen Beitrag in X-Richtung (y = 0) auf. Entsprechend ist sie auch nicht als Intensitätsüberhöhung im Intensitätsverlauf 971A zu sehen. Jedes Teil der Ringsegmente 972A und 972B erstreckt sich über 90° - entsprechend der azimutalen Segmentierung.

Im Ergebnis führt die azimutal segmentierte Phasenmaske der Fig. 26 zu einem asymmetrischen Intensitätsverlauf im Fernfeld. Ferner kann sich eine longitudinale Interferenzstruktur aufgrund der unterschiedlichen Winkelanteile ausbilden, Die Asymmetrie in der Strahlform entsteht aufgrund der Asymmetrie in den Segmenten. Bei gleichen Winkelanteilen in den Segmenten und einer Phasenverschiebung der Segmente um PI kann sich z.B. eine asymmetrische Strahlform ohne Modulation ausbilden, bei der Abstand der dabei entstehenden inversen Quasi-Bessel-Strahlen in der Größenordnung der Strahlen selbst liegen kann. Die Interferenz der zugehörigen inversen Quasi-Bessel-strahlartigen Strahlformen kann entsprechend zu einer Asymmetrie/Modulation in der transversalen Ausbildung der Intensitätsverteilung führen.

Beispielhaft zeigt Fig. 29 einen Schnitt 973A in ZX-Ebene durch eine gemeinsame langgezogene Fokuszone 973 für eine sich aus der Ausgangsintensitätsverteilung gemäß Fig. 28 ergebenden Intensitätsverteilung. Fig. 30 zeigt einen zugehörigen Schnitt in ZY-Ebene 973B der Intensitätsverteilung. Man erkennt Sequenzen von im Wesentlichen linear angeordneten Intensitätsmaxima 975. Signifikante Intensitäten erreichen Intensitätsmaxima in einer einzigen Reihe in Fig. 29 und in drei Reihen in Fig. 30. In Fig. 30 sind dabei die Maxima der äußeren Reihen in Z-Richtung bezüglich der inneren Reihe verschoben. Wählt man nun die Y-Richtung als Vorschubrichtung bei der Materialbearbeitung, so bildet ein einzelner Laserpuls (oder eine Gruppe von Laserpulsen) eine in Vorschubrichtung verlängerte, d.h. asymmetrische Fokus-/Modifikationszone. Entsprechend ist die Breite der Fokus-/Modifikationszone in Trennrichtung, d.h. in der YZ-Ebene, geringer. Es ergibt sich entsprechend eine Anordnung von drei "schneidenden" Aufreihungen der Intensitätsmaxima 975. Es wird angemerkt, dass hierin Graustufendarstellungen der Figuren 29 und 30 auf einer Farbdarstellung basieren, so dass Maximalwerte der Intensität/Amplitude dunkel dargestellt wurden.

In anderen Worten lässt sich die Asymmetrie, die durch die Segmentierung der Phasenmaske hervorgerufen wurde, in Kombination mit inversen Quasi-Bessel-Strahlformen zur Ausbildung einer geometrischen Vorzugsrichtung beim Trennen nutzen. Auch in dieser Konfiguration kann der Endbereich der Fokuszone/Modifikationszone im Wesentlichen unabhängig von der eingestrahlten Energie und dem Strahldurchmesser des einfallenden Strahls sein.

Ein weiteres Beispiel für einen Wechselwirkungsraum im Werkstück 9 mit asymmetrischer Geometrie wird in Zusammenhang mit den Fig. 31 bis 36C erläutert. Fig. 31 zeigt einen Phasenverlauf 1043 einer Phasenmaske, die auf einer Überlagerung von zwei Phasenverläufen basiert. Jeder dieser Phasenverläufe gehört zu einem inversen Quasi-Bessel-Strahl, wie er einzeln beispielsweise mit einem Hohlkegel-Axicon erzeugt werden könnte. Allerdings sind die Zentren der Phasenverläufe in X-Richtung um Δx zueinander verschoben. Der Phasenverlauf 1043 weist ferner eine Überlagerung mit einer zentrisch angeordneten sphärischen Phase auf, d.h., es ist eine fokussierende Fernfeldwirkung in die beispielsweise als diffraktives optisches Strahlformungselement ausgeführte Phasenmaske integriert.

Fig. 32 zeigt einen Amplitudenverlauf für einen Schnitt entlang der Strahlachse Z im Bereich von z = 0 mm bis z = 250 mm, wie er sich bei Aufprägung des Phasenverlaufs 1048 ergeben kann. Man erkennt einen dunklen Zentralbereich 1010A, der sich in Z-Richtung verbreitert. Aufgrund der nur gering lateral versetzten Phasenverläufe bilden sich in dem radial nach außen an den Zentralbereich 1010A angrenzenden hellen Intensitätsbereich 1010B vielfältige Interferenzstrukturen 1034 aus.

Die fokussierende Fernfeldwirkung des Phasenverlaufs 1048 formt einen in seiner Intensität strukturierten Ring in der zugehörigen Brennebene. Ein entsprechendes Ausgangsintensitätsprofil 1051 ist beispielhaft in Fig. 33 dargestellt. Man erkennt lokale Maxima, deren Ausmaß in azimutaler Richtung auf der X-Achse am größten ist. Die azimutale Ausdehnung nimmt mit zunehmenden Abstand von der X-Achse und entlang des Ringes ab.

Fig. 34A zeigt einen ZX-Schnitt durch das longitudinale Intensitätsprofil und Fig. 34B zeigt einen XY-Schnitt durch das longitudinale Intensitätsprofil im Wechselwirkungsbereich, wie es sich durch die Fokussierung des Ausgangsintensitätsprofils 1051 ergibt. Insbesondere bilden sich zwei in X-Richtung versetzte langgezogene Fokuszonen 1007A und 1007B aus, die sich entlang der Z-Richtung erstrecken, Neben einem Hauptmaximum bilden sich jeweils mehrere Nebenmaxima aus. Die Pulsenergie bzw. die Pulsgruppenenergie kann derart eingestellt werden, dass insbesondere bei nichtlinearer Absorption nur das stärkste Maximum oder die stärksten Maxima jeder Fokuszone zu einer Modifikation des Materials führen können.

Scant man den so geformten Laserstrahl in Y-Richtung über ein zu bearbeitendes Material, bildet sich eine Spur von zwei beabstandeten Modifikationszonen aus. Dadurch kann gezielt eine Spannungsverteilung im Material bewirkt werden, die z.B. ein Trennen bevorzugt in einem Zwischenbereich 1050 zwischen den langgezogenen Modifikationszonen auslösen kann. Beispielsweise können sich in den Modifikationszonen Druckspannungen aufbauen, die zur Ausbildung einer Zugspannung im Zwischenbereich führen, welche dann ihrerseits den entsprechenden Trennungsvorgang unterstützt. In diesem Fall würde die X-Richtung wiederum die Trennrichtung und die Y-Richtung eine Vorschubrichtung darstellen.

Stellt man die Laserparameter in Abhängigkeit vom Material so ein, dass bei der in Fig. 34A und Fig. 34B dargestellten Fokusverteilung eine Schockwelle auftritt, so kann die Intensitätsverteilung auch mit X-Richtung als Vorschubrichtung zum Einbringen einer Rissvorzugsrichtung durch eine Erzeugung einer Trennebene zwischen den langgezogenen Fokuszonen 1007A und 1007B, genutzt werden. Die beiden Fokuszonen 1007A und 1007B können vorteilhafterweise dazu auch mit geringem Abstand zueinander erzeugt werden.

Die Entwicklung der Intensitäten im zugehörigen optischen System strahlabwärts des diffraktiven optischen Strahlformungselements wird - einem inversen Quasi-Bessel-strahlförmigen Strahlverlauf entsprechend - wiederum eine Stufenstruktur in der radialen Intensitätsverteilung aufweisen. Aufgrund des lateralen Versatzes der Strahlanteile für die beiden inversen Quasi-Bessel-Strahlen bilden sich allerdings die Interferenzstrukturen 1034 aus, die sich mit der Stufenstruktur überlagern können.

Trotz dieser Interferenzstrukturen 1034 kann man in Strahlprofilen 1040A bis 1040C für z = 10 mm, z = 100 mm und z = 150 mm, die in den Figuren 35A bis 535C abgebildet sind, Bereiche erkennen, die radial innen liegende höhere Intensitäten aufweisen. Die Figuren 36A bis 36C zeigen zugehörige, sich radial in X-Richtung erstreckende Intensitätsverläufe 1042A bis 1042C. Insbesondere in den Fig. 36B und 362C erkennt man die Ausbildung einer steilen Flanke 1047, die einen intensitätsarmen inneren Bereich umgibt. Dabei klingt die Intensität radial nach außen mit einer langsam abfallenden Flanke 1048 ab. Allerdings ist die Ausbildung der Flanken aufgrund der Interferenz stark richtungsabhängig, wie es z.B. die Figuren 35A bis 35C zeigen.

Die vorausgehend erläuterten Beispiele basieren auf dem Einsatz von zwei auf der Phasenmaske vorgesehenen Phasenverläufen. Jedoch können mehr als zwei Phasenverläufe vorgesehen werden. Beispielsweise können mehr als zwei Phasenverläufe in radialen und azimutalen Segmente vorgesehen werden oder bei Kombinationen von Phasenhüben einbezogen werden.

Weitere Ausführungsformen und/oder Weiterbildungen und Aspekte sind im Folgenden zusammengefasst:
Allgemein können hierin beschriebene Fokussierelemente wie die Fern- und Nahfeldoptiken als z.B. Linse, Spiegel, DOE oder eine Kombination derselben ausgeführt werden.

Ferner können in optische Systeme wie den hierin beschriebenen Ausführungsbeispielen zusätzliche optische Elemente eingefügt werden. Unter anderem können Zwischenabbildungen im Abbildungssystem eingefügt werden, um beispielsweise sowohl eine Filterfunktion als auch gleichzeitig eine Scanbewegung im Bereich der bildseitigen Brennebene realisieren zu können. Dadurch kann z.B. die bildseitige Brennebene (z.B. Bildebene 340 in Fig. 20) selbst durch ein zusätzliches optisches System abgebildet werden. Alternativ oder zusätzlich können derartige optische Zwischensysteme es erlauben, beispielsweise einen vergrößerten Arbeitsabstand und/oder eine Vergrößerung des Arbeitsfeldes bei Scanner-Applikation zu realisieren.

Hinsichtlich Weiterbildungen des diffraktives optisches Strahlformungselement kann mindestens einer der Mehrzahl von strahlformenden Phasenverläufen 43 dazu ausgebildet ist, einen einfallenden Laserstrahl 3 mit einer Gaußscher Intensitätsverteilung in mindestens einen divergenten, dem virtuellen optischen Bild 53 zugeordneten Strahlbereich 55A, 55B überzuführen, der strahlabwärts des diffraktiven optischen Strahlformungselements 31 eine transversale Intensitätsverteilung 57A, 57B aufweist, die von innen nach außen abnimmt und die insbesondere vor einer einer fokussierenden Wirkung der Phasenmaske zugeordneten Fernfeldbrennweite (f_{F}) vorliegt, und/oder mindestens einer der Mehrzahl von strahlformenden Phasenverläufen 43 dazu ausgebildet ist, einen einfallenden Laserstrahl 3 in mindestens einen divergenten dem virtuellen optischen Bild 53 zugeordneten Strahlbereich 55A, 55B) überzuführen, der strahlabwärts des diffraktiven optischen Strahlformungselements 31 eine transversale Intensitätsverteilung 57A, 57B aufweist, die einen Abschnitt eines stufenförmigen Intensitätsanstiegs aufweist, der eine radial nach innen zeigende steile Flanke (907) aufweist, und die insbesondere vor einer einer fokussierenden Wirkung der Phasenmaske zugeordneten Fernfeldbrennweite (f_{F}) vorliegt.

Mindestens zwei segmentspezifischen Phasenverläufen können jeweils einem segmentspezifisches virtuelles optisches Bild zugeordnet sein, das in einer segmentspezifischen Fokuszone abbildbar ist, und die zugehörigen segmentspezifischen Fokuszonen derart zueinander angeordnet sind, dass sie gemeinsam zum Ausbilden einer Modifikationszone beitragen.

Mindestens zwei Segmente können aus zumindest teilweise ineinander verschachtelten räumlichen Strukturen zusammengesetzt sein, und/oder Segmente der Mehrzahl von Segmenten können radial und/oder azimutal aneinander angrenzen, wobei insbesondere im Übergangsbereich benachbarter Segmente der Mehrzahl von Segmenten ein gewichteter Übergang zwischen den entsprechenden benachbarten Phasenverläufen eingestellt werden kann.

Die, insbesondere segmentspezifischen, Fokuszonenkönnen sich überlagern und/oder räumlich ergänzen und/oder es können sich mindestens zwei, insbesondere segmentspezifische, Abbildungen der virtuellen optischen Bilder interferierend überlagern und/oder mindestens zwei, insbesondere segmentspezifische, Abbildungen der virtuellen optischen Bilder können eine gemeinsame langgezogene Fokuszone ausbilden.

Ferner kann ein Abbildungssystem dem Strahlformungselement eine Bildebene strahlabwärts eines longitudinalen Zentrums des Bildes des virtuellen optischen Bildes zuordnen und ein transversales Strahlprofil des Laserstrahls am Strahlformungselement in der Bildebene vorliegen. Insbesondere im Bereich der Bildebene kann ein in longitudinaler Richtung schnelles Umschlagen von einem in der Fokuszone vorliegenden lateralen Strahlprofil zu einem lateralem Strahlprofil mit einem dunklen Zentrum vorliegen, letzteres insbesondere bei einem im Wesentlichen lateralen Gaußschen Strahlprofil des Laserstrahls und insbesondere hinsichtlich Strahlanteile des einfallenden Laserstrahls, die einen divergenten dem virtuellen optischen Bild zugeordneten Strahlbereich erzeugen, und/oder das optische System kann derart ausgebildet sein, dass im Wesentlichen nur ein Zentralbereich des einfallenden Laserstrahls Beiträge zu einem strahlabwärts liegenden Ende der dem virtuellen Bild zugeordneten Fokuszone liefert, so dass eine Änderung eines Strahldurchmessers des einfallenden Laserstrahls nicht zu einer wesentlichen longitudinalen Verschiebung des strahlabwärts liegenden Endes der Fokuszone führt.

Es wird explizit betont, dass alle in der Beschreibung und/oder den Ansprüchen offenbarten Merkmale als getrennt und unabhängig voneinander zum Zweck der ursprünglichen Offenbarung ebenso wie zum Zweck des Einschränkens der beanspruchten Erfindung unabhängig von den Merkmalskombinationen in den Ausführungsformen und/oder den Ansprüchen angesehen werden sollen. Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

## Patentansprüche

1. Verfahren zur Materialbearbeitung eines insbesondere für den Laserstrahl weitgehend transparenten Materials (9) durch mit einem gepulsten Laserstrahl (3) Erzeugen von transversal zur Propagationsrichtung (5) des Laserstrahls (3) asymmetrisch ausgebildeten Modifikationen mit den Schritten:
Strahlformen des Laserstrahls (3) zum Ausbilden einer in Propagationsrichtung langgezogenen Fokuszone (7) in dem Material (9), wobei die Fokuszone (7) derart ausgebildet wird, dass sie mindestens zwei transversal in einer Abflachungsrichtung abgeflachte Intensitätsmaxima oder eine transversale Aufreihung von asymmetrischen Intensitätsmaxima, die in einer Aufreihungsrichtung abgeflacht sind, aufweist,
Positionieren der Fokuszone (7) im Material (9),
Erzeugen der Modifikation, und
Relativbewegen des Materials (9) und der Fokuszone (7) in der oder quer zur Abflachungsrichtung beziehungsweise in der oder quer zur Aufreihungsrichtung.

2. Verfahren nach Anspruch 1, wobei die Aufreihungsrichtung während des Relativbewegens zum Abfahren eines zumindest teilweise gekrümmten Bearbeitungsweges geändert, optional in der zur Ausbreitungsrichtung des Laserstrahls transversalen Ebene gedreht, wird.

3. Verfahren nach Anspruch 1 oder 2, wobei die mindestens zwei abgeflachten Intensitätsmaxima in der zur Ausbreitungsrichtung des Laserstrahls transversalen Ebene asymmetrisch ausgebildet werden, und/oder
wobei ferner eine axiale Aufreihung von asymmetrischen Intensitätsmaxima in der Propagationsrichtung (5) des Laserstrahls (3) durch die mindestens zwei transversal in einer Abflachungsrichtung abgeflachte Intensitätsmaxima oder die transversale Aufreihung von asymmetrischen Intensitätsmaxima ausgebildet werden, und/oder
wobei die asymmetrische Fokuszone durch Aufprägen eines nicht rotationssymmetrischen Phasenverlaufs über ein diffraktives optisches Strahlformungselement (31) mit einem zur Strahlachse nicht-rotationssymmetrischen Phasenverlauf geformt wird.

4. Verfahren nach einem der vorhergehenden Ansprüche, wobei die asymmetrische Fokuszone durch Aufprägen eines zur Strahlausbreitungsrichtung rotationssymmetrischen Phasenverlaufs auf ein transversales Eingangsintensitätsprofil (31) des Laserstrahls (3) geformt wird, wobei der aufgeprägte strahlformende Phasenverlauf (43) derart ist, dass dem Laserstrahl (3) ein virtuelles oder ein reales optisches Bild (53), optional einer inversen oder regulären Besselstrahl-artigen, Fokuszone zugeordnet ist,
der Laserstrahl (3) über einen Strahlformungsabstand (Dp) propagiert wird, nach dem der aufgeprägte strahlformenden Phasenverlauf (43) das transversale Eingangsintensitätsprofil (41) in ein transversales Ausgangsintensitätsprofil (51) übergeführt hat, so dass das transversale Ausgangsintensitätsprofil (51) im Vergleich zu Eingangsintensitätsprofil (41) mindestens ein außerhalb der Strahlachse (45) liegendes rotationssymmetrisches lokales Maximum (49) aufweist,
ein Winkelbereich des rotationssymmetrischen lokalen Maximums (49) geblockt wird und
der nichtgeblockte Anteil des rotationssymmetrischen lokalen Maximums (49) zur Ausbildung der asymmetrische Fokuszone fokussiert wird.

5. Verfahren nach Anspruch 4, wobei der geblockte Winkelbereich angepasst wird zum Einstellen einer Längsausdehnung einer Einhüllenden der Fokuszone sowie einer Querausdehnung der lokalen Intensitätsmaxima transversal zur Längsausdehnung, optional in Abhängigkeit einer Krümmung des Vorschubweges, und/oder
wobei die azimutale Lage des geblockten Winkelbereichs zum Einstellen der Aufreihungsrichtung der lokalen Intensitätsmaxima angepasst wird.

6. Verfahren nach einem der vorhergehenden Ansprüche, wobei die langgezogene Fokuszone (7) gebildet wird durch:
Aufprägen einer Mehrzahl von strahlformenden Phasenverläufen (43) über ein transversales Eingangsintensitätsprofil (31) des Laserstrahls (3), wobei mindestens einer der Mehrzahl von aufgeprägten strahlformenden Phasenverläufen (43) derart ist, dass dem Laserstrahl (3) ein virtuelles oder reales optisches Bild (53) einer langgezogenen Fokuszone (7) zugeordnet ist,
Propagieren des Laserstrahls (3) über einen Strahlformungsabstand (Dp), nach dem die Mehrzahl von aufgeprägte strahlformenden Phasenverläufen (43) das transversale Eingangsintensitätsprofil (41) in ein transversales Ausgangsintensitätsprofil (51) übergeführt hat, so dass das transversales Ausgangsintensitätsprofil (51) im Vergleich zu Eingangsintensitätsprofil (41) mindestens ein außerhalb der Strahlachse (45) liegendes lokales Maximum (49) aufweist, und
Fokussieren des Laserstrahls (3) in die Fokuszone (7) zur Ausbildung eines Nahfeldes basierend auf dem Ausgangsintensitätsprofil (51) unter Überlagerung, Ergänzung und/oder Interferenz der dem virtuellen oder realen optischen Bild (53) zugeordneten langgezogenen Fokuszone (7) mit mindestens einer weiteren Fokuszone (1007A, 1007B), die auf mindestens einen weiteren Phasenverlauf der Mehrzahl von aufgeprägten strahlformenden Phasenverläufe (43) zurückgeht, wobei ferner eine asymmetrische transversale Intensitätsverteilung, optional durch Drehen des Strahlformungselements (31), in Bezug zu einer Vorzugsrichtung während der Materialbearbeitung ausgerichtet wird.

7. Verfahren nach einem der vorhergehenden Ansprüche, ferner mit
Führen eines Risses zur Trennung oder Trennungsvorbereitung des Materials (9), wobei aufeinander folgende Modifikationen entlang einer Relativbewegungsrichtung zwischen Laserstrahlpropagationsrichtung (5) und Material (9) zueinander versetzt sind und jede der Modifikationen eine Vorzugsrichtung in der Rissbildung aufweist, und die Relativbewegungsrichtung und die Vorzugsrichtung aneinander angepasst sind, wobei die Vorzugsrichtung materialabhängig und/oder laserstrahlparameterabhängig entweder quer oder längs zu einer zur größten transversalen Erstreckung gehörenden Längsachse eines Intensitätsmaximums der asymmetrischen Modifikation gegeben ist.

8. Verfahren nach Anspruch 7, ferner mit:
Erzeugen der Aufreihung von Intensitätsmaxima in einer Vorschubrichtung, wobei die Intensitäten der Intensitätsmaxima auf einer Vorschubseite der Aufreihung niedriger ist als auf einer Rückseite der Aufreihung, und
Durchführen der Relativbewegung in der Vorschubrichtung, so dass rückseitig eine stärkere Ausprägung der Vorzugsrichtung in der Rissbildung vorliegt als vorschubseitig, so dass eine Rissbildung zur vorausgehend erzeugten Modifikation initiiert, aber eine vorauseilende Rissbildung unterdrückt wird, so dass eine Rissbildung zu einer vorausgehend erzeugten Modifikation bereits durch die Erzeugung der Modifikation initiiert wird.

9. Optisches System (1) zur Strahlformung eines Laserstrahls (3) für die Bearbeitung eines insbesondere für den Laserstrahl (3) weitgehend transparenten Materials (9) durch Modifizieren des Materials (9) in einer in Propagationsrichtung (5) und einer weiteren Richtung transversal zur Propagationsrichtung langgezogenen Fokuszone (7) mit:
einem die Fokuszone in Propagationsrichtung (5) formenden optischen Element, wobei das die Fokuszone in Propagationsrichtung (5) formenden optische Element die Fokuszone auch in einer weiteren Richtung transversal zur Propagationsrichtung verformt oder
wobei strahlabwärts des die Fokuszone in Propagationsrichtung formenden optischen Elements ein weiteres die Fokuszone in der weiteren Richtung transversal zur Propagationsrichtung formendes optisches Element (50) angeordnet ist,
sodass die Fokuszone (7) mindestens zwei transversal in einer Abflachungsrichtung abgeflachte Intensitätsmaxima oder eine transversale Aufreihung von asymmetrischen Intensitätsmaxima, die in einer Aufreihungsrichtung abgeflacht sind, umfasst.

10. Optisches System (1) nach Anspruch 9, wobei das die Fokuszone in der weiteren Richtung transversal zur Propagationsrichtung formende optische Element um die Strahlachse (45) drehbar angeordnet ist, und/oder
wobei das optische System (1) ferner eine Fernfeldoptik umfasst, die dazu ausgebildet ist, eine fokussierende Wirkung auf den Laserstrahl (3) auszuüben, um die Ausgangsintensitätsverteilung in einer zugehörigen Brennebene (340) auszubilden.

11. Optisches System (1) nach Anspruch 9 oder 10,
wobei das die Fokuszone in Propagationsrichtung formende optische Element ein diffraktives optisches Strahlformungselement (31, 73) zur Aufprägung mindestens eines Phasenverlaufs (43) auf den Laserstrahl ist, und
das die Fokuszone in der weiteren Richtung transversal zur Propagationsrichtung formende optische Element als eine Strahlblende (50) ausgebildet ist und
das optische System (1) ferner eine Nahfeldoptik (33B) umfasst, die strahlabwärts mit einem Strahlformungsabstand (Dp) zum diffraktiven optischen Strahlformungselement (31) angeordnet ist und die dazu ausgebildet ist, den Laserstrahl (3) in die Fokuszone (7) zu fokussieren, wobei
mindestens ein aufgeprägter Phasenverlauf (43) derart ist, dass dem Laserstrahl (3) ein virtuelles, vor dem diffraktiven optischen Strahlformungselement (31) liegendes optisches Bild (53) einer langgezogenen Fokuszone (7) zugeordnet ist oder ein reales, nach dem diffraktiven optischen Strahlformungselement (73) liegendes optisches Bild (71) einer langgezogenen Fokuszone (7) zugeordnet ist, und
der Strahlformungsabstand (Dp) einer Propagationslänge des Laserstrahls (3) entspricht, in der der mindestens eine strahlformende Phasenverlauf das transversale Eingangsintensitätsprofil (41) in ein transversales Ausgangsintensitätsprofil (51) im Bereich der Nahfeldoptik (33B) überführt, und das transversale Ausgangsintensitätsprofil (51) im Vergleich mit dem Eingangsintensitätsprofil (41) mindestens ein außerhalb einer Strahlachse (45) liegendes lokales Maximum (49) aufweist, und
die Strahlblende (50) den Laserstrahl derart beschneidet, dass die Abbildungen der zugehörigen optischen Bilder (53) zu der asymmetrischen transversalen Intensitätsverteilung in der langgezogenen Fokuszone (7) mit den mindestens zwei transversal in einer Abflachungsrichtung abgeflachten Intensitätsmaxima oder der transversalen Aufreihung von asymmetrischen Intensitätsmaxima führt.

12. Optisches System (1) nach Anspruch 11, wobei das diffraktive optische Strahlformungselement (31) einer Phasenmaske, die zur Aufprägung des mindestens einen Phasenverlaufs (43) auf den auf die Phasenmaske fallenden Laserstrahl (3) ausgebildet ist, aufweist, wobei mindestens einem strahlformenden Phasenverlauf (43) ein virtuelles optisches Bild (53) zugeordnet ist, das in die langgezogene Fokuszone (7) zum Ausbilden einer Modifikation im zu bearbeitenden Material (9) abbildbar ist, und/oder
wobei mindestens ein strahlformender Phasenverlauf (43) dazu ausgebildet ist, in einer transversalen Ausgangsintensitätsverteilung (51) eine Ringstruktur (949A, 949B) strahlaufwärts der Stahlblende (50) auszubilden.

13. Optisches System (1) nach einem der Ansprüche 9 bis 12,
wobei das die Fokuszone in Propagationsrichtung formende optische Element und das die Fokuszone in der weiteren Richtung transversal zur Propagationsrichtung formende optische Element als ein diffraktives optisches Strahlformungselement (31, 73) zur Aufprägung einer Mehrzahl von Phasenverläufen (43) auf den Laserstrahl ausgebildet ist, und
das optische System (1) ferner umfasst
eine Nahfeldoptik (33B), die strahlabwärts mit einem Strahlformungsabstand (Dp) zum diffraktiven optischen Strahlformungselement (31) angeordnet ist und die dazu ausgebildet ist, den Laserstrahl (3) in die Fokuszone (7) zu fokussieren, wobei
mindestens einer der Mehrzahl von Phasenverläufen (43) derart ist, dass dem Laserstrahl (3) ein virtuelles, vor dem diffraktiven optischen Strahlformungselement (31) liegendes optisches Bild (53) einer langgezogenen Fokuszone (7) zugeordnet ist oder ein reales, nach dem diffraktiven optischen Strahlformungselement (73) liegendes optisches Bild (71) einer langgezogenen Fokuszone (7) zugeordnet ist, und
der Strahlformungsabstand (Dp) einer Propagationslänge des Laserstrahls (3) entspricht, in der die Mehrzahl von strahlformenden Phasenverläufen das transversale Eingangsintensitätsprofil (41) in ein transversales Ausgangsintensitätsprofil (51) im Bereich der Nahfeldoptik (33B) überführen, und das transversale Ausgangsintensitätsprofil (51) im Vergleich mit dem Eingangsintensitätsprofil (41) mindestens ein außerhalb einer Strahlachse (45) liegendes lokales Maximum (49) aufweist.

14. Optisches System (1) nach Anspruch 13, wobei
die Phasenverläufe der Mehrzahl von strahlformenden Phasenverläufen (43) derart ausgebildet sind, dass die Abbildungen der zugehörigen optischen Bilder (53) zu einer asymmetrischen transversalen Intensitätsverteilung im zu bearbeitenden Material (9) mit den mindestens zwei transversal in einer Abflachungsrichtung abgeflachten Intensitätsmaxima oder der transversalen Aufreihung von asymmetrischen Intensitätsmaxima umfasst, führen, und
die asymmetrische transversale Intensitätsverteilung eine Vorschubintensitätsverteilung in einer Vorzugsrichtung und eine Trennintensitätsverteilung transversal zur Vorzugsrichtung aufweist und wobei sich die Vorschubintensitätsverteilung transversal weiter erstreckt als die Trennintensitätsverteilung und/oder die Trennintensitätsverteilung zwei Intensitätsmaxima für ein Trennen des Materials (9) zwischen den Intensitätsmaxima aufweist.

15. Optisches System (1) nach Anspruch 13 oder 14, wobei das diffraktive optische Strahlformungselement (31) einer Phasenmaske, die zur Aufprägung einer Mehrzahl von strahlformenden Phasenverläufen (43) auf den auf die Phasenmaske fallenden Laserstrahl (3) ausgebildet ist, aufweist, wobei mindestens einem der Mehrzahl von strahlformenden Phasenverläufe (43) ein virtuelles optisches Bild (53) zugeordnet ist, das in mindestens eine langgezogene Fokuszone (7) zum Ausbilden einer Modifikation im zu bearbeitenden Material (9) abbildbar ist, und/oder
wobei mindestens einer der Mehrzahl von strahlformenden Phasenverläufen (43) dazu ausgebildet ist, in einer transversalen Ausgangsintensitätsverteilung (51) eine auf einen azimutalen Winkelbereich beschränkte Ringsegmentstruktur (972A, 972B) und/oder ein lokales Maximum auszubilden, und/oder
wobei mehreren Phasenverläufen der Mehrzahl von strahlformenden Phasenverläufen jeweils ein virtuelles optisches Bild (53) zugeordnet ist und die optischen Bilder (53) zum Abbilden in zugehörige Fokuszonen (1007A, 1007B) zum gemeinsamen Ausbilden einer Modifikation im zu bearbeitenden Material (9) ausgebildet sind, und/oder
wobei die asymmetrischen transversale Intensitätsverteilung im Werkstück (9) in seiner Orientierung hinsichtlich einer Vorzugsrichtung durch Drehen des diffraktiven optischen Strahlformungselement (31, 73) einstellbar ist.

16. Optisches System (1) nach einem der Ansprüche 9 bis 15, ferner mit
einer separaten Fernfeldoptik (33B) und/oder
einer in die Phasenmaske integrierten Fernfeldoptikphasenaufprägung,
wobei die Fernfeldoptik und/oder die Fernfeldoptikphasenaufprägung dazu ausgebildet ist, eine fokussierende Wirkung auf den Laserstrahl (3) auszuüben, um die Ausgangsintensitätsverteilung für mindestens das eine virtuelle optische Bild (53) oder das reale Bild in einer zugehörigen Brennebene (340) auszubilden.

17. Laserbearbeitungsanlage für die Bearbeitung eines für den Laserstrahl weitgehend transparenten Materials (7) mit einem Laserstrahl (3) durch Modifizieren des Materials (7) in einer gemeinsamen in Propagationsrichtung (5) des Laserstrahls (3) langgezogenen Fokuszone (7) mit
einer Laserstrahlquelle (11),
einem ein diffraktives optisches Strahlformungselement (31) und eine Strahlblende (50) aufweisendes optisches System nach einem der Ansprüche 9 bis 16, und
einer Steuerung zur Einstellung von Betriebsparametern insbesondere zur Ausrichtung einer transversal asymmetrischen Intensitätsverteilung in Bezug zu einer Vorzugsrichtung, wobei die Steuerung zur Einstellung eines Drehwinkels der Strahlblende (50) bezüglich der Strahlachse des einfallenden Laserstrahls (3) ausgebildet ist, und/oder
wobei die Steuerung zur Ausrichtung des optisches Systems und des Werkstücks ausgebildet ist, so dass eine durch das asymmetrische Strahlprofil bedingte Vorzugsrichtung der Werkstückbearbeitung der Vorschubrichtung angepasst werden kann.

18. Laserbearbeitungsanlage für die Bearbeitung eines für den Laserstrahl weitgehend transparenten Materials (7) mit einem Laserstrahl (3) durch Modifizieren des Materials (7) in einer gemeinsamen in Propagationsrichtung (5) des Laserstrahls (3) langgezogenen Fokuszone (7) mit
einer Laserstrahlquelle (11),
einem ein diffraktives optisches Strahlformungselement (31) aufweisendes optisches System nach einem der Ansprüche 9 bis 16, und
einer Steuerung zur Einstellung von Betriebsparametern insbesondere zur Ausrichtung einer transversal asymmetrischen Intensitätsverteilung in Bezug zu einer Vorzugsrichtung, wobei die Steuerung zur Einstellung eines Drehwinkels des diffraktiven optischen Strahlformungselements (31) bezüglich der Strahlachse des einfallenden Laserstrahls (3) ausgebildet ist, und/oder
wobei die Steuerung zur Ausrichtung des optisches Systems und des Werkstücks ausgebildet ist, so dass eine durch das asymmetrische Strahlprofil bedingte Vorzugsrichtung der Werkstückbearbeitung der Vorschubrichtung angepasst werden kann.

19. Verwenden einer bezüglich der Strahlachse transversal asymmetrisch und in Richtung der Strahlachse langgezogenen Fokuszone (977) zur Lasermaterialbearbeitung eines für den Laserstrahl weitgehend transparenten Materials (9) durch Modifizieren des Materials (9), wobei die transversal asymmetrisch und in Richtung der Strahlachse langgezogenen Fokuszone (7) während der Lasermaterialbearbeitung gedreht wird und mindestens zwei transversal in einer Abflachungsrichtung abgeflachte Intensitätsmaxima oder eine transversale Aufreihung von asymmetrischen Intensitätsmaxima aufweist.

20. Verwenden einer bezüglich der Strahlachse transversal asymmetrisch und in Richtung der Strahlachse langgezogenen Fokuszone (977) nach Anspruch 19, wobei die langgezogene Fokuszone (977) durch räumliches Ergänzen und/oder Überlagern mehrerer inverse oder regulärer Quasi-Bessel-Strahl-artiger Strahlprofile und/oder inverser oder regulärer Quasi-Airy-Strahl-artiger Strahlprofile erzeugt wird, und
wobei optional das Ergänzen und/oder Überlagern zu Interferenzen und/oder Intensitätsmodulationen in der langgezogenen Fokuszone (977) und/oder zu einer Asymmetrie der langgezogenen Fokuszone (977) führt und/oder wobei die langgezogene Fokuszone (977) durch ein optisches System nach einem der Ansprüche 9 bis 16 und optional durch eine Laserbearbeitungsanlage nach Anspruch 17 oder 18 erzeugt wird.

## Claims

1. A method for material processing of a material (9) by generating modifications with a pulsed laser beam (3), wherein the modifications are formed in an asymmetric manner transverse to a propagation direction (5) of the laser beam and the material is in particular for the laser beam to a large extent transparent, the method comprising:
beam shaping of the laser beam (3) for forming a focus zone (7) in the material (9), wherein the focus zone (7) is elongated in propagation direction and configured such that the focus zone (7) comprises at least two intensity maxima, which are transverse flattened in a flattening direction, or a transverse sequence of asymmetric intensity maxima, which are flattened in a sequence direction;
positioning the focus zone (7) in the material (9);
generating the modification; and
moving the material (9) and the focus zone (7) relative to each other in or across to the flattening direction or in or across to the sequence direction.

2. The method of claim 1, wherein the sequence direction is changed during the relative movement to follow an at least partially curved processing path, and optionally is turned in the plane being transverse to the propagation direction of the laser beam.

3. The method of claim 1 or 2, wherein the least two flattened intensity maxima are configured asymmetrically in the plane being transverse to the propagation direction of the laser beam
and/or
wherein furthermore an axial sequence of asymmetric intensity maxima in the propagation direction (5) of the laser beam (3) is formed by the at least two intensity maxima flattened transversely in a flattening direction or the transverse sequence of asymmetric intensity maxima, and/or
wherein the asymmetric focus zone is formed by imposing a non rotationally symmetric phase distribution over a diffractive optical beam shaping element (31) with a phase distribution, which is non rotationally symmetric with respect to the beam axis.

4. The method of any one of the preceding claims, wherein the asymmetric focus zone is formed by imposing a phase distribution, which is rotationally symmetric with respect to the beam propagation direction, onto a transverse input intensity profile (31) of the laser beam (3), wherein the imposed beam shaping phase distribution (43) is such that a virtual or a real optical image (53) of an, optionally inverse or regular Bessel beam-like, focus zone is attributed to the laser beam (3);
the laser beam (3) is propagated over a beam shaping distance (Dp), after which the beam shaping phase distribution (43) has transferred the transverse input intensity profile (41) in a transverse output intensity profile (51), so that the transverse output intensity profile (51) comprises, in comparison with the input intensity profile (41), at least one rotationally symmetric local maximum (49), which is located outside of the beam axis (45);
an angular range of the rotationally symmetric local maximum (49) is blocked; and
the unblocked portion of the rotationally symmetric local maximum (49) is focused for forming the asymmetric focus zone.

5. The method of claim 5, wherein the blocked angular range is adapted for setting of an extent of the length of an envelope of the focus zone as well as of an extent of the width of the local intensity maxima transverse to the extent of the length, optionally in dependence of a curvature of the feed path, and/or
wherein the azimuthal position of the blocked angular range is adapted for setting the sequence direction of the local intensity maxima.

6. The method of any one of the preceding claims, wherein the elongated focus zone (7) is formed by:
imposing a plurality of beam shaping phase distributions (43) over a transverse input intensity profile (31) on the laser beam (3), wherein at least one of the plurality of the imposed beam shaping phase distributions (43) is such that a virtual or real optical image (53) of an elongated focus zone (7) is attributed to the laser beam (3);
propagating the laser beam (3) over a beam shaping distance (Dp), after which the plurality of the imposed beam shaping phase distributions (43) has transferred the transverse input intensity profile (41) in a transverse output intensity profile (51), so that the transverse output intensity profile (51) comprises, in comparison with the input intensity profile (41), at least one rotationally symmetric local maximum (49), which is located outside of the beam axis (45); and
focusing the laser beam (3) into the focus zone (7) for forming a near field, which is based on the output intensity profile (51), while superposing, adding, and/or interfering the elongated focus zone (7) attributed to the virtual or real optical image (53) with at least one further focus zone (1007A, 1007B), which is based on at least one further phase distribution of the plurality of imposed beam shaping phase distributions (43), wherein further an asymmetric transverse intensity distribution is aligned during the material processing, optionally by rotating the beam shaping element (31), with respect to a preferred direction.

7. The method of any one of the preceding claims, further comprising:
generating modifications in the material (9) by focusing the laser beam (3) in an asymmetric focus zone (7) of the pulsed laser beam (3), wherein successive modifications are displaced with respect to each other along a relative movement direction between the laser beam propagation direction (5) and the material (9), and each of the modifications comprises a preferred direction in the crack formation, and the relative movement direction and the preferred direction are adapted to each other, wherein the preferred direction is given, in dependence of the material and/or of the laser beam parameters, either across to or longitudinal with respect to a length axis of an intensity maximum of the asymmetric modification, the length axis relating to the largest transverse extent.

8. The method of claim 7, further comprising:
generating a sequence of intensity maxima in a feed direction, wherein the intensities of the intensity maxima is lower on a feed side of the sequence than on the backside of the sequence; and
performing the relative movement in the feed direction, so that, at the backside, a stronger development of the preferred direction in the crack formation is present than at the front side, so that a crack formation towards the previously created modification is initiated, but an advancing crack formation is suppressed such that the crack formation to a previously created modification is initiated already by the creation of the modification.

9. An optical system (1) for beam shaping of a laser beam (3) for processing a material (9), which is in particular for the laser beam (3) to a large extent transparent, by modifying the material (9) in a focus zone (7) that is elongated in a propagation direction (5) and in a further direction transverse to the propagation direction, the optical system comprising:
an optical element configured to shape the focus zone in propagation direction (5), wherein the optical element configured to shape the focus zone in propagation direction (5) additionally shapes the focus zone in a further direction transverse to the propagation direction, or wherein a further optical element (50), which is configured to shape the focus zone in a further direction transverse to the propagation direction, is positioned downstream of the optical element, which is configured to shape the focus zone in propagation direction,
such that it comprises at least two intensity maxima, which are transverse flattened in a flattening direction, or a transverse sequence of asymmetric intensity maxima, which are flattened in a sequence direction.

10. The optical system (1) of claim 9, wherein the optical element configured to shape the focus zone in the further direction transverse to the propagation direction is arranged to be rotatable about the beam axis (45); and/or
wherein the optical system (1) further comprises a far-field optics configured to have a focusing action on the laser beam (3) to form the output intensity distribution in an associated focal plane (340).

11. The optical system (1) of claim 9 or 10,
wherein the optical element configured to shape the focus zone in propagation direction is a diffractive optical beam shaping element (31, 73) for imposing at least one phase distribution (43) on the laser beam; and
the further optical element (50), which is configured to shape the focus zone in a further direction transverse to the propagation direction, is configured as an aperture; and
the optical system (1) further comprises a near field optics (33B), which is arranged downstream of the diffractive optical beam shaping element (31) at a beam shaping distance (Dp) and is configured to focus the laser beam (3) into the focus zone (7); wherein
at least one imposed phase distribution (43) is such that a virtual optical image (53) of an elongated focus zone (7) is attributed to the laser beam (3), the virtual optical image being located upstream of the diffractive optical beam shaping element (31), or a real optical image (71) of an elongated focus zone (7) is attributed to the laser beam (3), the real optical image being located after the diffractive optical beam shaping element (73); and
the beam shaping distance (Dp) corresponds to a propagation length of the laser beam (3), within which the at least one phase distribution transforms the transverse input intensity profile (41) into a transverse output intensity profile (51) in the region of the near field optics (33B), and the transverse output intensity profile (51) has, in comparison with the input intensity profile (41), at least one local maximum (49) lying outside of a beam axis (45); and
the aperture (50) delimits the laser beam such that the imaging of the attributed optical images (53) results in the asymmetric transverse intensity distribution with the at least two intensity maxima, which are transverse flattened in a flattening direction, or the transverse sequence of asymmetric intensity maxima, which are flattened in a sequence direction, in the elongated focus zone (7).

12. The optical system (1) of claim 11, wherein the diffractive optical beam shaping element (31) comprises a phase mask, which is configured to impose the at least one beam shaping phase distribution (43) on the laser beam (3) incident on the phase mask, wherein a virtual optical image (53) is attributed to at least one beam shaping phase distribution (43), the virtual optical image being imagable into the elongated focus zone (7) for forming a modification in the material (9) to be processed, and/or
wherein a beam shaping phase distribution (43) is configured to form a ring structure (949A, 949B) in a transverse output intensity distribution (51) downstream of the aperture (50).

13. The optical system (1) of any one of claims 9 to 12,
wherein the optical element configured to shape the focus zone in propagation direction and the further optical element, which is configured to shape the focus zone in a further direction transverse to the propagation direction, is configured as a diffractive optical beam shaping element (31, 73) for imposing a plurality of phase distributions (43) on the laser beam; and
the optical system (1) further comprises:
a near field optics (33B), which is arranged downstream of the diffractive optical beam shaping element (31) at a beam shaping distance (Dp) and is configured to focus the laser beam (3) into the focus zone (7); wherein
at least one of the plurality of imposed phase distributions (43) is such that a virtual optical image (53) of an elongated focus zone (7) is attributed to the laser beam (3), the virtual optical image being located upstream of the diffractive optical beam shaping element (31), or a real optical image (71) of an elongated focus zone (7) is attributed to the laser beam (3), the real optical image being located after the diffractive optical beam shaping element (73); and
the beam shaping distance (Dp) corresponds to a propagation length of the laser beam (3), within which the plurality of phase distributions transforms the transverse input intensity profile (41) into a transverse output intensity profile (51) in the region of the near field optics (33B), and the transverse output intensity profile (51) has, in comparison with the input intensity profile (41), at least one local maximum (49) lying outside of a beam axis (45).

14. The optical system (1) of claim 13, wherein
the phase distributions of the plurality of beam shaping phase distributions (43) are configured such that the images of attributed optical images (53) result in an asymmetric transverse intensity distribution within the material (9) to be processed with the at least two intensity maxima, which are transverse flattened in a flattening direction, or the transverse sequence of asymmetric intensity maxima, which are flattened in a sequence direction; and
the asymmetric transverse intensity distribution comprises a feed intensity distribution in a feed direction and a separating intensity distribution transverse to the feed direction and wherein the feed intensity distribution extends in a transverse direction further than the separating intensity distribution and/or the separating intensity distribution comprises two intensity maxima for separating the material (9) between the intensity maxima.

15. The optical system (1) of claim 13 or 14, wherein the diffractive optical beam shaping element (31) comprises a phase mask, which is configured to impose a plurality of beam shaping phase distributions (43) on the laser beam (3) incident on the phase mask, wherein a virtual optical image (53) is attributed to at least one of the plurality of beam shaping phase distributions (43), the virtual optical image being imagable into at least one elongated focus zone (7) for forming a modification in the material (9) to be processed, und/or
wherein at least one of the plurality of beam shaping phase distributions (43) is configured such that a ring segment structure (972A, 972B) limited to an azimuthal angle range, and/or a local maximum is formed in a transverse output intensity distribution (51), and/or
wherein a virtual optical image (53) is respectively attributed to several phase distributions of the plurality of beam shaping phase distributions, and the optical images (53) are configured for being imaged in respective focus zones (1007A, 1007B) in order to form together the modification a material (9) to be processed; and/or
wherein the asymmetric transverse intensity distribution in the workpiece (9) can be set in its orientation with respect to a preferred direction by rotating the diffractive optical beam shaping element (31, 73).

16. The optical system (1) of any one of claims 9 to 15, further comprising a separate far field optics (33B); and/or
a far field optics phase imposing that is integrated into the phase mask;
wherein the far field optics and/or the far field optics phase imposing is configured to perform a focusing action on the laser beam (3), in order to form the output intensity distribution for at least the one virtual optical image (53) in a respective focal plane (340).

17. A laser processing machine for processing a material (7) with a laser beam (3) by modifying the material (7) in a common focus zone (7), wherein the focus zone (7) is elongated in a propagation direction (5) of the laser beam (3) and the material is to a large extent transparent for the laser beam, comprising
a laser beam source (11);
an optical system (1) according to any one of claims 9 to 16 comprising a diffractive optical beam shaping element (31) and a beam aperture (50); and
a control unit for setting operation parameters in particular for orienting a transverse asymmetric intensity distribution with respect to a preferred direction,
wherein the control unit is configured for setting a rotation angle of the beam aperture with respect to the beam axis of the incident laser beam (3); and/or
wherein the control unit is configured for alignment of the optical system and the workpiece such that a preferred direction of the workpiece processing, which is given by the asymmetric beam profile, can be adapted to the feed direction.

18. A laser processing machine for processing a material (7) with a laser beam (3) by modifying the material (7) in a common focus zone (7), wherein the focus zone (7) is elongated in a propagation direction (5) of the laser beam (3) and the material is to a large extent transparent for the laser beam, comprising
a laser beam source (11);
an optical system (1) according to one of claims 9 to 16 comprising a diffractive optical beam shaping element (31); and
a control unit for setting operation parameters in particular for orienting a transverse asymmetric intensity distribution with respect to a preferred direction,
wherein the control unit is configured for setting a rotation angle of the diffractive optical beam shaping element (31) with respect to the beam axis of the incident laser beam (3); and/or
wherein the control unit is configured for alignment of the optical system and the workpiece such that a preferred direction of the workpiece processing, which is given by the asymmetric beam profile, can be adapted to the feed direction.

19. Use of a focus zone (977), which is transverse asymmetric with respect to a beam axis and elongated in direction of the beam axis, for laser material processing of a material (9), which is to a large extent transparent for the laser beam, by modifying the material (9), wherein the focus zone (7), which is transverse asymmetric and in direction of the beam axis elongated, is rotated during the laser material processing and has at least two intensity maxima, which are transverse flattened in a flattening direction, or a transverse sequence of asymmetric intensity maxima.

20. Use of a focus zone (977), which is transverse asymmetric with respect to the beam axis and elongated in direction of the beam axis, according to claim 19, wherein the elongated focus zone (977) is created by spatially adding and/or superposing multiple inverse or regular quasi-Bessel beam-like beam profiles and/or inverse or regular quasi-Airy beam-like beam profiles, and
wherein optionally the adding and/or superposing results in interferences and/or intensity modulations in the elongated focus zone (977) and/or in an asymmetry of the elongated focus zone (977) and/or wherein the elongated focus zone (977) is created by an optical system according to any one of claims 9 to 16 and optionally by a laser processing machine according to claim 17 or 18.

## Revendications

1. Procédé d'usinage de matière d'un matériau (9) en particulier en grande partie transparent au rayon laser par réalisation, grâce à un rayon laser pulsé (3), de modifications effectuées asymétriquement transversalement au sens de propagation (5) du rayon laser (3), comportant les étapes suivantes :
formage du rayon laser (3) pour constituer une zone focale (7) étirée en longueur dans le sens de propagation dans le matériau (9), la zone focale (7) étant réalisée de manière à présenter au moins deux maxima d'intensité aplatis transversalement dans un sens d'aplatissement ou un alignement transversal de maxima d'intensité asymétriques qui sont aplatis dans un sens d'alignement,
positionnement de la zone focale (7) dans le matériau (9),
réalisation de la modification, et
mouvement relatif du matériau (9) et de la zone focale (7) dans le ou transversalement au sens d'aplatissement ou dans le ou transversalement au sens d'alignement.

2. Procédé selon la revendication 1, dans lequel le sens d'alignement est modifié, en option tourné dans le plan transversal au sens de diffusion du rayon laser pendant le mouvement relatif pour le démarrage d'une course d'usinage au moins partiellement courbée.

3. Procédé selon la revendication 1 ou 2, dans lequel les au moins deux maxima d'intensité aplatis sont réalisés asymétriquement dans le plan transversal au sens de diffusion du rayon laser, et/ou
étant en outre réalisé un alignement axial de maxima d'intensité asymétriques dans le sens de propagation (5) du rayon laser (3) par les au moins deux maxima d'intensité aplatis transversalement dans un sens d'aplatissement ou l'alignement transversal de maxima d'intensité asymétriques, et/ou
la zone focale asymétrique étant formée par l'imposition d'une courbe de phase non symétrique en rotation par un élément de formage de rayons optique diffractif (31) avec une courbe de phase non symétrique en rotation à l'axe du rayon.

4. Procédé selon une des revendications précédentes, dans lequel la zone focale asymétrique est formée par imposition d'une courbe de phase symétrique en rotation au sens de diffusion du rayon sur un profil d'intensité d'entrée transversal (31) du rayon laser (3), la courbe de phase imposée formatrices de rayon (43) étant telle que soit associée au rayon laser (3) une image optique virtuelle ou réelle (53), en option d'une zone focale inversée en courant ou ordinaire de type faisceau de Bessel,
le rayon laser (3) est propagé sur une distance de formage de rayon (Dp) une fois que la courbe de phase imposée formatrices de rayon (43) a transformé le profil d'intensité d'entrée transversal (41) en un profil d'intensité de sortie transversal (51), de sorte que le profil d'intensité de sortie transversal (51) présente, comparativement au profil d'intensité d'entrée (41), au moins un maximum local (49) symétrique en rotation se trouvant en dehors de l'axe de rayon (45),
une plage angulaire du maximum local symétrique en rotation (49) étant bloquée et
la part non bloquée du maximum local symétrique en rotation (49) étant focalisée pour constituer la zone focale asymétrique.

5. Procédé selon la revendication 4, dans lequel la plage angulaire bloquée est adaptée pour le réglage d'une extension longitudinale d'une enveloppante de la zone focale et d'une extension transversale des maxima d'intensités locaux transversalement à l'extension longitudinale, en option en fonction d'une courbure de la course d'avance, et/ou
la situation azimutale de la plage angulaire bloquée est adaptée pour le réglage du sens d'alignement des maxima d'intensités locaux.

6. Procédé selon une des revendications précédentes, dans lequel la zone focale étirée en longueur (7) est constituée par :
imposition d'une pluralité de courbes de phase formatrices de rayon (43) par un profil d'intensité d'entrée transversal (31) du rayon laser (3), au moins une de la pluralité de courbes de phase formatrices de rayon imposées (43) étant telle que soit associée au rayon laser (3) une image optique virtuelle ou réelle (53) d'une zone focale étirée en longueur (7),
propagation du rayon laser (3) sur une distance de formage de rayon (Dp) une fois que la pluralité de courbes de phase formatrices de rayon imposées (43) a transformé le profil d'intensité d'entrée transversal (41) en un profil d'intensité de sortie transversal (51), de sorte que le profil d'intensité de sortie transversal (51) présente, comparativement au profil d'intensité d'entrée (41), au moins un maximum local (49) se trouvant en dehors de l'axe de rayon (45), et focalisation du rayon laser (3) dans la zone focale (7) pour constituer un champ proche en se basant sur le profil d'intensité de sortie (51) avec superposition, complémentation et/ou interférence de la zone focale étirée en longueur (7) associée à l'image optique virtuelle ou réelle (53) avec au moins une autre zone focale (1007A, 1007B) qui revient à au moins une autre courbe de phase de la pluralité de courbes de phase formatrices de rayon imposées (43), une répartition d'intensité transversale asymétrique étant en outre alignée, en option par rotation de l'élément de formage de rayon (31), par rapport à un sens préférentiel pendant l'usinage du matériau.

7. Procédé selon une des revendications précédentes, comprenant en outre
le guidage d'une fente de séparation ou de préparation de séparation du matériau (9), les modifications successives étant déplacées les unes par rapport aux autres le long d'un sens de mouvement relatif entre le sens de propagation du rayon laser (5) et le matériau (9) et chacune des modifications présentant un sens préférentiel dans la formation de la fente, et le sens de mouvement relatif et le sens préférentiel étant adaptés l'un à l'autre, le sens préférentiel étant donné fonction du matériau et/ou en fonction des paramètres du rayon laser soit transversalement, soit longitudinalement par rapport à un axe longitudinal appartenant à l'extension transversale maximale d'un maximum d'intensité de la modification asymétrique.

8. Procédé selon la revendication 7, comportant en outre :
la réalisation de l'alignement de maxima d'intensité dans un sens d'avance, les intensités des maxima d'intensité étant plus bas d'un côté avant exécution de l'alignement que d'un côté arrière de l'alignement, et
l'exécution du mouvement relatif dans le sens d'avance, de sorte que, du côté arrière, il y ait une imposition plus forte du sens préférentiel dans la formation de fente que du côté avant, de sorte qu'une formation de fente pour la modification réalisée précédemment est initiée, mais qu'une formation de fente avancée est inhibée, de sorte qu'une formation de fente pour une modification réalisée précédemment est déjà initiée par la réalisation de la modification.

9. Système optique (1) de formage d'un rayon laser (3) pour l'usinage d'un matériau (9) particulier en grande partie transparent au rayon laser (3) par modification du matériau (9) dans une zone focale étirée en longueur (7) dans un sens de propagation (5) et un autre sens transversalement au sens de propagation, comportant :
un élément optique formant la zone focale dans le sens de propagation (5), l'élément optique formant la zone focale dans le sens de propagation (5) formant la zone focale également dans un autre sens transversalement au sens de propagation ou étant disposé, en aval du rayonnement de l'élément optique formant la zone focale dans le sens de propagation, un autre élément optique formant la zone focale dans l'autre sens transversalement au sens de propagation (50),
de sorte que la zone focale (7) comprend au moins deux maxima d'intensité aplatis transversalement dans un sens d'aplatissement ou un alignement transversal de maxima d'intensité asymétriques qui sont aplatis dans un sens d'alignement.

10. Système optique (1) selon la revendication 9, dans lequel l'élément optique formant la zone focale dans l'autre sens transversalement au sens de propagation est disposé de manière à pouvoir tourner autour de l'axe de rayon (45), et/ou
le système optique (1) présentant en outre une optique de champ lointain qui est conçue pour exercer un effet focalisant sur le rayon laser (3) afin d'établir la répartition d'intensité de sortie dans un plan focal corrélatif (340).

11. Système optique (1) selon la revendication 9 ou 10,
dans lequel l'élément optique formant la zone focale dans le sens de propagation est un élément de formage de rayons optique diffractif (31, 73) destiné à imposer au moins une courbe de phase (43) sur le rayon laser,
et
l'élément optique formant la zone focale dans l'autre sens transversalement au sens de propagation est réalisée sous forme d'un écran anti-rayons (50) et
le système optique (1) présente en outre une optique de champ proche (33B) qui est disposée en aval du rayonnement avec une distance de formage de rayon (Dp) par rapport à l'élément de formage de rayons optique diffractif (31) et qui est conçue pour focaliser le rayon laser (3) dans la zone focale (7),
au moins une courbe de phase imposée (43) étant telle que soit associée au rayon laser (3) une image optique virtuelle (53) se trouvant en amont l'élément de formage de rayons optique diffractif (31) d'une zone focale étirée en longueur (7), ou qu'une image optique réelle (71) se trouvant en aval de l'élément de formage de rayons (73) optique diffractif soit associée à une zone focale étirée en longueur (7), et
la distance de formage de rayon (Dp) correspond à une longueur de propagation du rayon laser (3) dans laquelle l'au moins une courbe de phase formatrice de rayon transforme le profil d'intensité d'entrée transversal (41) en un profil d'intensité de sortie transversal (51) au niveau de l'optique de champ proche (33B), et le profil d'intensité de sortie transversal (51), comparativement au profil d'intensité d'entrée (41), présente au moins un maximum local (49) situé en dehors d'un axe de rayon (45), et
l'écran anti-rayons (50) coupe le rayon laser de manière à ce que les représentations des images optiques corrélatives (53) entraînent la répartition d'intensité transversale asymétrique dans la zone focale étirée en longueur (7) avec les au moins deux maxima d'intensité aplatis transversalement dans un sens d'aplatissement ou l'alignement transversal de maxima d'intensité asymétriques.

12. Système optique (1) selon la revendication 11, dans lequel l'élément de formage de rayons optique diffractif (31) présente un masque de phase qui est conçu pour imposer l'au moins une courbe de phase (43) sur le rayon laser (3) incident sur le masque de phase, étant associée à au moins une courbe de phase formatrice de rayon (43) une image optique virtuelle (53) qui peut être représenté dans la zone focale étirée en longueur (7) pour réaliser une modification dans le matériau à usiner (9), et/ou
au moins une courbe de phase formatrice de rayon (43) est conçue pour constituer, dans une répartition d'intensité de sortie transversale (51), une structure annulaire (949A, 949B) en amont du rayonnement de l'écran anti-rayons (50).

13. Système optique (1) selon une des revendications 9 à 12, dans lequel
l'élément optique formant la zone focale dans le sens de propagation et l'élément optique formant la zone focale dans l'autre sens transversalement au sens de propagation sont réalisés sous forme d'un élément de formage de rayons optique diffractif (31, 73) destiné à imposer une pluralité de courbes de phase (43) sur le rayon laser, et
le système optique (1) comprend en outre
une optique de champ proche (33B) qui est disposée en aval du rayonnement avec une distance de formage de rayon (Dp) par rapport à l'élément de formage de rayons optique diffractif (31) et qui est conçue pour focaliser le rayon laser (3) dans la zone focale (7),
au moins une de la pluralité de courbes de phase (43) étant telle que soit associée au rayon laser (3) une image optique virtuelle (53) se trouvant en amont de l'élément de formage de rayons optique diffractif (31) d'une zone focale étirée en longueur (7) ou une image optique réelle (71) se trouvant en aval de l'élément de formage de rayon optique (73) d'une zone focale étirée en longueur (7), et
la distance de formage de rayon (Dp) correspond à une longueur de propagation du rayon laser (3) dans laquelle la pluralité de courbes de phase formatrices de rayon transforment le profil d'intensité d'entrée transversal (41) en un profil d'intensité de sortie transversal (51) au niveau de l'optique de champ proche (33B), et le profil d'intensité de sortie transversal (51), comparativement au profil d'intensité d'entrée (41), présente au moins un maximum local (49) se trouvant en dehors d'un axe de rayon (45).

14. Système optique (1) selon la revendication 13, dans lequel
les courbes de phase de la pluralité de courbes de phase formatrices de rayon (43) sont constitués de manière à ce que les représentations des images optiques corrélatives (53) entraînent une répartition d'intensité transversale asymétrique dans le matériau à usiner (9) avec les au moins deux maxima d'intensité aplatis transversalement dans un sens d'aplatissement ou l'alignement transversal de maxima d'intensité asymétrique, et
la répartition d'intensité transversale asymétrique présente une répartition d'intensité d'avance dans un sens préférentiel et une répartition d'intensité de séparation transversalement au sens préférentiel et la répartition d'intensité d'avance s'étend plus loin transversalement que la répartition d'intensité de séparation et/ou la répartition d'intensité de séparation présente deux maxima d'intensité pour une séparation du matériau (9) entre les maxima d'intensité.

15. Système optique (1) selon la revendication 13 ou 14, dans lequel l'élément de formage de rayons optique diffractif (31) d'un masque de phase qui est conçu pour imposer une pluralité de courbes de phase formatrices de rayon (43) sur le rayon laser (3) incident sur le masque de phase, étant associée à au moins une de la pluralité de courbes de phase formatrices de rayon (43) une image optique virtuelle (53) qui peut être représentée dans au moins une zone focale (7) pour exécuter une modification dans le matériau à usiner (9), et/ou
au moins une de la pluralité de courbes de phase formatrices de rayon (43) est conçue pour constituer, dans une répartition d'intensité de sortie transversale (51), une structure à segments annulaires (972A, 972B) limitée à une plage angulaire azimutale et/ou un maximum local, et/ou
est associée à plusieurs courbes de phase de la pluralité de courbes de phase formatrices de rayon respectivement une image optique virtuelle (53) et les images optiques (53) sont conçues pour une représentation dans des zones focales corrélatives (1007A, 1007B) pour une exécution commune d'une modification dans le matériau à usiner (9), et/ou
la répartition d'intensité transversale asymétrique étant réglable dans la pièce (9) dans son orientation dans l'optique d'un sens préférentiel par rotation de l'élément de formage de rayons optique diffractif (31, 73) .

16. Système optique (1) selon la revendication 9 à 15, comportant en outre
une optique de champ lointain séparée (33B) et/ou
une imposition de phase optique de champ lointain intégrée sélectivement dans le masque de phase,
l'optique de champ lointain et/ou l'imposition de phase optique de champ lointain étant conçue pour exercer un effet focalisant sur le rayon laser (3) afin d'établir la répartition d'intensité de sortie pour l'au moins une image optique virtuelle (53) ou l'image réelle dans un plan focal corrélatif (340).

17. Installation d'usinage au laser pour l'usinage d'un matériau en grande partie transparent au rayon laser (7) avec un rayon laser (3) par modification du matériau (7) dans une zone focale commune (7) étirée en longueur dans le sens de propagation (5) du rayon laser (3), comportant
une source de rayon laser (11),
un élément de formage de rayons optique diffractif (31) et un système optique présentant un écran anti-rayons (50) selon une des revendications 9 à 16, et
une commande pour le réglage de paramètres de fonctionnement, en particulier pour l'orientation d'une répartition d'intensité asymétrique transversalement par rapport à un sens préférentiel, la commande étant conçue pour le réglage d'un angle de rotation de l'écran anti-rayons (50) par rapport à l'axe de rayon du rayon laser incident (3), et/ou
la commande étant conçue pour orienter le système optique et la pièce de manière à ce qu'un sens préférentiel conditionné par le profil de rayon asymétrique d'usinage de la pièce puisse être adapté au sens d'avance.

18. Installation d'usinage au laser pour l'usinage d'un matériau en grande partie transparent au rayon laser (7) avec un rayon laser (3) par modification du matériau (7) dans une zone focale commune (7) étirée en longueur dans le sens de propagation (5) du rayon laser (3), comportant
une source de rayon laser (11),
un système optique présentant un élément de formage de rayons optique diffractif (31) selon une des revendications 9 à 16, et
une commande pour le réglage de paramètres de fonctionnement, en particulier pour l'orientation d'une répartition d'intensité asymétrique transversalement par rapport à un sens préférentiel, la commande étant conçue pour le réglage d'un angle de rotation de l'élément de formage de rayons optique diffractif (31) par rapport à l'axe de rayon du rayon laser incident (3), et/ou
la commande étant conçue pour orienter le système optique et la pièce de manière à ce qu'un sens préférentiel conditionné par le profil de rayon asymétrique de l'usinage de la pièce puisse être adapté au sens d'avance.

19. Utilisation d'une zone focale (977) étirée en longueur par rapport à l'axe de rayon asymétriquement transversalement et en direction de l'axe de rayon pour l'usinage de matériau au laser d'un matériau (9) en grande partie transparent au rayon laser par modification du matériau (9) dans laquelle la zone focale (7) étirée en longueur transversalement asymétriquement et en direction de l'axe de rayon est tournée pendant l'usinage du matériau au laser est présente au moins deux maxima d'intensité aplatis transversalement dans un sens d'aplatissement ou un alignement transversal de maxima d'intensité asymétriques.

20. Utilisation d'une zone focale (977) étirée en longueur par rapport à l'axe de rayon asymétriquement transversalement et en direction de l'axe de rayon selon la revendication 19, dans laquelle la zone focale étirée en longueur (977) est créée par complémentation et/ou superposition spatiale de plusieurs profils de rayonnement quasiment de type rayon de Bessel inversés ou ordinaires et/ou de profils de rayonnement quasiment de type rayon d'Airy inversés ou ordinaires, et
en option, la complémentation et/ou la superposition entraîne des interférences et/ou modulation d'intensité dans la zone focale étirée en longueur (977) et/ou une asymétrie de la zone focale étirée en longueur (977) et/ou la zone focale étirée en longueur (977) est créée par un système optique selon une des revendications 9 début à 16 et en option par une installation d'usinage au laser selon la revendication 17 ou 18.
